# EUROPEAN PATENT SPECIFICATION

(11) **EP 2 816 462 B1**
(45) Date of publication and mention of the grant of the patent: **19.12.2018**
(21) Application number: 13749258.3
(22) Date of filing: 14.02.2013
(51) Int. Cl.: G06F 3/0488, F24C 7/02, F24C 15/00, G06F 3/041

(54) **ELECTRONIC DEVICE**
ELEKTRONISCHE VORRICHTUNG
DISPOSITIF ÉLECTRONIQUE

(30) Priority: 14.02.2012 JP 2012029236; 26.09.2012 JP 2012211825; 03.10.2012 JP 2012220897; 21.12.2012 JP 2012279006; 28.12.2012 JP 2012287103
(43) Date of publication of application: 24.12.2014
(73) Proprietor: Panasonic Corporation, Kadoma-shi, Osaka 571-8501 (JP)
(72) Inventor: IMAI, Hirohisa, Osaka 540-6207 (JP); NAKANO, Ikue, Osaka 540-6207 (JP); DOU, Jianlan, Osaka 540-6207 (JP)
(74) Representative: Schwabe - Sandmair - Marx
(86) International application number: PCT/JP2013/000811
(87) International publication number: WO 2013/121785

(56) References cited:
- EP-A1- 2 363 785
- WO-A1-2011/084157
- JP-A- 2006 236 143
- JP-A- 2011 237 125
- US-A1- 2011 175 831
- US-A1- 2012 027 904
- ARAS BALALI MOGHADDAM ET AL: "Integrating touch and near touch interactions for information visualizations", PROCEEDINGS OF THE 2011 EXTENDED ABSTRACTS ON HUMAN FACTORS IN COMPUTING SYSTEMS, 7 May 2011 (2011-05-07), page 2347, XP055159900, New York, New York, USA DOI: 10.1145/1979742.1979934 ISBN: 978-1-45-030268-5

## Description

### Technical Field

The present invention relates to an electronic device including a display portion configured to display a display screen image that accepts input from users.

### Background Art

In recent years, electronic devices are respectively equipped with input devices that respectively use various input methods. Especially, the electronic devices respectively equipped with so-called touch panels that are the input devices each configured by combining a display device, such as a color liquid crystal panel, and a position input device have been increasing.

Since users can input information to the touch panels by intuitive operations, the touch panels have been adopted as the input devices of products, such as automatic ticket vending machines, car navigation systems, and smart phones. In addition, the touch panels have also been adopted as the input devices of more commonly used electronic devices, such as heat cooking devices.

One typical example of the heat cooking devices is a microwave oven. The microwave oven can cook with heat by using various heating methods, such as microwave heating, oven heating, grilling, and steaming. The microwave oven can variously cook with heat by selecting an appropriate method from the plurality of heating methods, selecting and using the plurality of heating methods in order, or using the plurality of heating methods at the same time.

In addition, a microwave oven has been developed, which includes an automatic cooking menu in which heat cooking methods selected for respective food items and the heating amount and heating time necessary when using the selected heat cooking method are preset, the microwave oven being configured to be able to cook only by the user selecting a desired food item from the automatic cooking menu. Especially, the recent microwave oven includes the automatic cooking menu containing a wide variety of food items. Then, a heat cooking device has been proposed, which is configured to display the automatic cooking menu and allows the users to easily select a desired food item from the displayed automatic cooking menu (PTL 1, for example). The heat cooking device (microwave oven) disclosed in PTL 1 includes a color liquid crystal display portion (touch panel) configured by integrating a color liquid crystal panel and a position input device and is configured to be able to cause the color liquid crystal display portion to display the automatic cooking menu and accept input from the users.

According to the heat cooking device (microwave oven) configured as above, the users can touch the touch panel to select an image of the desired food item from images of the food items displayed on the color liquid crystal panel. The touch panel detects an electrostatic capacitance that changes by a finger of the user contacting the color liquid crystal panel.

### Citation List

### Patent Literature

PTL 1: Japanese Laid-Open Patent Application Publication No. 2011-237125
PTL 2: Japanese Laid-Open Patent Application Publication No. 2007-100995
   WO 2011/084157 A1

### Non Patent Literature

ARAS BALALI MOGHADDAM ET AL: "Integrating touch and near touch interactions for information visualisations", PROCEEDINGS OF THE 2011 EXTENDED ABSTRACTS ON HUMAN FACTORS IN COMPUTING SYSTEMS, 1st January 2011 (2011-01-01), page 2347, XP055159900

### Summary of Invention

### Technical Problem

However, the heat cooking device disclosed in PTL 1 has a problem in which the operability on the display screen image displayed on the display portion cannot be improved. The present invention was made to solve the above problem, and an object of the present invention is to provide an electronic device configured such that the operability on the display screen image displayed on the display portion has been improved.

### Solution to Problem

An electronic device according to the present invention, solving the above problem, is defined in the appended claims.

### Advantageous Effects of Invention

The electronic device according to the present invention is configured as explained above and has an effect of being able to improve the operability on the display screen image displayed on the display portion.

### Brief Description of Drawings

Fig. 1 is a perspective view showing the appearance of a microwave oven according to an embodiment of the present invention.
Fig. 2 is a cross-sectional view showing the schematic configuration of a liquid crystal touch panel included in the microwave oven shown in Fig. 1.
Fig. 3 is a diagram showing the schematic configuration of an inside of the microwave oven shown in Fig. 1.
Fig. 4 is a schematic diagram showing the configuration of a position input device included in the liquid crystal touch panel of the microwave oven shown in Fig. 1.
Fig. 5 is a graph showing a relation between a distance between the position input device and a finger of a user shown in Fig. 4 and a change amount of an electrostatic capacitance.
Fig. 6 is a block diagram showing one example of the configuration of major portions of the microwave oven according to Example 1.
Fig. 7 is a diagram showing one example of a selection screen image of an automatic cooking menu displayed on the liquid crystal touch panel according to Example 1.
Fig. 8 is a diagram showing one example of the selection screen image of the automatic cooking menu displayed on the liquid crystal touch panel according to Example 1.
Fig. 9 is a diagram showing one example of the selection screen image of the automatic cooking menu displayed on the liquid crystal touch panel according to Example 1.
Fig. 10 is a flow chart showing one example of an input accepting operation of the liquid crystal touch panel included in the microwave oven according to Example 1.
Fig. 11 is a block diagram showing one example of the configuration of major portions of the microwave oven according to Example 2.
Fig. 12 is a diagram showing one example of the selection screen image of the automatic cooking menu displayed on the liquid crystal touch panel according to Example 2.
Fig. 13 is a diagram showing one example of the selection screen image of the automatic cooking menu displayed on the liquid crystal touch panel according to Example 2.
Fig. 14 is a diagram showing one example of a display screen image (after-selection screen image) displayed after the user selects "ratatouille" from an automatic menu button group of the automatic cooking menu shown in Fig. 13.
Fig. 15 is a flow chart showing one example of the input accepting operation of the liquid crystal touch panel included in the microwave oven according to Example 2.
Fig. 16 is a block diagram showing one example of the configuration of major portions of the microwave oven according to Example 3.
Fig. 17 is a diagram showing one example of a basic menu screen image displayed on the liquid crystal touch panel according to Example 3.
Fig. 18 is a diagram showing one example of the selection screen image of the automatic cooking menu displayed on the liquid crystal touch panel according to Example 3.
Fig. 19 is a diagram showing one example of the selection screen image of the automatic cooking menu displayed on the liquid crystal touch panel according to Example 3.
Fig. 20 is a diagram showing one example of a detail setting screen image of the automatic cooking menu displayed on the liquid crystal touch panel according to Example 3.
Fig. 21 is a flow chart showing one example of the input accepting operation of the liquid crystal touch panel included in the microwave oven according to Example 3.
Fig. 22 is a diagram showing one example of the selection screen image of the automatic cooking menu displayed on the liquid crystal touch panel according to Modification Example 1 of Example 3.
Fig. 23 is a diagram showing one example of the detail setting screen image of the automatic cooking menu displayed on the liquid crystal touch panel according to Modification Example 1 of Example 3.
Fig. 24 is a block diagram showing one example of the configuration of major portions of the microwave oven according to Example 4.
Fig. 25 is a diagram showing one example of a category selection screen image of the automatic cooking menu displayed on the liquid crystal touch panel according to Example 4.
Fig. 26 is a diagram showing one example of the category selection screen image of the automatic cooking menu displayed on the liquid crystal touch panel according to Example 4.
Fig. 27 is a diagram showing one example of a cooking menu selection screen image in a category called a grilled food, the cooking menu selection screen image being displayed on the liquid crystal touch panel according to Example 4,
Fig. 28 is a diagram showing one example of a detail setting screen image of a food item, the detail setting screen image being displayed on a liquid crystal touch panel 10 according to Example 4.
Fig. 29 is a flow chart showing one example of the input accepting operation of the liquid crystal touch panel included in the microwave oven according to Example 4.
Fig. 30 is a diagram showing the schematic configuration of the inside of the microwave oven according to Example 5.
Fig. 31 is a block diagram showing one example of the configuration of major portions of the microwave oven according to Example 5.
Fig. 32 is a diagram showing one example of a setting screen image of a heating power and a heating time, the setting screen image being displayed on the liquid crystal touch panel according to Example 5.
Fig. 33 is a diagram showing one example of the setting screen image of the heating power and the heating time for additional heating, the setting screen image being displayed on the liquid crystal touch panel according to Example 5.
Fig. 34 is a diagram showing the schematic configuration of the inside of the microwave oven according to Modification Example 1 of Example 5.
Fig. 35 is a top view of a heat-proof dish attached to the microwave oven according to Modification Example 1 of Example 5.
Fig. 36 is a cross-sectional view taken along line A-A' of the heat-proof dish shown in Fig. 35.
Fig. 37 is a diagram showing one example of a heating time setting screen image displayed on the liquid crystal touch panel according to Modification Example 1 of Example 5.
Fig. 38 is a diagram showing one example of the setting screen image of an upper surface heating time, the setting screen image being displayed on the liquid crystal touch panel according to Modification Example 1 of Example 5.
Fig. 39 is a perspective view showing the appearance of the microwave oven according to Example 6.
Fig. 40 is a diagram showing the schematic configuration of the inside of the microwave oven shown in Fig. 39.
Fig. 41 is a block diagram showing one example of the configuration of major portions of the microwave oven according to Example 6.
Fig. 42 is a diagram showing one example of the basic menu screen image displayed on the liquid crystal touch panel according to Example 6.
Fig. 43 is a diagram showing one example of the selection screen image of the automatic cooking menu displayed on the liquid crystal touch panel according to Example 6.
Fig. 44 is a diagram showing one example of a selection confirmation screen image displayed on the liquid crystal touch panel according to Example 6.
Fig. 45 is a diagram showing one example of a cooking method screen image displayed on the liquid crystal touch panel according to Example 6.
Fig. 46 is a flow chart showing one example of the input accepting operation of the liquid crystal touch panel included in the microwave oven according to Example 6.
Fig. 47 is a block diagram showing one example of the configuration of major portions of the microwave oven according to Example 6.
Fig. 48 is a diagram showing one example of the cooking method screen image displayed on the liquid crystal touch panel according to Modification Example 1 of Example 6.
Fig. 49 is a flow chart showing one example of the input accepting operation of the liquid crystal touch panel included in the microwave oven according to Modification Example 1 of Example 6.
Fig. 50 is a perspective view of the appearance of the microwave oven according to Example 7.
Fig. 51 is a block diagram showing one example of the configuration of major portions of the microwave oven according to Example 7.
Fig. 52 is a flow chart showing one example of the input accepting operation of the liquid crystal touch panel included in a microwave oven 1 according to Example 7.
Fig. 53 is a block diagram showing one example of the configuration of major portions of the microwave oven according to Modification Example 1 of Example 7.
Fig. 54 is a flow chart showing one example of the input accepting operation of the liquid crystal touch panel included in the microwave oven according to Modification Example 1 of Example 7.
Fig. 55 is a diagram showing one example of button table information stored in a standard button image storage portion included in the microwave oven according to Example 1.
Fig. 56 is a diagram showing one example of screen image table information stored in the screen image storage portion included in the microwave oven according to Example 2.

### Description of Embodiments

### How One Aspect of Present Invention was Made

The present inventors have diligently studied conventional heat cooking devices described in, for example, PTL 1 and have found the following problems.

A touch panel may be configured to accept input not only by detection of the contact of a hand of a user (contact detection) but also by detection of the proximity of the hand (proximity detection).

Examples of instructions from users accepted by the touch panel include: an instruction that requests the display of information, such as the above-described automatic cooking menu; and an instruction that executes a major function, such as heating, of the heat cooking device. In the case of the former instruction, even if this instruction is mistakenly input, it is possible to retrieve the former state. However, in the case of the latter instruction, it is impossible to retrieve the former state. To be specific, even if those instructions are input from the same user, the degrees of importance of results produced by those instructions are significantly different from each other.

On the other hand, according to the configuration that accepts the input by the proximity detection, even in a case where the user has unintentionally gotten close to, for example, a button displayed on a color liquid crystal panel, the color liquid crystal panel accepts this action as the input in some cases. To be specific, the configuration that accepts the input by the proximity detection is more likely to mistakenly accept the input than the configuration that accepts the input by the contact detection.

Therefore, the present inventors have found that whether to accept the input by the proximity detection needs to be determined in consideration of the degree of importance of the result of the execution by accepting the input as described above. Thus, the present invention was made.

The present inventors have further studied the configuration of the conventional heat cooking device and found the following problems.

As in the case of the touch panel included in the above-described conventional heat cooking device, the method of detecting the electrostatic capacitance that changes when the finger of the user has contacted the color liquid crystal panel is advantageous in that: unlike a physical button, it is unnecessary to strongly push the color liquid crystal panel; and the color liquid crystal panel can detect even slight contact. Therefore, regarding the microwave oven including the touch panel, a large number of operation methods utilizing the advantages of the touch panel have been proposed.

According to the above-described conventional configuration, the touch panel can be operated by the detection of the change in the electrostatic capacitance at the time of the contact of the finger with the touch panel. Therefore, according to the conventional configuration, the touch panel cannot be operated in a case where the finger does not directly contact the touch panel, for example, in a case where the user wears thick gloves. Here, how the microwave oven is used is considered. Since the microwave oven is used to heat food, the food and dishes in the microwave oven are hot after the heating of the food. Therefore, the user may wear the thick gloves called mittens to handle the heated food or dishes. Here, one problem is that the user cannot operate the touch panel by the hands with the mittens.

Here, an object of the present invention is to propose an electronic device including a touch panel whose operability is improved such that: the touch panel is configured to be able to accept inputs by hands with thick gloves, such as mittens; and input timings are appropriately defined.

Typically, the hands of the user when using the heat cooking device are wet or dirty in many cases. This is because the hands of the user directly touch the food to get dirty, or the user washes the food or their hands with water. According to the conventional configuration, the user contacts the color liquid crystal panel of the touch panel with the hands to perform various selections, settings, determinations, and the like, so that the color liquid crystal panel gets wet or dirty by the operation of the wet or dirty hands.

In a case where the color liquid crystal panel gets dirty or wet as above, the visibility of the button displayed on the color liquid crystal panel deteriorates, and the detection accuracy of the contact of the hands with the color liquid crystal panel deteriorates. Therefore, the user thinks that it is not preferable that the color liquid crystal panel of the touch panel gets wet or dirty, so that the user performs a burdensome operation before operating the touch panel, for example, the user wipes the hands with a towel before operating the touch panel.

Here, the present invention proposes an electronic device including a touch panel whose operability is improved such that: to reduce the number of times the user contacts the color liquid crystal panel of the touch panel as many as possible, the color liquid crystal panel of the touch panel is configured to be operable without the user contacting the color liquid crystal panel. Especially, an object of the present invention is to provide an electronic device whose operability is improved such that a timing at which the color liquid crystal panel can be operated without the user contacting the color liquid crystal panel is appropriately defined depending on the state of the electronic device.

In addition to the viewpoint of the improvement of the operability on the display screen image as described above, the present inventors have diligently studied defects caused since a surface (color liquid crystal panel surface) of the touch panel that is contacted by the hands of the user is flat and has no depressions or projections. To be specific, the present inventors have studied a case where since the color liquid crystal panel surface is flat, the utilization of the touch panel is difficult for the visually impaired users who depend on the sense of touch.

First, how the information (automatic cooking menu) is displayed on the touch panel included in the above-described conventional heat cooking device will be explained.

According to the touch panel included in the heat cooking device, buttons each showing an icon and characters are arranged on a color liquid crystal display unit. The user can press the button to select, for example, a desired food item from the automatic cooking menu. For example, when selecting the food item, the touch panel displays a picture of the finished food item to allow the user to confirm the picture and determine the selection. Thus, intuitive and easy operations are realized.

For example, when selecting the food item from the automatic cooking menu, the heat cooking device having the above configuration may perform display as below. To be specific, the color liquid crystal display unit displays a list of category buttons respectively showing categories of food items. When the user contacts one of the category buttons in the list to select the category, the screen image is changed into a screen image that displays a list of buttons respectively showing the food items belonging to the selected category. The buttons respectively showing the food items respectively display the names of the food items. The user can touch any one of the buttons to select and determine the food item. Then, the name, picture, calories, and the like of the selected food item are displayed on the entire color liquid crystal panel. The cooking of the selected food item is started by pushing a start key provided at a portion of the heat cooking device other than the touch panel.

However, the color liquid crystal display unit of the above-described touch panel does not include physical buttons (depressions or projections). Therefore, one problem is that since, for example, the visually impaired users who depend on the sense of touch cannot find the displayed positions of the buttons on the touch panel, it is difficult for those users to use the color liquid crystal display unit. In a case where a display area of the color liquid crystal display unit is small, it is difficult to recognize the characters showing the contents of the displayed buttons, and it is necessary to increase the sizes of the characters. Therefore, one problem is that the color liquid crystal display unit cannot display a large number of buttons on the same screen image at the same time.

To solve the above problems, a device has been proposed, which is configured such that the meanings of the buttons are distinguishable from one another since the device emits a different sound when the user contacts a different displayed position of the button on the color liquid crystal display unit (see PTL 2, for example). According to this device, even in a case where the visually impaired user gropingly contacts the position of the button, he or she can recognize what the button displayed at the contacted displayed position is. Even in a case where the characters showing the contents of the buttons are small, and it is difficult to recognize those characters since a large number of characters are displayed in the same screen image of the color liquid crystal display unit at the same time, the user can recognize what the button is only by contacting the displayed position of the button. Thus, the usability improves.

According to the configuration described in PTL 2, the users can recognize the functions of the buttons by the differences of the sounds emitted when the users contact the displayed positions of the buttons. This input to the buttons is also performed by contacting the displayed positions of the buttons. Therefore, the user contacts the position of the button, that is, the user performs the same operation both when the user searches the function of the button and when the user instructs the execution of the function corresponding to the button. On this account, an operation method of searching the function and an operation method of instructing the execution of the function need to be distinguished from each other.

Here, the configuration described in PTL 2 has proposed two methods in order to distinguish between the input for searching the function of the button and the input for instructing the execution of the function corresponding to the button. A first method is designed such that: when the hand of the user contacts the displayed position of the button, the device informs the user of the function of the button by the sound; and when the hand keeps on contacting the position for a predetermined period of time or longer, the device accepts the input. A second method is designed such that: when the hand of the user contacts the displayed position of the button, the device informs the user of the function of the button by the sound; and when the hand is once separated from the button so as to become a noncontact state and again contacts the button within a predetermined period of time, the device accepts the input.

However, problems of these methods proposed in PTL 2 are that: the operations of the methods are burdensome; and mistakes tend to be caused in the methods. The operation of accepting the input by the contact with the displayed position of the button is advantageous since it is easier than the operation of pushing a physical button. However, as described above, the input is not accepted unless the user contacts the displayed position of the button for a predetermined period of time or longer or unless the user contacts the displayed position of the button, once separates his/her hand from the button, and again contacts the button. Therefore, the advantage regarding the easy operation is lost, and the operations are burdensome. Further, the input is not accepted by the simple contact with the displayed position of the button. Therefore, a misoperation tends to occur, in which the user thought that he or she had performed the input, but the input had not been accepted.

Here, an object of the present invention is to propose an electronic device configured to: be easily operated even gropingly by weak-sighted users; be easily operated even in a case where the sizes of the buttons are small since a large number of buttons are displayed at the same time; and be able to accept input without burdensome operations or misoperations.

Furthermore, in addition to the viewpoint of the operability of the touch panel as described above, the present inventors have diligently studied from the viewpoint of efficiently displaying necessary information on a limited display area of the touch panel. First, as one example, the automatic cooking menu displayed on the touch panel will be explained.

For example, the automatic cooking menu includes well-known food items, such as "yellowtail teriyaki" and "fried chicken" and also includes many little-known food items, such as "paella", "nasi goreng", "ratatouille", "vongole rosso", and "bangbang chicken", which are difficult for the users to recognize even when the user sees the food items.

Therefore, when selecting the food item from the automatic cooking menu, the user cannot recognize the food item only by its name and may mistakenly select an unwanted food item. In such a case, in a state where the food item is being selected and determined from the cooking menu, the user needs to perform a burdensome operation, that is, for example, the user needs to push a back key to return to a selection screen image of the food items and again select the food item.

To prevent the occurrence of the burdensome operation, that is, to prevent the user from selecting the food item again, for example, a picture of the finished food item may be added to the button of each food item on the selection screen image. By adding the picture to the button of each food item, the selection of the food item by the user is facilitated. However, in a case where the picture is added to the button of each food item, the button needs to be increased in size to display the picture. Therefore, it is necessary to reduce the number of buttons displayed in the same screen image of the color liquid crystal display unit at the same time.

In contrast, to efficiently select the food item from the automatic cooking menu, it is preferable that the perspicuity be improved in such a manner that the liquid crystal panel displays as many buttons as possible at the same time. However, in a case where a large number of buttons are displayed on one liquid crystal panel, each button becomes small in size, so that the visibility of the button deteriorates. Especially, in a case where the picture is added to the button of each food item, the button becomes extremely small in size, so that the visibility of the button further deteriorates.

Here, an object of the present invention is to propose an electronic device configured such that: the perspicuity thereof is improved by displaying a large number of menu buttons on a color liquid crystal display unit of a touch panel thereof; and easy-to-understand display is realized to prevent users from mistakenly making selections and determinations.

The above-described automatic cooking menu contains a large number of food items. Only by selecting a desired food item from the automatic cooking menu, a heat source (heat cooking method) most appropriate for cooking the food of the food item is selected, so that ingredients of the food item are heated by the most appropriate heating amount and heating time. Therefore, it is possible to prevent the user from hesitating or making mistakes when, for example, setting the heating amount and the heating time, so that the cooking can be performed efficiently. However, an operation of selecting a desired food item from a large number of food items in the automatic cooking menu is burdensome.

It is difficult to display all the food items on the color liquid crystal display unit. Therefore, a method of classifying the food items into predetermined categories as described above and allowing the user to select the desired food item from the category may be used. According to this method, first, the user selects a desired category from a plurality of categories displayed on the color liquid crystal display unit. When the category is selected, the display screen image on the liquid crystal panel changes, and the food items belonging to the selected category are displayed. Then, the user selects the desired food item from the displayed food items. As above, a display structure of the automatic cooking menu is configured hierarchically, and a typical method of selecting the desired food item is a method of allowing the user to select, for example, the classified category in each hierarchy to reach and select the desired food item. For example, PTL 1 adopts a method of: first selecting a "steam/boil" category; and then selecting "steamed egg custard" from a "steam/boil" item group.

According to the method described in PTL 1, if the user does not know the category in which the desired food item is classified, it is difficult for the user to reach the desired food item. Further, the automatic cooking menu includes the food items whose categories are difficult for the user to understand. For example, "onsen tamago" is actually heated by hot water, so that it is difficult for the user to understand which category in the microwave oven "onsen tamago" is classified in.

If the user has selected the wrong category in the case of selecting the difficult-to-understand food item, the user cannot reach the desired food item, so that the user needs to perform a back operation and again select a different category. If it is quite difficult for the user to reach the desired food item, the user has to repeat the back operation many times, which is burdensome.

Here, an object of the present invention to provide an electronic device whose usability is improved such that the user can quickly, easily reach the desired food item without performing the back operation.

To achieve the above objects, the following aspects of the present invention will be provided in detail.

An electronic device according to a first aspect of the present invention includes: a display portion configured to display display screen images each including operation buttons, each of which accepts input from a user; a proximity detector portion configured to detect, as proximity input from the user, proximity of the user to the operation button included in the display screen image; a function executing portion configured to execute functions in accordance with the input to the operation buttons, the functions being respectively associated with the operation buttons; a storage device configured to store proximity input enable/disable information pieces such that each of the proximity input enable/disable information pieces is associated with at least a part of the display screen image, the proximity input enable/disable information pieces each indicating whether to permit the proximity detector portion to detect the proximity input; and a permission determining portion configured to determine based on the proximity input enable/disable information piece whether to permit the proximity detector portion to detect the proximity input.

According to the above configuration, the electronic device includes the permission determining portion, and the storage device stores the proximity input enable/disable information pieces. Therefore, it is possible to determine whether to permit the proximity detector portion to detect the proximity input to the operation button. On this account, whether to detect the proximity to the operation button as the input can be set for each display screen image or each part constituting the display screen image.

Therefore, in consideration of the content of the function executed by the function executing portion in accordance with the input from the user and the degree of importance of the function, a case where the proximity input can be detected and a case where it cannot be detected can be set appropriately. On this account, the operability of the input on the display portion can be further improved in consideration of the advantages and disadvantages of the proximity input.

Thus, the electronic device according to the present invention has an effect of being able to improve the operability on the display screen image displayed on the display portion.

The part constituting the display screen image may be an image of the operation button itself displayed in the display screen image, a frame image constituting the display screen image, or the like.

The electronic device according to a second aspect of the present invention may be configured such that in the first aspect, the storage device stores the proximity input enable/disable information pieces such that the proximity input enable/disable information pieces are respectively associated with the operation buttons, each of which corresponds to at least a part of the display screen image.

According to the above configuration, the proximity input enable/disable information pieces are stored in the storage device so as to be respectively associated with the operation buttons. Therefore, the permission determining portion can refer to the proximity input enable/disable information piece to determine whether to permit the proximity detector portion to detect the proximity input to the operation button. On this account, whether to detect the proximity to the operation button as the input can be set for each operation button.

Here, the functions respectively associated with the operation buttons include a function that cannot be changed once it has been executed and a function that allows the user to retrieve the former state even if it has been executed. To be specific, the degree of importance of the result of the execution of the function differs depending on the operation buttons.

Here, the electronic device according to the present invention includes the determining portion. Therefore, for example, only the operation button corresponding to the latter function is set such that: the detection of the proximity input is permitted; and this function is executed when the proximity input is detected. As above, the operation button whose function is executed by the proximity of the user and the operation button whose function is not executed by the proximity of the user can be distinctively set depending on the degree of importance of the result of the execution of the function.

The electronic device according to a third aspect of the present invention may be configured such that in the first aspect, the storage device stores the proximity input enable/disable information pieces such that the proximity input enable/disable information pieces are respectively associated with the display screen images, each of which corresponds to at least a part of the display screen image.

According to the above configuration, the proximity input enable/disable information pieces are stored in the storage device so as to be respectively associated with the display screen images. Therefore, the permission determining portion can refer to the proximity input enable/disable information piece to determine whether to permit the proximity detector portion to detect the proximity input to the current display screen image. On this account, whether to detect the proximity to the operation button as the input can be set for each display screen image displaying the operation buttons.

Here, the functions respectively corresponding to the operation buttons included in a certain display screen image include a function that cannot be changed once it has been executed and a function that allows the user to retrieve the former state even if it has been executed. To be specific, the degree of importance of the result of the execution of the function differs depending on the display screen images.

Here, the electronic device according to the present invention includes the determining portion. Therefore, the display screen image in which the functions corresponding to the operation buttons are executed by the proximity detection and the display screen image in which the functions corresponding to the operation buttons are not executed by the proximity detection can be distinctively set depending on the degree of importance of the result of the execution of the function.

The electronic device according to a fourth aspect of the present invention may be configured such that the electronic device according to any one of the first to third aspects further includes a state determining portion configured to detect a state of the electronic device to determine whether or not the state of the electronic device is a predetermined state, wherein in a case where the state determining portion determines that the state of the electronic device is the predetermined state, the permission determining portion inhibits the detection of the proximity input by the proximity detector portion regardless of the proximity input enable/disable information piece.

Here, examples of the state of the electronic device include a state regarding a mechanism, such as a state where a door or a lid is open, and a state regarding an operation, such as a state where the electronic device is operating. In addition, examples of the predetermined state include the state of the electronic device that becomes a problem in a case where the function corresponding to the operation button at which the proximity input has been detected is executed in the electronic device.

According to the above configuration, the electronic device includes the state determining portion. Therefore, the state determining portion can determine whether or not the state of the electronic device is the predetermined state. In a case where the state determining portion determines that the state of the electronic device is the predetermined state, the permission determining portion can operate such that the function corresponding to the operation button is not executed even if the proximity input is detected. Therefore, it is possible to prevent the function corresponding to the operation button from being executed when the electronic device is in the predetermined state.

The electronic device according to a fifth aspect of the present invention may be configured such that the electronic device according to any one of the first to third aspects further include: a contact detector portion configured to detect, as contact input from the user, contact of the user with the operation button that accepts the proximity input; and an informing portion configured to inform the user of function information indicating the function executed by the function executing portion in accordance with the contact input to the operation button, wherein in a case where the proximity detector portion detects the proximity input to the operation button, the informing portion informs the user of the function information corresponding to the operation button.

According to the above configuration, the electronic device includes the informing portion. Therefore, in a case where the proximity detector portion detects the proximity input to the operation button, the informing portion can inform the user of the function information. Here, examples of the informing method include sound output, image display, and character display. Further, in a case where the electronic device includes, for example, a printing portion, examples of the informing method may include printing output of characters or images.

Especially in a case where the informing portion informs the user of the function information by the sound, the electronic device can support operation instructions of the visually impaired users. In a case where the informing portion displays images or characters as the function information, it is possible to display, for example, the contents and explanations of the functions which cannot be shown by the operation buttons.

The electronic device according to a sixth aspect of the present invention may be configured such that in the fifth aspect, the informing portion enlarges an image of the function information on the display portion.

According to the above configuration, the informing portion can enlarge an image of the function information on the display portion. Therefore, the visibility of the function information to be informed can be improved.

The electronic device according to a seventh aspect of the present invention may be configured such that in any one of the first to fourth aspects, in a case where the proximity input to the operation button detected by the proximity detector portion is permitted based on the proximity input enable/disable information piece, the permission determining portion causes the function executing portion to enlarge an image of the operation button on the display portion.

The electronic device according to an eighth aspect of the present invention may be configured such that in any one of the first to seventh aspects, each of the operation buttons is constituted by an operation image displayed in the display screen image on the display portion and a proximity detector element provided so as to correspond to the operation image, the electronic device further includes a physical push button configured to be pushed by the user to accept the input, and the push button is provided at such a position that when the user gets close to or contacts the push button, the proximity detector portion does not detect the proximity input.

According to the above configuration, the electronic device includes the push button. Therefore, it is possible to improve the convenience for the visually impaired users who cannot recognize the buttons displayed in the display screen image. The push button is provided at such a position that a first proximity detector portion and a second proximity detector portion do not mistakenly detect the proximity of the user. Therefore, the operation corresponding to the operation button or the like can be prevented from being mistakenly executed when operating the push button.

To solve the above problems, a heat cooking device according to a ninth aspect of the present invention may include the electronic device according to any one of the first to eighth aspects.

To solve the above problems, a method of operating an electronic device according to a tenth aspect of the present invention includes: a displaying step of displaying a display screen image including operation buttons, each of which accepts input from a user; a proximity detection step of detecting, as proximity input from the user, proximity of the user to the operation button included in the display screen image; and a determining step of determining whether to permit detection of the proximity input in the proximity detection step.

### Embodiment

Hereinafter, an embodiment of the present invention will be explained in reference to the drawings, and a heat cooking device will be explained as one example of an electronic device. In the following explanations and drawings, the same reference signs are used for the same or corresponding components, and a repetition of the same explanation is avoided.

### Configuration of Heat Cooking Device

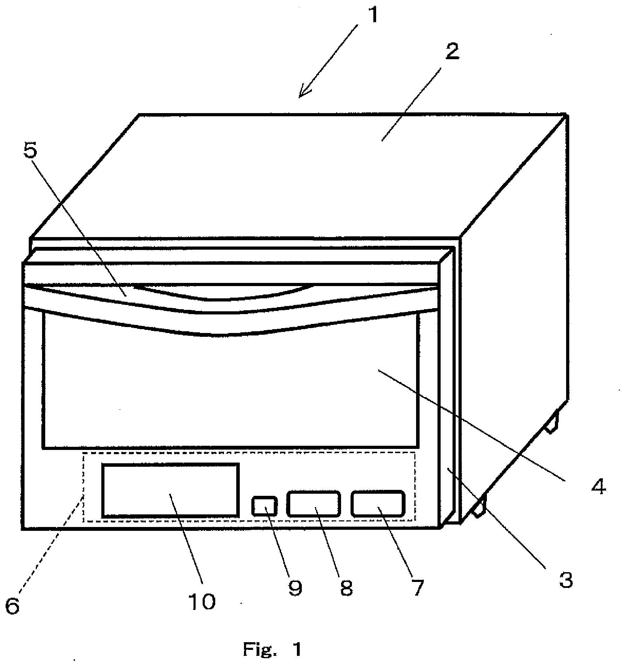

First, the configuration of the heat cooking device according to the embodiment will be explained in reference to Figs. 1 to 5.

Fig. 1 is a perspective view showing the appearance of a microwave oven 1 according to the embodiment of the present invention. As shown in Fig. 1, the microwave oven 1 is configured such that a case 2 in which food is put is provided with a door 3 through which the food is put in and taken out from the case 2. The door 3 includes: a transparent glass window 4 through which the user can see the inside of the case 2; a handle 5 grabbed by the user when the user opens or closes the door 3; and an operation display portion 6.

The operation display portion 6 includes a heating start button 7, a cancel button 8, a back button 9, and a liquid crystal touch panel 10. The heating start button 7 is a button that is pushed when starting heating after various settings for the heating are determined through the liquid crystal touch panel 10. The cancel button 8 is a button that is pushed when stopping the heating in the middle of the heating or when cancelling the operation of the liquid crystal touch panel 10. The back button 9 is a button that is pushed to return the screen image display of the color liquid crystal touch panel 10 to the last screen image display. The heating start button 7, the cancel button 8, and the back button 9 are so-called physical buttons having depressions and projections. When the user pushes each of these buttons, a contact of an electronic circuit is closed, so that an electric signal is transmitted.

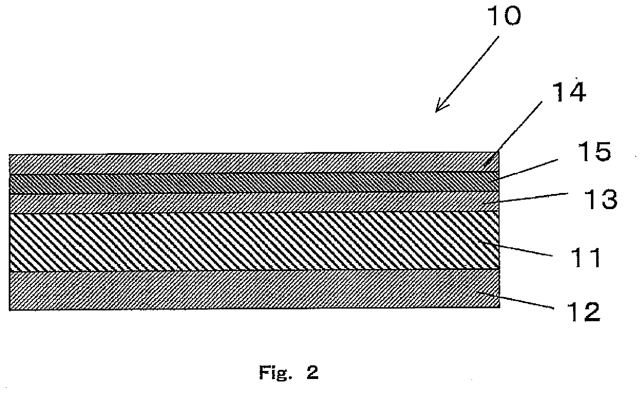

Next, the configuration of the liquid crystal touch panel 10 will be explained in reference to Fig. 2. Fig. 2 is a cross-sectional view showing the schematic configuration of the liquid crystal touch panel 10 included in the microwave oven 1 shown in Fig. 1. In the cross-sectional view shown in Fig. 2, an upper side is a front surface side that receives the contact of the user in a case where the liquid crystal touch panel 10 is included in the microwave oven 1, and a lower side is a back surface side that is housed in the case 2 of the microwave oven 1. The liquid crystal touch panel 10 includes a color liquid crystal display unit 11 that serves as a display portion. As shown in Fig. 2, a protective plate 12 is adhered to a back surface of the color liquid crystal display unit 11. Two transparent glass plates 13 and 14 and a position input device 15 sandwiched between the glass plates 13 and 14 are provided on a front surface side of the color liquid crystal display unit 11. As above, the liquid crystal touch panel 10 is configured such that the color liquid crystal display unit 11 and the position input device 15 sandwiched between the glass plates 13 and 14 are stacked to be integrated with each other.

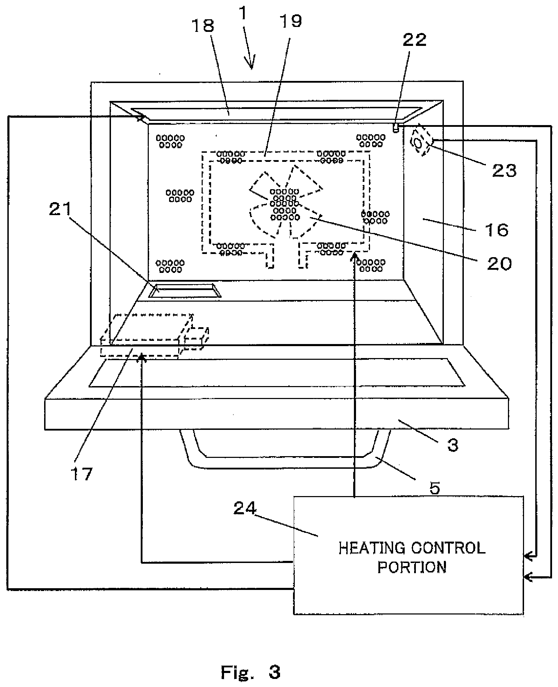

Next, an internal configuration of the microwave oven 1 will be explained in reference to Fig. 3. Fig. 3 is a diagram showing the schematic configuration of an inside of the microwave oven 1 shown in Fig. 1. As methods of heat cooking for the food, the microwave oven 1 realizes high-frequency heating, heating by heat radiation, heating by hot air, and heating by steam. More specifically, the microwave oven 1 includes: a magnetron 17 configured to output high-frequency waves in a heating chamber 16 that houses the food and the like; a flat-surface heater 18 configured to generate radiation heat; a convection heater (sheath heater) 19 and circulating fan 20, which are configured to supply warm air in the heating chamber 16; and a steam generator 21 configured to generate steam in the heating chamber 16. The microwave oven 1 activates these heating members to supply at least one of the high-frequency waves, the radiation, the hot air, and the steam to the heating chamber 16, thereby heating the food. The microwave oven 1 further includes a thermistor 22 and an infrared sensor 23 in the heating chamber 16. The thermistor 22 detects an ambient temperature in the heating chamber 16, and the infrared sensor 23 detects a surface temperature of the food. Based on information regarding the detected temperatures, a heating control portion 24 controls the heating members, such as the magnetron 17, the flat-surface heater 18, the convection heater 19, and the steam generator 21. Thus, the food can be appropriately heated.

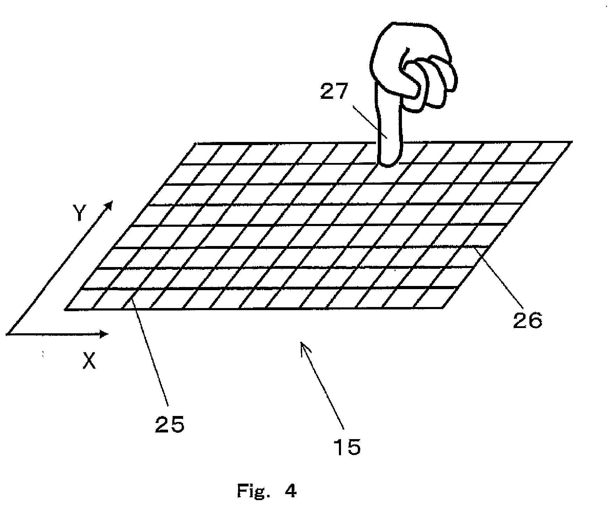

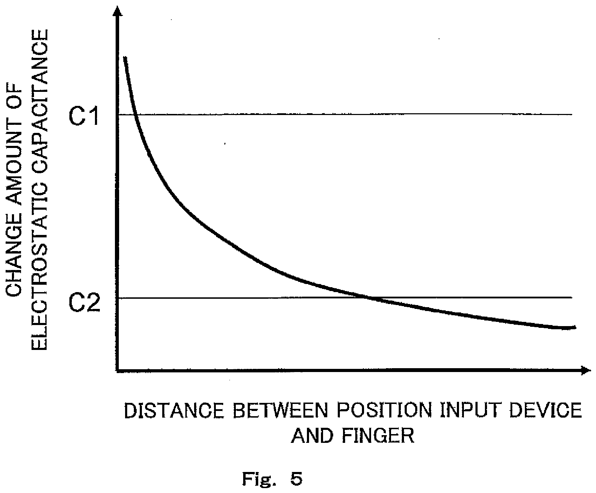

According to the microwave oven 1 configured as above, the liquid crystal touch panel 10 included in the microwave oven 1 can detect not only the contact of the hand of the user but also the proximity of the hand of the user. Hereinafter, configurations regarding the detection of the contact of the hand and the detection of the proximity of the hand by the position input device 15 included in the liquid crystal touch panel 10 will be explained in reference to Figs. 4 and 5.

Fig. 4 is a schematic diagram showing the configuration of the position input device 15 included in the liquid crystal touch panel 10 of the microwave oven 1 shown in Fig. 1, and Fig. 5 is a graph showing a relation between a distance between the position input device 15 and a finger 27 of the user shown in Fig. 4 and a change amount of an electrostatic capacitance. The change amount of the electrostatic capacitance shown in Fig. 5 is, for example, a change amount based on the electrostatic capacitance detected when the microwave oven 1 is turned on to be activated. As shown in Fig. 4, the position input device 15 is constituted by: a plurality of X-direction sensor electrodes 25 electrically connected to one another and arranged parallel to a Y direction to detect X-direction coordinate values; and a plurality of Y-direction sensor electrodes 26 electrically connected to one another and arranged parallel to an X direction to detect Y-direction coordinate values. When, for example, the finger 27 that is a part of a human body contacts the glass plate 14 arranged on the front surface side of the position input device 15, the electrostatic capacitance between the contacted electrode and ground changes. An x-coordinate and y-coordinate of a point of intersection between the X-direction sensor electrode 25 where the electrostatic capacitance has changed and the Y-direction sensor electrode 26 where the electrostatic capacitance has changed can be detected as the position contacted by the finger 27.

In a case where the finger 27 does not contact but has gotten close to the glass plate 14 provided on the front surface side of the position input device 15, the position input device 15 can detect the position to which the finger 27 has gotten close. To be specific, as described above, the position input device 15 detects the contact of the finger 27 by the change in the electrostatic capacitance of the X-direction sensor electrode 25 and the change in the electrostatic capacitance of Y-direction sensor electrode 26. However, in a case where the finger 27 does not contact but has just gotten close to the glass plate 14, the electrostatic capacitance of the X-direction sensor electrode 25 corresponding to the position to which the finger 27 has gotten close and the electrostatic capacitance of the Y-direction sensor electrode 26 corresponding to the position to which the finger 27 has gotten close change. As shown in Fig. 5, the shorter the distance between the position input device 15 and the finger is, the larger the change amount of the electrostatic capacitance is. When the position input device 15 and the finger contact each other, that is, the distance therebetween is zero, the change amount becomes maximum. The liquid crystal touch panel 10 according to the present embodiment is configured to detect the contact of the finger 27 when the change amount of the electrostatic capacitance is equal to or larger than a change amount C1 and detect the proximity of the finger 27 when the change amount of the electrostatic capacitance is not smaller than a change amount C2 and smaller than the change amount C1. As above, regarding each of the contact position of the finger 27 and the proximity position of the finger 27, the x-coordinate and the y-coordinate can be detected by the position input device 15. In Fig. 5, the change amount C2 is set as a value smaller than the change amount C1.

As examples for achieving the above-described objects in the microwave oven 1 configured as above, Examples 1 to 7 will be explained below.

### Example 1

First, the following will explain, as Example 1, an example of the microwave oven 1 configured such that: whether to accept the input by the proximity detection can be determined in consideration of the importance of a result obtained by the instruction input as described above; and the operability on the display screen image displayed on, for example, the liquid crystal touch panel can be improved.

Especially, Example 1 will explain a configuration in which whether to enable the input by the proximity of the finger 27 or the like to the standard button image (operation image) is set for each standard button image.

In Example 1, examples of a state where the input by the proximity of the finger 27 or the like is enabled include a state where when the finger 27 gets close to the standard button image displayed on the liquid crystal touch panel 10, a different image (below-described enlarge button image 43) corresponding to the standard button image to which the finger 27 has gotten close is displayed, and may further include a state where the function corresponding to the above standard button image is executed.

In contrast, examples of a state where the input by the proximity of the finger 27 or the like is disabled include a state where even in a case where the finger 27 or the like has gotten close to the standard button image displayed on the liquid crystal touch panel 10, the different image corresponding to the standard button image is not especially displayed, or the function corresponding to the standard button image is not executed.

The microwave oven 1 according to Example 1 includes the above-described appearance configuration and internal configuration. The microwave oven 1 according to Example 1 further includes the following configuration as a configuration related to the control regarding the input from the user through the liquid crystal touch panel 10.

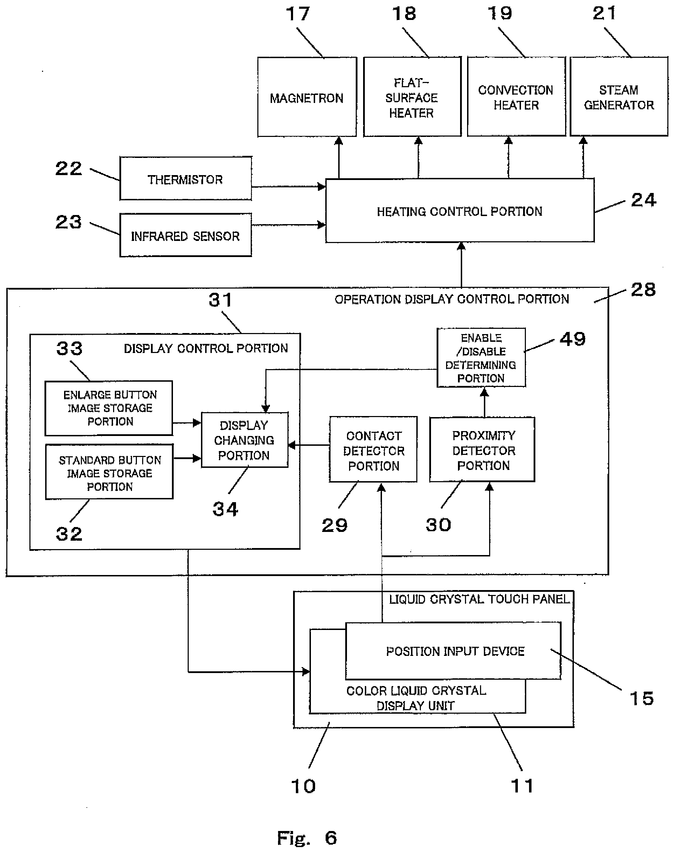

The control regarding the input from the user through the liquid crystal touch panel 10 will be explained in reference to the control block shown in Fig. 6. Fig. 6 is a block diagram showing one example of the configuration of major portions of the microwave oven 1 according to Example 1.

As shown in Fig. 6, the microwave oven 1 includes: the heating control portion 24 configured to control the heating members; and an operation display control portion 28 configured to perform control operations for providing the liquid crystal touch panel 10 as a user interface to users.

More specifically, the operation display control portion 28 controls display of the color liquid crystal display unit 11 based on a signal from the position input device 15 and transmits to the heating control portion 24 a signal corresponding to the input from the user.

When the heating control portion 24 accepts the signal from the operation display control portion 28, the heating control portion 24 controls the magnetron 17, the flat-surface heater 18, the convection heater 19, and the steam generator 21 that are the heating members in accordance with the temperature detected by the thermistor 22 or the infrared sensor 23 as described above. The heating control portion 24 may be configured to control an operation amount of the circulating fan 20, not shown in Fig. 6.

As shown in Fig. 6, the operation display control portion 28 includes: a contact detector portion 29 configured to detect the contact of the finger 27 or a part of the human body with the liquid crystal touch panel 10; a proximity detector portion 30 configured to detect the proximity of the finger 27 or a part of the human body to the liquid crystal touch panel 10; a display control portion 31 configured to control the display of the color liquid crystal display unit 11; and an enable/disable determining portion (permission determining portion) 49.

In a case where the contact detector portion 29 has detected that each of the change in the electrostatic capacitance of the X-direction sensor electrode 25 of the position input device 15 and the change in the electrostatic capacitance of the Y-direction sensor electrode 26 of the position input device 15 is equal to or larger than the change amount C1 shown in Fig. 5, the contact detector portion 29 determines that the finger 27 of the user or the like has contacted the position input device 15. Then, the contact detector portion 29 outputs the x-coordinate and y-coordinate of this contact position as contact position coordinates to the operation display control portion 28. In the operation display control portion 28, based on the x-coordinate and y-coordinate input from the contact detector portion 29, the display control portion 31 controls the display at a position of the color liquid crystal display unit 11, the position corresponding to the coordinates.

In a case where the proximity detector portion 30 has detected that each of the change in the electrostatic capacitance of the X-direction sensor electrode 25 of the position input device 15 and the change in the electrostatic capacitance of the Y-direction sensor electrode 26 of the position input device 15 is not smaller than the change amount C2 shown in Fig. 5 and smaller than the change amount C1, the proximity detector portion 30 determines that the finger 27 of the user or the like has gotten close to the position input device 15. Then, the proximity detector portion 30 outputs the x-coordinate and y-coordinate of this proximity position as proximity position coordinates to the display control portion 31. In the operation display control portion 28, based on the x-coordinate and y-coordinate input from the proximity detector portion 30, the display control portion 31 controls the display at a position of the color liquid crystal display unit 11, the position corresponding to the coordinates.

The display control portion 31 controls the display of the color liquid crystal display unit 11 in accordance with the contact position coordinates input from the contact detector portion 29 or the proximity position coordinates input from the proximity detector portion 30. The display control portion 31 includes a standard button image storage portion 32, an enlarge button image storage portion 33, and a display changing portion 34.

The standard button image storage portion 32 and the enlarge button image storage portion 33 store button images such that the button images stored in the standard button image storage portion 32 are respectively associated with the button images stored in the enlarge button image storage portion 33. To be specific, enlarge button images 43 stored in the enlarge button image storage portion 33 are respectively associated with standard button images stored in the standard button image storage portion 32. The enlarge button images 43 are larger in display size than the standard button images. To be specific, the enlarge button images 43 are larger in the number of display pixels than the standard button images. For example, in the case of the buttons regarding the automatic cooking menu, each standard button image shows only the food item whereas each enlarge button image 43 shows the food item and the picture of the finished food item.

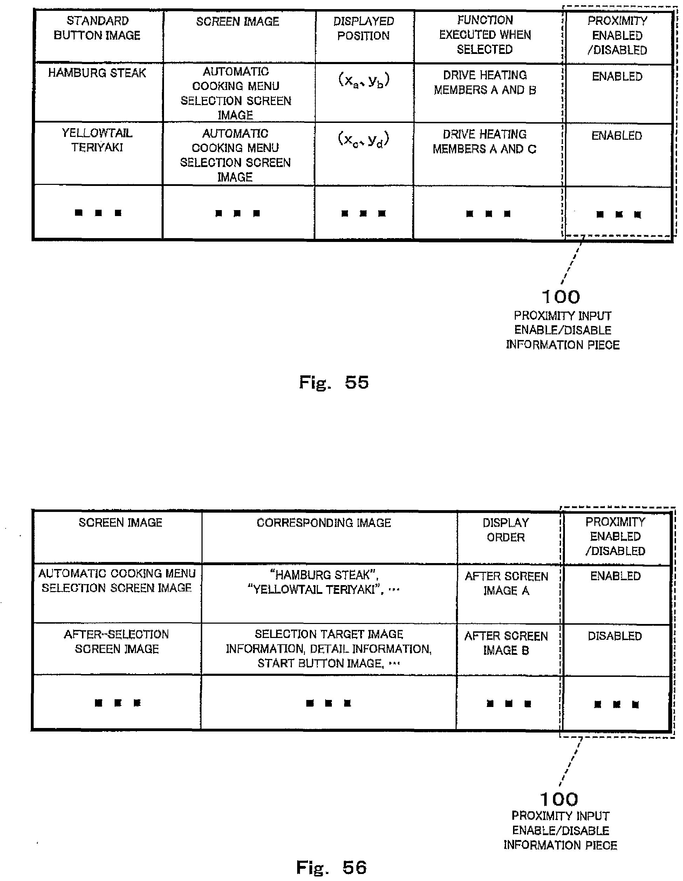

In addition to the standard button images respectively associated with the enlarge button images 43 as described above, the standard button image storage portion 32 stores button table information that is information regarding the standard button images as shown in Fig. 55. Fig. 55 is a diagram showing one example of the button table information stored in the standard button image storage portion 32 included in the microwave oven 1 according to Example 1.

According to the button table information shown in Fig. 55, each of the standard button images is associated with: a screen image on which the standard button image is displayed; the displayed position of the standard button image on the screen image; and the function executed when the standard button image is selected and input. Further, in the button table information, each of the standard button images is associated with a proximity input enable/disable information piece 100 indicating whether the proximity detector portion 30 enables or disables the detection of proximity input to the standard button image.

As the standard button images, the standard button image storage portion 32 stores not only the above-described food items but also, for example, a below-described page turn button image 42 and a start button image 48 used to instruct the start of the operation corresponding to the selected button.

Normally, the display control portion 31 displays a plurality of standard button images arranged on the color liquid crystal display unit 11. When a part of the human body, such as the finger 27 of the user, gets close to the position input device 15 of the liquid crystal touch panel 10, the proximity detector portion 30 detects the proximity of a part of the human body, such as the finger 27, and outputs the proximity position coordinates as a detection result to the enable/disable determining portion 49.

The enable/disable determining portion 49 refers to the button table information stored in the standard button image storage portion 32 to determine whether or not the standard button image is displayed at a position of the screen image displayed on the liquid crystal touch panel 10, the position corresponding to the accepted proximity position coordinates. Further, in a case where the enable/disable determining portion 49 determines that the standard button image is being displayed at the position of the proximity position coordinates on the liquid crystal touch panel 10, the enable/disable determining portion 49 confirms based on the proximity input enable/disable information piece 100 whether or not this standard button image is set such that the proximity detection is enabled.

In a case where the enable/disable determining portion 49 determines that the standard button image displayed at the detected proximity position coordinates is set such that the proximity detection is enabled, the enable/disable determining portion 49 outputs the proximity position coordinates to the display changing portion 34 of the display control portion 31.

The display changing portion 34 extracts from the enlarge button image storage portion 33 the enlarge button image 43 corresponding to the standard button image displayed at the position indicated by the proximity position coordinates input from the proximity detector portion 30. Then, the display changing portion 34 changes the standard button image displayed on the color liquid crystal display unit 11 into the extracted enlarge button image 43 to display the enlarge button image 43.

Details of the operation of changing the standard button image into the enlarge button image 43 at the time of the proximity of the finger 27 to the liquid crystal touch panel 10 will be explained more specifically in a below-described example (Example 3).

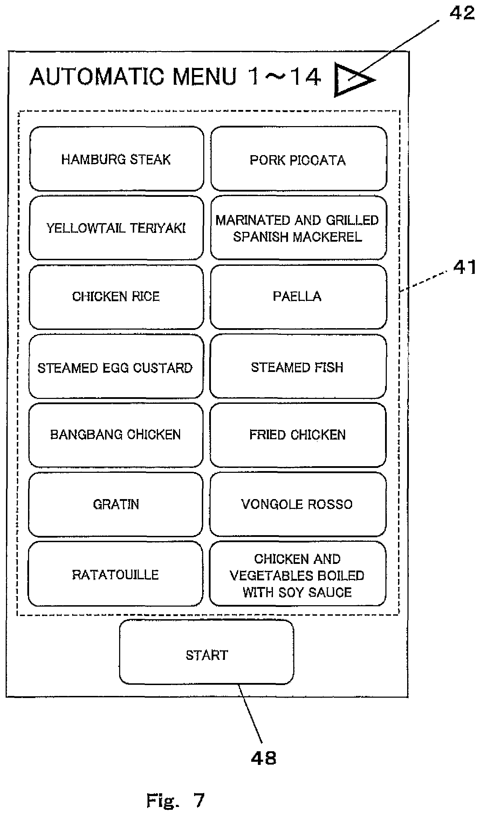

Next, the operations of the operation display control portion 28 will be more specifically explained in reference to Fig. 7 showing a display example of the liquid crystal touch panel 10. Fig. 7 is a diagram showing one example of the selection screen image of the automatic cooking menu displayed on the liquid crystal touch panel 10 according to Example 1. As shown in Fig. 7, the selection screen image of the automatic cooking menu includes an automatic menu button group 41 and the start button image 48.

The standard button images displayed as the automatic menu button group 41 respectively show the food items. Fourteen standard button images are displayed in the screen image of the liquid crystal touch panel 10. These standard button images are being stored in the standard button image storage portion 32. In the automatic cooking menu, an appropriate heat control procedure by an appropriate heating member is preset to each food item. Therefore, when the user just selects the desired food item from the automatic cooking menu, the heat control operation corresponding to the selected food item is performed with respect to the ingredients.

A triangular image displayed at an upper right corner of the selection screen image of the automatic cooking menu shown in Fig. 7 is the page turn button image 42, When a part of the human body, such as the finger 27 of the user, contacts the page turn button image 42, the entire screen image on the color liquid crystal display unit 11 is changed into fourteen images respectively showing the food items included in another automatic menu button group 41.

Next, the following will explain a case where the finger 27 of the user gets close to the liquid crystal touch panel 10 displaying the selection screen image of the automatic cooking menu. When the proximity detector portion 30 detects the proximity of a part of the human body, such as the finger 27 of the user, to the liquid crystal touch panel 10, the proximity detector portion 30 outputs the proximity position coordinates as the detection result to the enable/disable determining portion 49. When the enable/disable determining portion 49 accepts the proximity position coordinates from the proximity detector portion 30, the enable/disable determining portion 49 extracts the standard button image, displayed at the coordinate position indicated by the proximity position coordinates, from the standard button image storage portion 32. Then, the enable/disable determining portion 49 determines whether or not the extracted standard button image is the standard button image set such that the proximity detection is enabled, based on the proximity input enable/disable information piece 100 associated with this standard button image.

In a case where the enable/disable determining portion 49 determines that the standard button image is the image set such that the proximity detection is enabled, the enable/disable determining portion 49 outputs to the display changing portion 34 of the display control portion 31 the proximity position coordinates where the proximity of the finger 27 has been detected. Based on the proximity position coordinates input from the proximity detector portion 30, the display changing portion 34 extracts from the enlarge button image storage portion 33 the enlarge button image 43 associated with the standard button image to which the finger 27 of the user has gotten close. Then, the display changing portion 34 changes the standard button image displayed on the liquid crystal touch panel 10 into the enlarge button image 43 to display the enlarge button image 43.

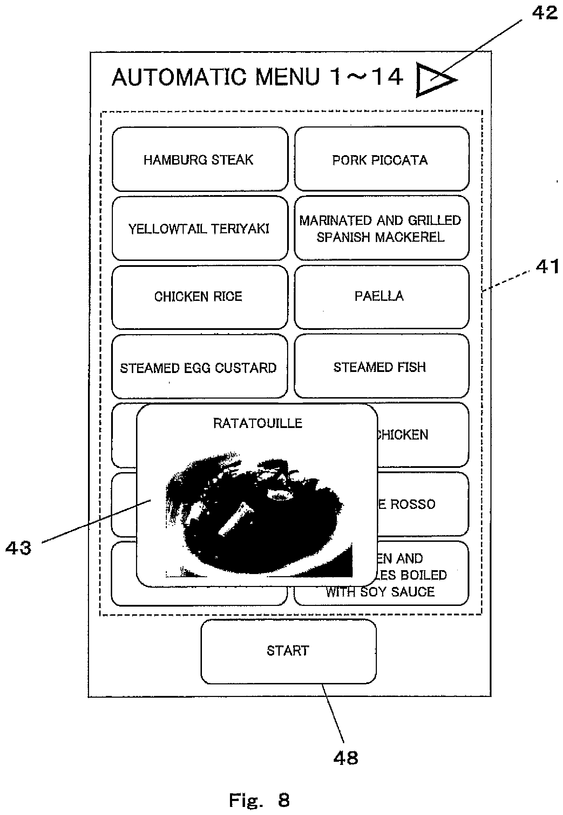

The displayed position of the enlarge button image 43 is a position at which the original standard button image has been displayed. For example, a display state of the liquid crystal touch panel 10 when the finger 27 of the user has gotten close to the "ratatouille" button in the automatic menu button group 41 of Fig. 7 is shown in Fig. 8. Fig. 8 is a diagram showing one example of the selection screen image of the automatic cooking menu displayed on the liquid crystal touch panel 10 according to Example 1. Fig. 8 shows a state where the enlarge button image 43 corresponding to the standard button image ("ratatouille" button) is displayed.

In Example 1, each of the standard button images included in the automatic menu button group 41 shown in Fig. 7 is set such that the proximity detection is enabled, and each of the page turn button image 42 and the start button image 48 is set such that the proximity detection is disabled. Therefore, when the finger 27 of the user gets close to any one of the standard button images included in the automatic menu button group 41, the enlarge button image 43 associated with the standard button image to which the finger 27 has gotten close is displayed as shown in Fig. 8.

Each of the start button image 48 and the page turn button image 42 is set such that the proximity detection is disabled. Therefore, even in a case where the finger 27 gets close to the start button image 48 or the page turn button image 42, the operation of the microwave oven 1 is not started, and the page of the automatic cooking menu is not turned to a new page.

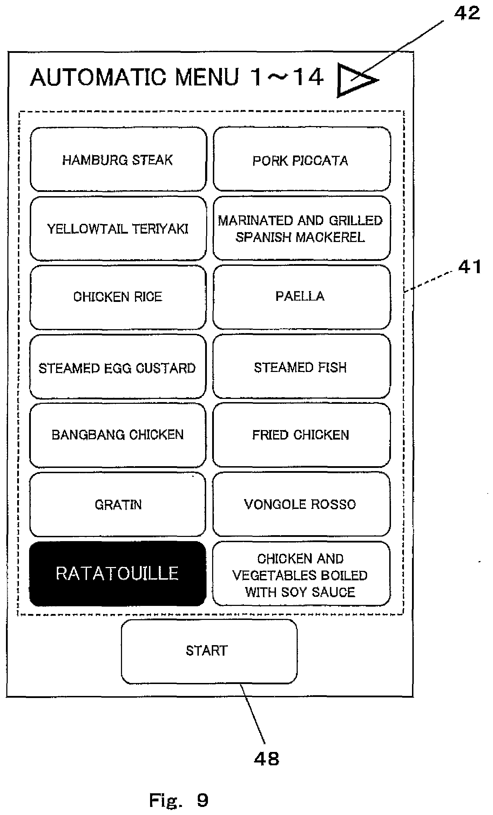

In a state where only the "ratatouille" included in the automatic cooking menu is displayed as the enlarge button image 43 as shown in Fig. 8, and when the finger 27 of the user contacts the position of the enlarge button image 43, the "ratatouille" is selected, and the display screen image is changed into the display screen image shown in Fig. 9. Fig. 9 is a diagram showing one example of the selection screen image of the automatic cooking menu displayed on the liquid crystal touch panel 10 according to Example 1. Fig. 9 is a diagram showing one example of the display screen image displayed after the "ratatouille" in the automatic menu button group 41 is selected by the user.

In the example shown in Fig. 9, the displayed position of the selected standard button image indicating the "ratatouille" is changed into black display, and this indicates that the standard button image indicating the "ratatouille" has already been selected. When the finger 27 of the user contacts the start button image 48 in a state where the standard button image has been selected as above, the cooking of the food item ("ratatouille") of the selected standard button image is started.

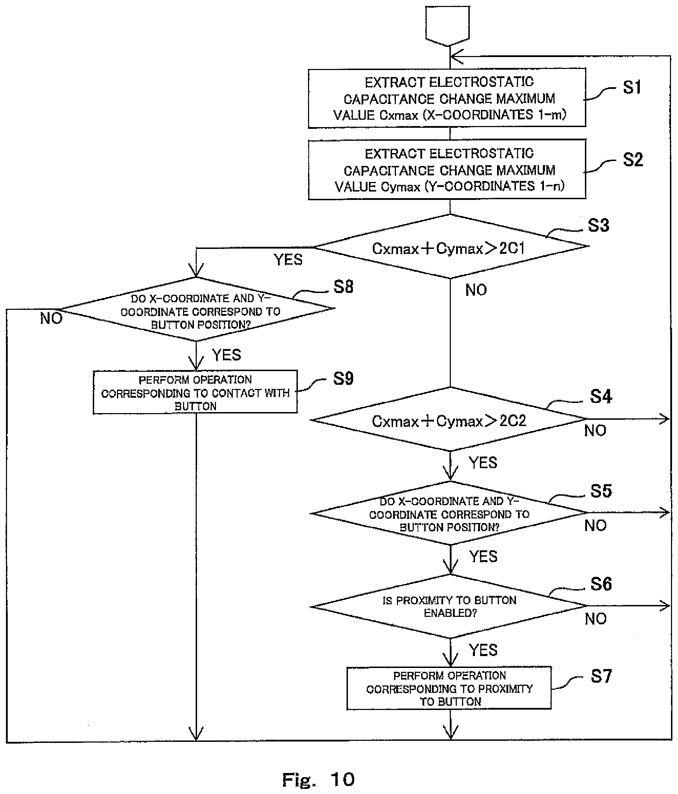

Next, the flow of specific operations of the microwave oven 1 when accepting the input such that the finger 27 of the user gets close to or contacts the selection screen image of the automatic cooking menu shown in Fig. 7 is shown in Fig. 10. Fig. 10 is a flow chart showing one example of an input accepting operation of the liquid crystal touch panel 10 included in the microwave oven 1 according to Example 1.

When the finger 27 of the user gets close to the selection screen image of the automatic cooking menu displayed on the liquid crystal touch panel 10, the electrostatic capacitance changes. This change is detected by the X-direction sensor electrode 25 and Y-direction sensor electrode 26 of the position input device 15.

To be specific, in Step S1, the proximity detector portion 30 detects electrostatic capacitance changes Cx1 to Cxm of a plurality of (m) X-direction sensor electrodes 25 shown in Fig. 4 and then extracts a maximum value as an electrostatic capacitance change Cxmax from the electrostatic capacitance changes Cx1 to Cxm. Next, in Step S2, the proximity detector portion 30 detects electrostatic capacitance changes Cyl to Cyn of a plurality of (n) Y-direction sensor electrodes 26 shown in Fig. 4 and then extracts a maximum value as an electrostatic capacitance change Cymax from the electrostatic capacitance changes Cyl to Cyn.

In Step S3, the contact detector portion 29 adds the electrostatic capacitance changes Cxmax and Cymax respectively extracted in Steps S1 and S2. Then, the contact detector portion 29 determines whether or not the calculation result is larger than a value that is twice the change amount C1 shown in Fig. 5 (Step S3). In a case where the contact detector portion 29 determines that the sum of the electrostatic capacitance changes Cxmax and Cymax is larger than the value that is twice the change amount C1 ("YES" in Step S3), the process proceeds to Step S8.

In contrast, in a case where the contact detector portion 29 determines that the above-described sum is not larger than the value that is twice the change amount C1 ("NO" in Step S3), the proximity detector portion 30 adds the electrostatic capacitance changes Cxmax and Cymax respectively extracted in Steps S1 and S2. Then, the proximity detector portion 30 determines whether or not the calculation result is larger than a value that is twice the change amount C2 shown in Fig. 5 (Step S4). In the microwave oven 1 according to Example 1, whether or not an average of the electrostatic capacitance changes Cxmax and Cymax has exceeded the change amount C2 is used to determine whether or not the finger 27 or the like has gotten close to the button image. However, in an actual calculation, whether or not the finger 27 or the like has gotten close to the button image is determined based on whether or not the sum of the electrostatic capacitance changes Cxmax and Cymax is larger than the value that is twice the change amount C2.

If "YES" in Step S3, to be specific, in a case where the contact detector portion 29 has determined that the finger 27 of the user or the like has contacted the liquid crystal touch panel 10, the contact detector portion 29 specifies the coordinate position (the x-coordinate and the y-coordinate) where the contact has been detected. Then, the contact detector portion 29 determines whether or not there exists the standard button image displayed at the position corresponding to the coordinate position (the x-coordinate and the y-coordinate) (Step S8). In a case where there exists the standard button image displayed at the coordinate position where the contact has been detected ("YES" in Step 8), the contact detector portion 29 instructs the execution of the operation corresponding to this standard button image (Step S9). For example, in a case where the operation corresponding to this standard button image is the heat treatment of the food, the contact detector portion 29 instructs the heating control portion 24 to perform the heating of the food.

In contrast, if "NO" in Step S8, the finger 27 of the user may have contacted a position other than the positions of the standard button images. Therefore, the process returns to Step S1, and the operations are repeated from Step S1.

If "NO" in Step S4, it is determined that the finger 27 or the like does not contact or get close to the liquid crystal touch panel 10. Thus, the process returns to Step S1, and the above operations are repeated. If "YES" in Step S4, the proximity detector portion 30 specifies the coordinate position (the x-coordinate and the y-coordinate) where the proximity has been detected. Then, the proximity detector portion 30 determines whether or not there exists the standard button image displayed at the position corresponding to the coordinate position (the x-coordinate and the y-coordinate) (Step S5). In a case where there is no standard button image displayed at the coordinate position where the proximity has been detected ("NO" in Step 5), the finger 27 of the user may have gotten close to a position other than the positions of the standard button images. Therefore, the process returns to Step S1, and the above operations are repeated.

In contrast, in a case where there exists the standard button image displayed at the position corresponding to the coordinate position where the proximity has been detected ("YES" in Step 5), the proximity detector portion 30 determines whether or not the standard button image is set such that the proximity detection is enabled (Step S6). More specifically, the proximity detector portion 30 extracts from the standard button image storage portion 32 the standard button image displayed at the coordinate position where the proximity has been detected and refers to the proximity input enable/disable information piece 100 to confirm whether or not the standard button image is set such that the proximity detection is enabled.

If "NO" in Step S6, there is no operation corresponding to the standard button image to which the finger 27 of the user or the like has gotten close. Therefore, the process returns to Step S1, and the above operations are repeated.

In contrast, if "YES" in Step S6, the proximity detector portion 30 executes the operation that is set to be executed when the finger 27 of the user has gotten close to the standard button image (Step S7). For example, in a case where displaying the enlarge button image 43 corresponding to the standard button image where the proximity has been detected is set as the operation performed at the time of the proximity detection, the proximity detector portion 30 instructs the display changing portion 34 of the display control portion 31 to change the standard button image into the enlarge button image 43 to display the enlarge button image 43.

The foregoing has explained a configuration in which each of the standard button images is set such that the input of the proximity detection is enabled or disabled. The following will explain, as Example 2, a configuration in which each screen image displaying the standard button images is set such that the input of the proximity detection is enabled or disabled.

### Example 2

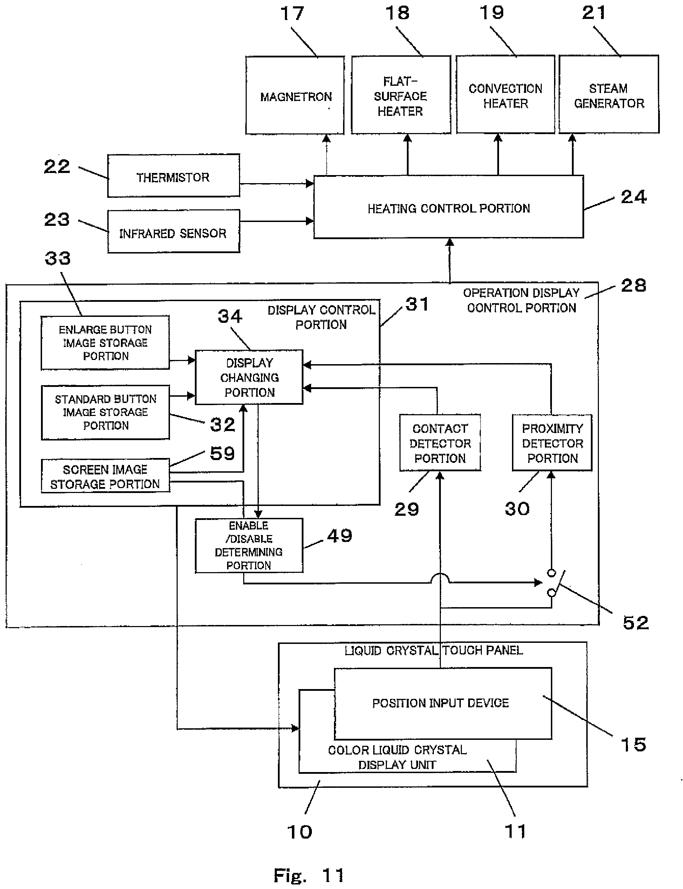

First, the control regarding the input from the user through the liquid crystal touch panel 10 will be explained in reference to the control block of Fig. 11. Fig. 11 is a block diagram showing one example of the configuration of major portions of the microwave oven 1 according to Example 2.

As shown in Fig. 11, the microwave oven 1 according to Example 2 is the same in configuration as the microwave oven 1 according to Example 1 except for the configuration of the operation display control portion 28. Therefore, the following will explain the operation display control portion 28, and explanations of the other members are omitted. The same reference signs are used for the same members as in the microwave oven 1 according to Example 1.

As shown in Fig. 11, the operation display control portion 28 includes: the contact detector portion 29 configured to detect the contact of the finger 27 or a part of the human body with the liquid crystal touch panel 10; the proximity detector portion 30 configured to detect the proximity of the finger 27 or a part of the human body to the liquid crystal touch panel 10; the display control portion 31 configured to control the display of the color liquid crystal display unit 11; the enable/disable determining portion 49; and a switching portion 52. In addition, the display control portion 31 includes the standard button image storage portion 32; the enlarge button image storage portion 33; a screen image storage portion 59; and the display changing portion 34.

To be specific, the microwave oven 1 according to Example 2 is different from the microwave oven 1 according to Example 1 in that the operation display portion 28 further includes the switching portion 52. In accordance with an instruction from the display control portion 31, the switching portion 52 switches whether or not the proximity detector portion 30 detects the proximity of the finger 27 or the like to the liquid crystal touch panel 10. To be specific, the switching portion 52 switches between a state where the proximity detector portion 30 does not accept the change amount of the electrostatic capacitance of the position input device 15 and a state where the proximity detector portion 30 accepts the change amount.

Further, the microwave oven 1 according to Example 2 is different from the microwave oven 1 according to Example 1 in that the screen image storage portion 59 is one of the components of the display control portion 31. The screen image storage portion 59 stores images regarding the screen images displayed on the liquid crystal touch panel 10. Examples of the images regarding the screen images include a frame image used when displaying a list of the standard button images. In Example 2, the screen image display can be changed in accordance with information to be displayed, and plural types of images constituting the screen images are stored in the screen image storage portion 59. Each of the images regarding the screen image is associated with the proximity input enable/disable information piece 100 regarding whether or not the standard button displayed in the screen image is set such that the proximity detection is enabled.

Specifically, the screen image storage portion 59 stores screen image table information containing the proximity input enable/disable information pieces 100 as shown in Fig. 56. Fig. 56 is a diagram showing one example of the screen image table information stored in the screen image storage portion 59 included in the microwave oven 1 according to Example 2.

As shown in Fig. 56, the screen image table information shows a correspondence relation among each screen image, the images (the standard button images and the like) displayed in the screen image, a display order defining a relation (hierarchical structure) among the screen images, and the proximity input enable/disable information piece 100.

Here, in the microwave oven 1 according to Example 2, when displaying a certain screen image on the color liquid crystal display unit 11 of the liquid crystal touch panel 10, the enable/disable determining portion 49 determines whether or not this screen image is set such that the proximity detection is enabled, in reference to the proximity input enable/disable information piece 100 stored in the image storage portion 59 and associated with this screen image.

In a case where the enable/disable determining portion 49 determines that the screen image is set such that the proximity detection is enabled, the enable/disable determining portion 49 instructs the switching portion 52 to become an on state. In contrast, in a case where the enable/disable determining portion 49 determines that the screen image is set such that the proximity detection is disabled, the enable/disable determining portion 49 instructs the switching portion 52 to become an off state.

The on state denotes a state where signal wires are connected to each other, the signal wires being used to transmit the information of the detected electrostatic capacitances from the X-direction sensor electrode 25 and Y-direction sensor electrode 26 of the position input device 15 to the proximity detector portion 30. The off state denotes a state where these signal wires are not connected to each other. As above, whether or not the proximity detector portion 30 detects the proximity can be switched by switching between the on state and off state of the switching portion 52.

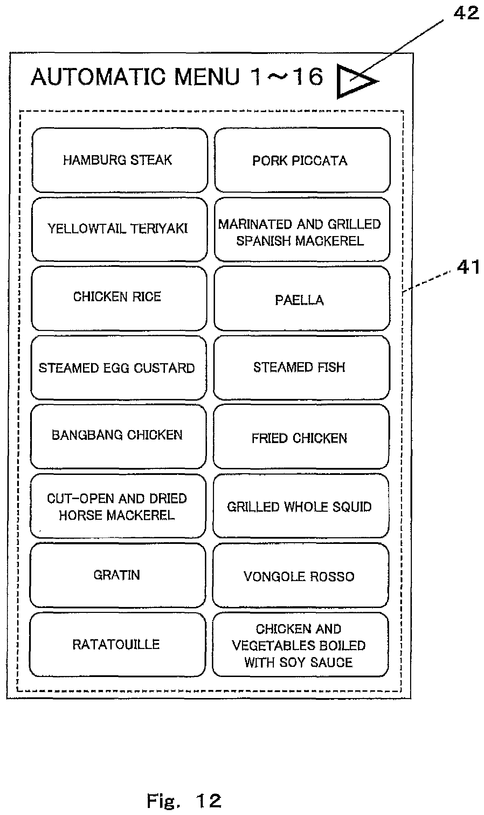

. Next, the operations of the operation display control portion 28 will be more specifically explained in reference to Fig. 12 showing the display example of the liquid crystal touch panel 10. Fig. 12 is a diagram showing one example of the selection screen image of the automatic cooking menu displayed on the liquid crystal touch panel 10 according to Example 2. As with the selection screen image of the automatic cooking menu shown in Fig. 7, the selection screen image of the automatic cooking menu shown in Fig. 12 includes the automatic menu button group 41. The standard button images displayed as the automatic menu button group 41 respectively show the food items. Sixteen standard button images are displayed in the screen image of the liquid crystal touch panel 10. Since the automatic menu button group 41 has been explained in Example 1, the explanation thereof is omitted.

As with the selection screen image of the automatic cooking menu shown in Fig. 7, the page turn button image 42 is displayed at an upper right corner of the selection screen image of the automatic cooking menu shown in Fig. 12.

Next, the following will explain a case where the finger 27 of the user has gotten close to the liquid crystal touch panel 10 displaying the selection screen image of the automatic cooking menu.

First, as preconditions, when the display control portion 31 causes the liquid crystal touch panel 10 to display the selection screen image of the automatic cooking menu, the display control portion 31 reads out the images constituting the selection screen image from the image storage portion 59. Further, based on the proximity input enable/disable information piece 100 associated with the selection screen image, the enable/disable determining portion 49 determines whether or not the selection screen image is set such that the proximity detection is enabled.

Herein, since the selection screen image of the automatic cooking menu is set such that the proximity detection is enabled, the enable/disable determining portion 49 instructs the switching portion 52 to become the on state. Therefore, in the selection screen image of the automatic cooking menu, the proximity detection with respect to each of the standard button images displayed in the selection screen image is enabled.

Based on the above preconditions, when a part of the human body, such as the finger 27 of the user, gets close to the liquid crystal touch panel 10, the proximity detector portion 30 detects the proximity to obtain the proximity position coordinates. Then, the proximity detector portion 30 outputs the proximity position coordinates to the display changing portion 34 of the display control portion 31.

Based on the proximity position coordinates input from the proximity detector portion 30, the display changing portion 34 extracts from the enlarge button image storage portion 33 the enlarge button image 43 associated with the standard button image to which the finger 27 of the user has gotten close. Then, the display changing portion 34 changes the standard button image displayed on the liquid crystal touch panel 10 into the enlarge button image 43.

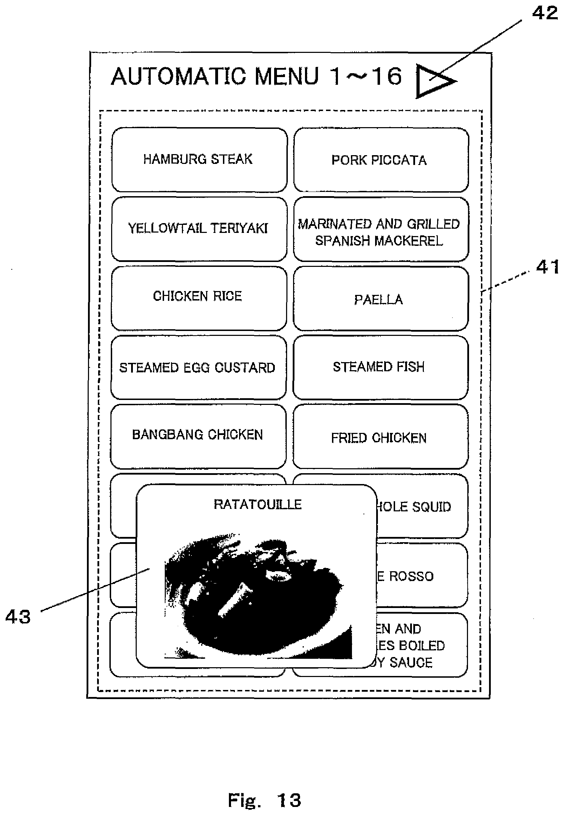

The displayed position of the enlarge button image 43 is a position at which the original standard button image has been displayed. For example, the display state of the liquid crystal touch panel 10 when the finger 27 of the user has gotten close to the "ratatouille" button in the automatic menu button group 41 of Fig. 12 is shown in Fig. 13. Fig. 13 is a diagram showing one example of the selection screen image of the automatic cooking menu displayed on the liquid crystal touch panel 10 according to Example 2. Fig. 13 shows a state where the enlarge button image 43 corresponding to the standard button image ("ratatouille" button) is displayed.

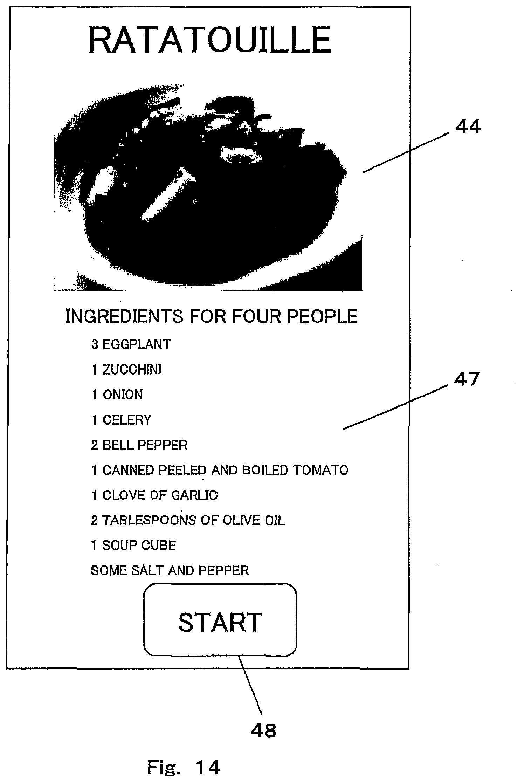

In a state where only the "ratatouille" included in the automatic cooking menu is displayed as the enlarge button image 43 as shown in Fig. 13, and when the finger 27 of the user contacts the position of the enlarge button image 43, the "ratatouille" is selected, and the display screen image is changed into the image shown in Fig. 14. Fig. 14 is a diagram showing one example of the display screen image (after-selection screen image) displayed after the "ratatouille" in the automatic menu button group 41 of the automatic cooking menu shown in Fig. 13 is selected by the user. In the after-selection screen image, image information 44 that is the picture of the finished food item and detail information 47 that shows ingredients and amounts are displayed in addition to the food item called the "ratatouille". Further, the start button image 48 is displayed at a lower portion of the after-selection screen image.

Therefore, the after-selection screen image serves as both a screen image that provides the image information 44 and the detail information 47 regarding the "ratatouille" to the user and a screen image that accepts a start button for starting the cooking of the "ratatouille". Therefore, to prevent a case where the user mistakenly gets close to the after-selection screen image to unintentionally start the cooking of the "ratatouille", the after-selection screen image is set such that the proximity detection is disabled.

To be specific, when the finger 27 of the user contacts the position of the enlarge button image 43 of the "ratatouille" in the automatic cooking menu shown in Fig. 13 to select the "ratatouille", the contact detector portion 29 detects the contact of the user to output the contact position coordinates as the detection result to the display changing portion 34. The display changing portion 34 accepts contact position information from the contact detector portion 29 to read out from the screen image storage portion 59 the screen image (after-selection screen image) to be displayed next. Further, the display changing portion 34 instructs the enable/disable determining portion 49 to determine whether or not the screen image to be displayed next is set such that the proximity detection is enabled.

In accordance with the instruction from the display changing portion 34, the enable/disable determining portion 49 determines based on the proximity input enable/disable information piece 100 whether or not the screen image to be displayed next read out from the screen image storage portion 59 is set such that the proximity detection is enabled. In the microwave oven 1 according to Example 2, the after-selection screen image that is the screen image to be displayed next is set such that the proximity detection is disabled. Therefore, the enable/disable determining portion 49 determines that the after-selection screen image to be displayed next is set such that the proximity detection is disabled and then instructs the switching portion 52 to become the off state. In accordance with the instruction from the enable/disable determining portion 49, the switching portion 52 is set to become the off state.

Therefore, the after-selection screen image shown in Fig. 14 is set such that the proximity detection is disabled, so that the after-selection screen image does not accept the input other than the contact of the finger 27 or the like with the start button image 48.

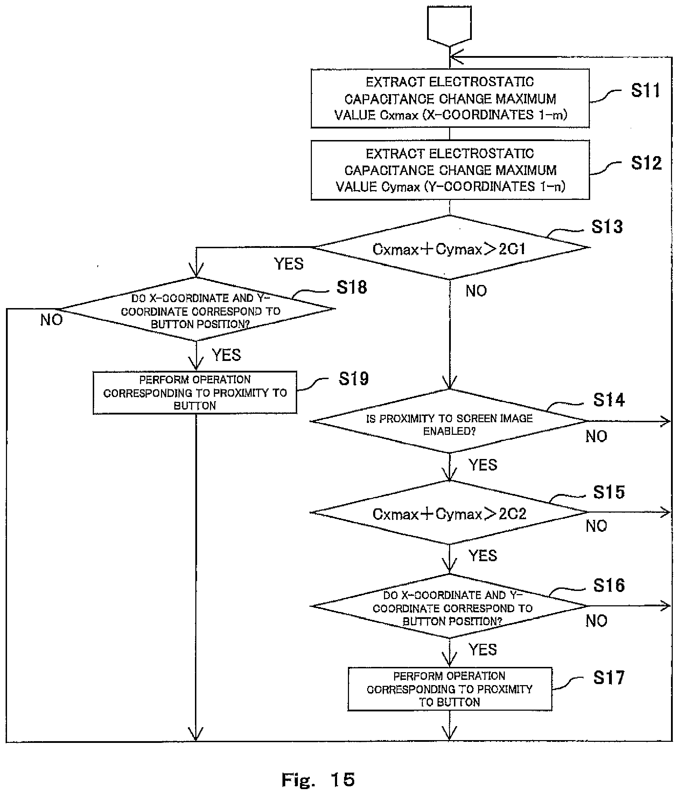

Next, the flow of specific operations of the microwave oven 1 when accepting the input such that the finger 27 of the user gets close to or contacts the selection screen image of the automatic cooking menu shown in Fig. 12 is shown in Fig. 15. Fig. 15 is a flow chart showing one example of the input accepting operation of the liquid crystal touch panel 10 included in the microwave oven 1 according to Example 2.

When the finger 27 of the user gets close to the selection screen image of the automatic cooking menu displayed on the liquid crystal touch panel 10, the electrostatic capacitance changes. This change is detected by the X-direction sensor electrode 25 and Y-direction sensor electrode 26 of the position input device 15 (Steps S11 and S12). Steps S11 and S12 are the same as Steps S1 and S2 shown in the flow chart of Fig. 10.

In Step S13, the contact detector portion 29 adds the electrostatic capacitance changes Cxmax and Cymax respectively extracted in Steps S11 and S12. Then, the contact detector portion 29 determines whether or not the calculation result is larger than the value that is twice the change amount C1 shown in Fig. 5 (Step S13).

In a case where the contact detector portion 29 determines that the sum of the electrostatic capacitance changes Cxmax and Cymax is larger than the value that is twice the change amount C1 ("YES" in Step S13), the process proceeds to Step S18.

That is, if "YES" in Step S13, to be specific, in a case where the contact detector portion 29 determines that the finger 27 of the user or the like has contacted the liquid crystal touch panel 10, the contact detector portion 29 specifies the coordinate position (the x-coordinate and the y-coordinate) where the contact has been detected. Then, the contact detector portion 29 determines whether or not there exists the standard button image displayed at the position corresponding to the coordinate position (the x-coordinate and the y-coordinate) (Step S18).

In a case where there exists the standard button image displayed at the coordinate position where the contact has been detected ("YES" in Step 18), the contact detector portion 29 instructs the execution of the operation corresponding to this standard button image. For example, in a case where the operation corresponding to this standard button image is the heat treatment of the food, the contact detector portion 29 instructs the heating control portion 24 to perform the heating of the food.

If "NO" in Step S18, the finger 27 of the user may have contacted a position other than the positions of the standard button images. Therefore, the process returns to Step S11, and the operations are repeated from Step S11.

In a case where the contact detector portion 29 determines in Step S13 that the above-described sum is not larger than the value that is twice the change amount C1 ("NO" in Step S13), whether the switching portion 52 is in the on state or the off state is confirmed, and whether or not the screen image displayed on the liquid crystal touch panel 10 is set such that the proximity detection is enabled is determined (Step S14).

In a case where the screen image is not set such that the proximity detection is enabled ("NO" in Step S14), the process returns to Step S11, and the operations are repeated. In contrast, in a case where the screen image is set such that the proximity detection is enabled ("YES" in Step S14), the proximity detector portion 30 adds the electrostatic capacitance changes Cxmax and Cymax respectively extracted in Steps S11 and S12. Then, the proximity detector portion 30 determines whether or not the calculation result is larger than the value that is twice the change amount C2 shown in Fig. 5 (Step S15).

If "NO" in Step S15, it is determined that the finger 27 or the like does not contact or get close to the liquid crystal touch panel 10. Thus, the process returns to Step S11, and the above operations are repeated. In contrast, if "YES" in Step S15, the proximity detector portion 30 specifies the coordinate position (the x-coordinate and the y-coordinate) where the proximity has been detected. Then, the proximity detector portion 30 determines whether or not there exists the standard button image displayed at the position corresponding to the coordinate position (the x-coordinate and the y-coordinate) (Step S16).

In a case where there is no standard button image displayed at the coordinate position where the proximity has been detected ("NO" in Step 16), the finger 27 of the user may have gotten close to a position other than the positions of the standard button images. Therefore, the process returns to Step S1, and the operations are repeated.

In contrast, in a case where there exists the standard button image displayed at the position corresponding to the coordinate position where the proximity has been detected ("YES" in Step 16), the proximity detector portion 30 executes the operation that is set to be executed when the finger 27 of the user has gotten close to the standard button image (Step S17).

### Example 3

Next, the following will explain, as Example 3, the microwave oven 1 configured such that: the perspicuity thereof is improved by displaying a large number of button images on the liquid crystal touch panel 10; and easy-to-understand display is realized to prevent the user from mistakenly making selections and determinations.

In the microwave oven 1 according to Example 3, the configuration of determining that the proximity detection is enabled or disabled is not described. However, the microwave oven 1 according to Example 3 can be combined with the components of the microwave oven 1 according to Example 1 or 2.

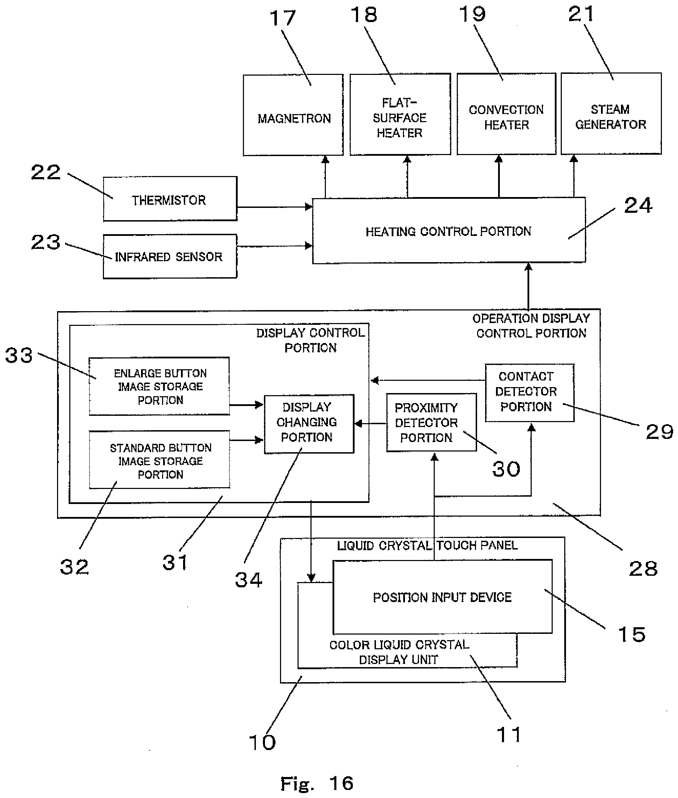

First, the control of the color liquid crystal display unit 11 and the position input device 15 in the liquid crystal touch panel 10 will be explained in reference to the control block diagram of Fig. 16. Fig. 16 is a block diagram showing one example of the configuration of major portions of the microwave oven 1 according to Example 3. As shown in Fig. 16, the microwave oven 1 includes the heating control portion 24 and the operation display control portion 28. The operation display control portion 28 controls the display of the color liquid crystal display unit 11 based on a signal from the position input device 15 and transmits to the heating control portion 24 a signal corresponding to the input from the user. When the heating control portion 24 accepts the signal from the operation display control portion 28, the heating control portion 24 controls the magnetron 17, the flat-surface heater 18, the convection heater 19, and the steam generator 21 that are the heating members in accordance with the temperature detected by the thermistor 22 or the infrared sensor 23 as described above. The heating control portion 24 may be configured to control the operation amount of the circulating fan 20, not shown in Fig. 16.

As shown in Fig. 16, the operation display control portion 28 includes: the contact detector portion 29 configured to detect the contact of the finger 27 or a part of the human body with the liquid crystal touch panel 10; the proximity detector portion 30 configured to detect the proximity of the finger 27 or a part of the human body to the liquid crystal touch panel 10; and the display control portion 31 configured to control the display of the color liquid crystal display unit 11.

The configurations of the contact detector portion 29 and the proximity detector portion 30 are the same as those of the contact detector portion 29 and the proximity detector portion 30 in Example 1, so that explanations thereof are omitted.

The configuration of the display control portion 31 is the same as that of the display control portion 31 in Example 1, so that an explanation thereof is omitted.

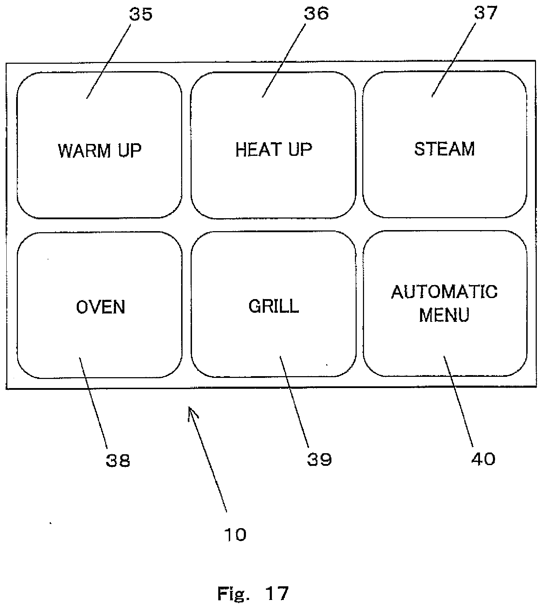

Next, the operations of the operation display control portion 28 will be explained in reference to Fig. 17 showing the display example of the liquid crystal touch panel 10. Fig. 17 is a diagram showing one example of the basic menu screen image displayed on the liquid crystal touch panel 10 according to Example 3. Fig. 17 shows one example of the basic menu screen image displayed first after the microwave oven is turned on. The basic menu screen image displays a warm-up button image 35, a heat-up button image 36, a steam button image 37, an oven button image 38, a grill button image 39, and an automatic menu button image 40. These standard button images displayed in the basic menu screen image are stored in the standard button image storage portion 32. The standard button images are read out from the standard button image storage portion 32 by the display control portion 31, for example, after the microwave oven is turned on, and then displayed as the basic menu screen image on the color liquid crystal display unit 11.

When the finger 27 contacts the position of any one of the standard button images displayed on the liquid crystal touch panel 10, the screen image is changed into a next screen image for making detailed settings. To be specific, when the finger 27 contacts, for example, the warm-up button image 35 among the standard button images of the basic menu screen image displayed on the liquid crystal touch panel 10, the screen image is changed into a setting screen image of a heating finishing temperature. When the finger 27 contacts the heat-up button image 36, the screen image is changed into a setting screen image of a heating power (watt) and a heating time. When the finger 27 contacts the steam button image 37, the screen image is changed into a setting screen image of a heating time. The steam heating is used to perform steam cooking by the combination of steam, microwaves, and a flat-surface heater. When the finger 27 contacts the oven button image 38, the screen image is changed into a setting screen image of a heating temperature and a heating time. When the finger 27 contacts the grill button image 39, the screen image is changed into a screen image for selecting one-side grill or double-sided grill and setting a heating time. When the finger 27 contacts the automatic menu button image 40, the screen image is changed into the selection screen image of the automatic cooking menu (automatic menu).

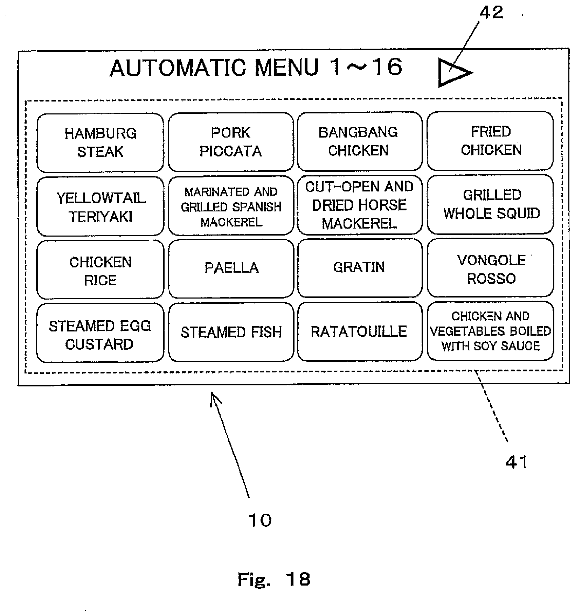

Fig. 18 shows a state where the selection screen image of the automatic cooking menu is displayed on the liquid crystal touch panel 10. Fig. 18 is a diagram showing one example of the selection screen image of the automatic cooking menu displayed on the liquid crystal touch panel 10 according to Example 3. The standard button images displayed as the automatic menu button group 41 respectively show the food items. Sixteen standard button images are displayed in the entire screen image of the liquid crystal touch panel 10. These standard button images are stored in the standard button image storage portion 32. In the automatic cooking menu, an appropriate heat control procedure by an appropriate heating member is preset to each food item. Therefore, when the user just selects the desired food item from the automatic cooking menu, the heat control operation corresponding to the selected food item is performed with respect to the ingredients. A triangular image displayed at an upper right corner of the selection screen image of the automatic cooking menu is the page turn button image 42. When a part of the human body, such as the finger 27 of the user, contacts the page turn button image 42, the entire screen image on the color liquid crystal display unit 11 is changed into sixteen images respectively showing the food items included in another automatic menu button group 41.

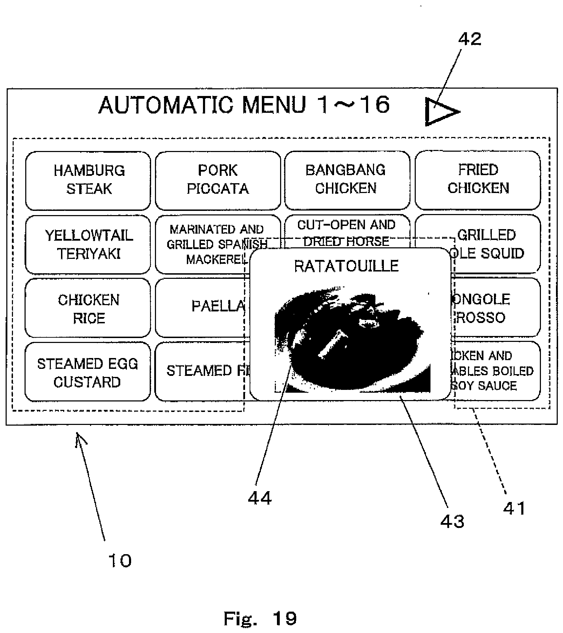

Next, the following will explain a case where the finger 27 of the user is about to contact the liquid crystal touch panel 10, to be specific, a case where the finger 27 of the user has gotten close to the liquid crystal touch panel 10. When the proximity detector portion 30 detects the proximity of a part of the human body, such as the finger 27 of the user, to the liquid crystal touch panel 10, the proximity detector portion 30 outputs the proximity position coordinates as the detection result to the display changing portion 34 of the display control portion 31. Based on the proximity position coordinates input from the proximity detector portion 30, the display changing portion 34 extracts from the enlarge button image storage portion 33 the enlarge button image 43 associated with the standard button image located at the position to which the finger 27 of the user or the like has gotten close. Then, the display changing portion 34 changes the standard button image displayed on the liquid crystal touch panel 10 into the enlarge button image 43 to display the enlarge button image 43 on the liquid crystal touch panel 10. The displayed position of the enlarge button image 43 is a position at which the original standard button image has been displayed. For example, the display state of the liquid crystal touch panel 10 when the finger 27 of the user has gotten close to the "ratatouille" button in the automatic menu button group 41 of Fig. 18 is shown in Fig. 19. Fig. 19 is a diagram showing one example of the selection screen image of the automatic cooking menu displayed on the liquid crystal touch panel 10 according to Example 3.

As shown in Fig. 19, as with Fig. 18, a large number of standard button images stored in the standard button image storage portion 32 are displayed in the automatic menu button group 41. Among these standard button images, only the "ratatouille" which is included in the automatic cooking menu and to which the finger has gotten close is displayed as the enlarge button image 43. In the enlarge button image 43, the food item name "ratatouille" and the picture of the finished food item as the image information 44 are displayed. When the finger contacts the position of the enlarge button image 43, the screen image is changed into a detail setting screen image.

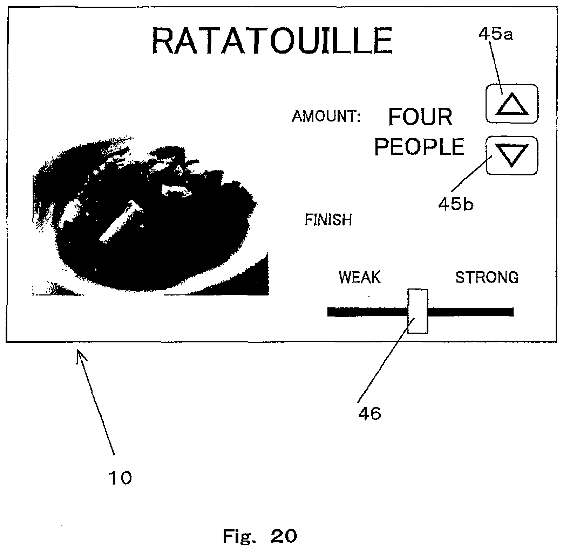

Fig. 20 shows a display example of the detail setting screen image of the automatic cooking menu (automatic menu) on the liquid crystal touch panel 10. The setting screen image of the "ratatouille" will be explained as an example. In addition to the food item and the picture of the finished food item, the detail setting screen image includes amount setting button images 45a and 45b and a finishing adjustment slider 46. Regarding the amount setting, the amount for the number of persons to which the food is provided can be set. When the finger contacts the amount setting button image 45a, the amount for the number of persons to which the food is provided increases. When the finger contacts the amount setting button image 45b, the amount for the number of persons to which the food is provided decreases. Thus, the amount is adjusted and set by operating the amount setting button images 45a and 45b. When the finger contacts the finishing adjustment slider 46 to move the finishing adjustment slider 46 to the right, strong setting is realized, that is, the heating time is increased, or the heating power is increased. When the finger contacts the finishing adjustment slider 46 to move the finishing adjustment slider 46 to the left, weak setting is realized, that is, the heating time is decreased, or the heating power is decreased. After these settings, the heating is started by pushing the heating start button 7 shown in Fig. 1.

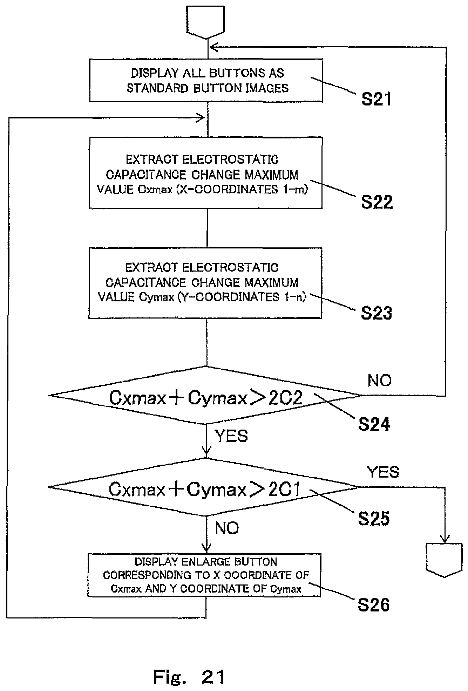

Next, the flow of the operations performed after the finger 27 of the user contacts the portion of the automatic menu button image 40 on the liquid crystal touch panel 10 shown in Fig. 17 is shown in Fig. 21. Fig. 21 is a flow chart showing one example of the input accepting operation of the liquid crystal touch panel included in the microwave oven according to Example 3. In Fig. 21, when the contact of the finger 27 of the user with the portion of the automatic menu button image 40 is detected, the display control portion 31 causes the liquid crystal touch panel 10 to display the standard button images in Step S21. Then, the process proceeds to Step S22. The display at this time is shown in Fig. 18. Next, in Step S22, the proximity detector portion 30 detects the electrostatic capacitance changes Cx1 to Cxm of a plurality of (m) X-direction sensor electrodes 25 shown in Fig. 4 and then extracts a maximum value as an electrostatic capacitance change Cxmax from the electrostatic capacitance changes Cx1 to Cxm. Then, the process proceeds to Step S23. Next, in Step S23, the proximity detector portion 30 detects the electrostatic capacitance changes Cyl to Cyn of a plurality of (n) Y-direction sensor electrodes 26 shown in Fig. 4 and then extracts a maximum value as an electrostatic capacitance change Cymax from the electrostatic capacitance changes Cyl to Cyn. Then, the process proceeds to Step S24.

In Step S24, the proximity detector portion 30 adds the electrostatic capacitance changes Cxmax and Cymax respectively extracted in Steps S22 and S23. Then, the proximity detector portion 30 determines whether or not the calculation result is larger than the value that is twice the change amount C2 shown in Fig. 5 (Step S24). In a case where the proximity detector portion 30 determines that the sum of the electrostatic capacitance changes Cxmax and Cymax is larger than the value that is twice the change amount C2 ("YES" in Step S24), the process proceeds to Step S25. In contrast, in a case where the proximity detector portion 30 determines that the above-described sum is not larger than the value that is twice the change amount C2 ("NO" in Step S24), it is determined that a part of the human body, such as the finger 27 of the user, does not contact the liquid crystal touch panel 10. Thus, the process returns to Step S21, and the above operations are repeated. In the microwave oven 1 according to Example 3, whether or not an average of the electrostatic capacitance changes Cxmax and Cymax has exceeded the change amount C2 is used to determine whether or not the finger 27 or the like has gotten close to the button image. However, in an actual calculation, whether or not the finger 27 or the like has gotten close to the button image is determined based on whether or not the sum of the electrostatic capacitance changes Cxmax and Cymax is larger than the value that is twice the change amount C2.

Next, in Step S25, the contact detector portion 29 adds the electrostatic capacitance changes Cxmax and Cymax respectively extracted in Steps S22 and S23. Then, the contact detector portion 29 determines whether or not the calculation result is larger than the value that is twice the change amount C1 shown in Fig. 5. In a case where the contact detector portion 29 determines that the calculation result is larger than the value that is twice the change amount Cl, the contact detector portion 29 determines that the finger 27 of the user or the like has contacted the liquid crystal touch panel 10. Thus, the process terminates, and the screen image is changed into the detail setting screen image shown in Fig. 20. In contrast, in a case where the contact detector portion 29 determines in Step S25 that the calculation result is not larger than the value that is twice the change amount Cl, the contact detector portion 29 determines that the finger 27 of the user or the like does not contact the liquid crystal touch panel 10. To be specific, based on the result of the determination by the proximity detector portion 30 in Step S24 and the result of the determination by the contact detector portion 29 in Step S25, it is determined that a part of the human body, such as the finger 27 of the user, does not contact the liquid crystal touch panel 10 but has gotten close to the liquid crystal touch panel 10. Here, the proximity detector portion 30 outputs the detected proximity position coordinates (the x-coordinate where the electrostatic capacitance change Cxmax has been generated and the y-coordinate where the electrostatic capacitance change Cymax has been generated) to the display control portion 31. Then, the process proceeds to Step S26.

In Step S26, the display changing portion 34 extracts from the enlarge button image storage portion 33 the enlarge button image 43 corresponding to the standard button image displayed at the position indicated by the x-coordinate where the electrostatic capacitance change Cxmax has been generated and the y-coordinate where the electrostatic capacitance change Cymax has been generated. Then, the display changing portion 34 causes the color liquid crystal display unit 1 1 of the liquid crystal touch panel 10 to perform the display based on the extracted enlarge button image 43. Thus, the enlarge button image 43 is displayed on the liquid crystal touch panel 10. Then, the process returns to Step S2, and the above operations are repeated. With this, if the proximity state continues, the display of the enlarge button continues, and if the proximity state is canceled, the enlarge button image disappears.

According to the microwave oven 1 of Example 3, when displaying the automatic menu button group 41 of the automatic cooking menu, the list of a large number of standard button images stored in the standard button image storage portion 32 is normally displayed on the liquid crystal touch panel 10. Then, when the finger 27 or the like gets close to any one of the standard button images, the proximity detector portion 30 detects the proximity of the finger 27. When the proximity detector portion 30 detects the proximity as above, the display changing portion 34 of the display control portion 31 reads out from the enlarge button image storage portion 33 the enlarge button image 43 associated with the standard button image located at the proximity position coordinates to which the finger 27 or the like has gotten close. Then, the display changing portion 34 changes the standard button image into the enlarge button image 43 to display the enlarge button image 43 on the color liquid crystal display unit 11. Since the enlarge button image 43 includes the picture of the finished food item, easy-to-understand display can be realized to prevent the user from mistakenly making selections and determinations.

### Modification Example 1 of Example 3

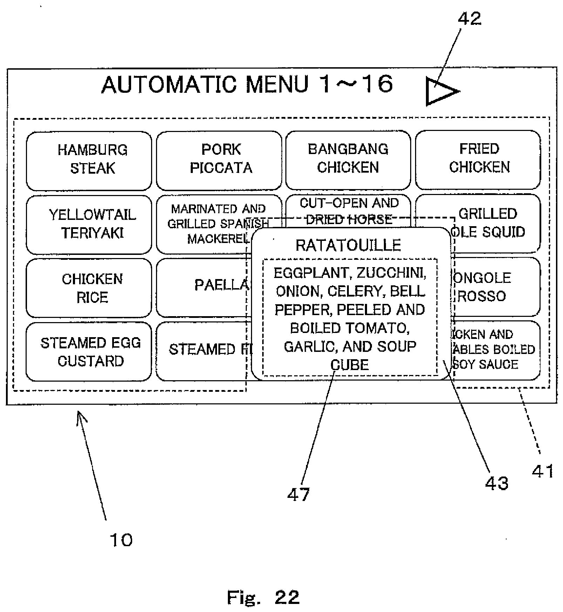

Next, Modification Example 1 of Example 3 will be explained. Modification Example 1 of Example 3 is the same as Example 3 regarding the components shown in Figs. 16 to 18, so that a repetition of the same explanation is avoided. The display state of the liquid crystal touch panel 10 when a part of the human body, such as the finger 27 of the user, has gotten close to the "ratatouille" button image in the automatic menu button group 41 in a state where the selection screen image of the automatic menu shown in Fig. 18 is displayed on the liquid crystal touch panel 10 is shown in Fig. 22. Fig. 22 is a diagram showing one example of the selection screen image of the automatic cooking menu displayed on the liquid crystal touch panel according to Example 3.

As shown in Fig. 22, a large number of standard button images stored in the standard button image storage portion 32 are displayed in the automatic menu button group 41. Among these standard button images, only the food item "ratatouille" to which the finger has gotten close is displayed as the enlarge button image 43. In the enlarge button image 43, the food item name "ratatouille" and the ingredients as the detail information 47 regarding the ratatouille are displayed. To be specific, in Example 3, the enlarge button image 43 includes the name of the food item and the image information 44 (the picture of the finished food item). Modification Example 1 of Example 3 is different from Example 3 in that the enlarge button image 43 includes the name of the food item and the detail information 47 regarding the food item.

By displaying the detail information 47 as above, the user can clearly understand the food item, so that it is possible to prevent the user from mistakenly making selections. Depending on the screen image resolution of the color liquid crystal display unit 11, it may be difficult to understand the contents of the food item based on the image information 44, such as the picture of the finished food item, as in the microwave oven 1 of Example 3. In such a case, displaying the detail information 47, such as the ingredients, by character information as in Modification Example 1 of Example 3 is easy to understand, so that it is possible to effectively prevent the user from mistakenly making selections.

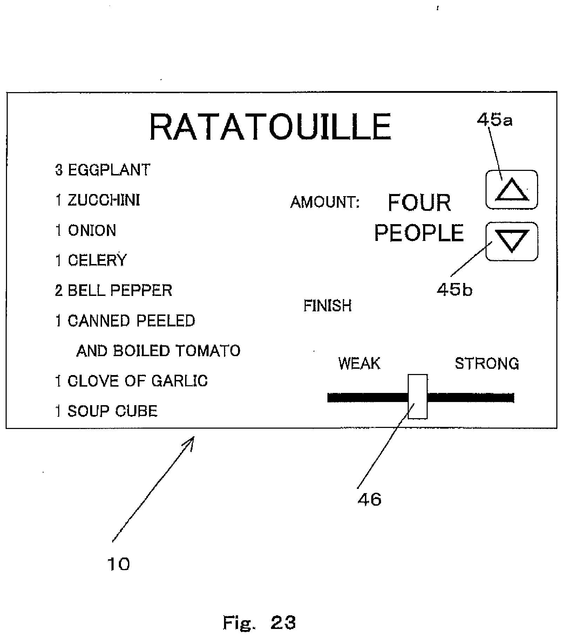

When the finger 27 of the user contacts the enlarge button image 43 on the display shown in Fig. 22, the display screen image on the liquid crystal touch panel 10 is changed into the detail setting screen image shown in Fig. 23. Fig. 23 is a diagram showing one example of the detail setting screen image of the automatic cooking menu displayed on the liquid crystal touch panel according to Modification Example 1 of Example 3. Depending on the screen image resolution of the color liquid crystal display unit 11, it may be difficult to see and recognize the image information 44, such as a picture, on the detail setting screen image. In such a case, as in the microwave oven 1 according to Modification Example 1 of Example 3, the detail information 47 showing the ingredients and the amounts is displayed together with the food item instead of the image information 44, such as a picture. Further, when the finger 27 of the user contacts the amount setting button image 45a or 45b to increase or decrease the amounts, the amount of each ingredient displayed as the detail information 47 is changed in accordance with the above increase or decrease. Thus, the convenience improves.

As above, according to the microwave oven 1 of Modification Example 1 of Example 3, the list of a large number of standard button images stored in the standard button image storage portion 32 is normally displayed in, for example, the basic menu screen image displayed on the liquid crystal touch panel 10. Then, when the finger 27 of the user gets close to any one of the standard button images, the proximity detector portion 30 detects the proximity of the finger 27. The display control portion 31 changes the standard button image, where the proximity of the finger 27 of the user is detected, into the enlarge button image 43 associated with this standard button image to display the enlarge button image 43 on the liquid crystal touch panel 10. Since the enlarge button image 43 displayed at this time includes the detail information 47, such as the ingredients, regarding the food item included in the automatic cooking menu, easy-to-understand display can be realized to prevent the user from mistakenly making selections and determinations.

In Example 3 and Modification Example 1 of Example 3, the standard button images, such as the warm-up button image 35, the heat-up button image 36, the steam button image 37, the oven button image 38, the grill button image 39, and the automatic menu button image 40, displayed in the basic menu screen image shown in Fig. 17 are stored in the standard button image storage portion 32. Example 3 and Modification Example 1 of Example 3 has been explained on the basis that the enlarge button images 43 respectively corresponding to the standard button images are not prepared. To be specific, since the number of standard button images displayed in the screen image is small, an adequately large number of display pixels can be secured, so that the enlarge button images 43 are not prepared. However, each of Example 3 and Modification Example 1 of Example 3 may be configured such that: for ease of understanding, the enlarge button images 43 respectively corresponding to the standard button images and each having a larger number of pixels are prepared; and when the proximity of the finger 27 or the like is detected, the standard button image is changed into the enlarge button image 43.

Similarly, each of the page turn button image 42 and the amount setting button images 45a and 45b may be changed into the enlarge button when the proximity has been detected.

The microwave oven 1 according to Example 3 is configured such that the enlarge button image 43 includes the image information 44, such as a picture, and the microwave oven 1 according to Modification Example 1 of Example 3 is configured such that the enlarge button image 43 includes the detail information 47, such as the ingredients. Which of these enlarge button images 43 is preferable depends on each user, so that the microwave oven 1 may be configured such that the user can switch and select any of the enlarge button images 43 depending on the user's preference.

As above, the microwave oven 1 according to Example 3 may have the following configuration.

A first heat cooking device according to Example 3 includes: a heater portion configured to heat food; a heating control portion configured to control the heater portion; a display portion configured to display information regarding heat cooking of the food; a touch panel formed integrally with the display portion and configured to be operated by a user for making selections based on display of the display portion; and an operation display control portion configured to control the display of the display portion based on input from the touch panel. The operation display control portion includes: a proximity detector portion configured to detect proximity of a part of a human body to the touch panel; a contact detector portion configured to detect contact of a part of the human body with the touch panel; and a display control portion configured to control the display of the display portion based on input from the proximity detector portion and input from the contact detector portion. The display control portion includes: a standard button image storage portion configured to store standard button images of a cooking menu; an enlarge button image storage portion configured to store enlarge button images larger than the standard button images; and a display changing portion configured to change the standard button image into the enlarge button image based on the input from the proximity detector portion when a part of the human body has gotten close to the standard button image while the standard button images are displayed. The enlarge button images stored in the enlarge button image storage portion respectively include at least image information of the finished food.

With this, the list of a large number of standard button images stored in the standard button image storage portion is normally displayed on the display portion. When a part of the human body gets close to any one of the standard button images, the proximity detector portion detects the proximity, and the display control portion changes the standard button image, where the proximity has been detected, into the enlarge button image stored in the enlarge button image storage portion to display the enlarge button image. Since the enlarge button image includes the image information regarding the finished food, the perspicuity can be improved by displaying a large number of standard button images on the display portion, and easy-to-understand display can be realized by displaying the button, where the proximity has been detected, as the enlarge button image to prevent the user from mistakenly making selections and determinations.

A second heat cooking device according to Example 3 includes: a heater portion configured to heat food; a heating control portion configured to control the heater portion; a display portion configured to display information regarding heat cooking of the food; a touch panel formed integrally with the display portion and configured to be operated by a user for making selections based on display of the display portion; and an operation display control portion configured to control the display of the display portion based on input from the touch panel. The operation display control portion includes: a proximity detector portion configured to detect proximity of a part of a human body to the touch panel; a contact detector portion configured to detect contact of a part of the human body with the touch panel; and a display control portion configured to control the display of the display portion based on input from the proximity detector portion and input from the contact detector portion. The display control portion includes: a standard button image storage portion configured to store standard button images of a cooking menu (the automatic cooking menu, the automatic menu); an enlarge button image storage portion configured to store enlarge button images larger than the standard button images; and a display changing portion configured to change the standard button image into the enlarge button image based on the input from the proximity detector portion when a part of the human body has gotten close to the standard button image while the standard button images are displayed. The enlarge button images stored in the enlarge button image storage portion respectively include at least detail information regarding the cooking menu.

With this, the list of a large number of standard button images stored in the standard button image storage portion is normally displayed on the display portion. When a part of the human body gets close to any one of the standard button images, the proximity detector portion detects the proximity, and the display control portion changes the standard button image, where the proximity has been detected, into the enlarge button image stored in the enlarge button image storage portion to display the enlarge button image. Since the enlarge button image includes the detail information regarding the cooking menu, the perspicuity can be improved by displaying a large number of standard button images on the display portion, and easy-to-understand display can be realized by displaying the button, where the proximity has been detected, as the enlarge button image to prevent the user from mistakenly making selections and determinations.

Therefore, Example 3 of the embodiment of the present invention has effects of: improving the perspicuity by displaying a large number of menu buttons on the display panel; and realizing easy-to-understand display to prevent the user from mistakenly making selections and determinations.

For example, the heat cooking device (microwave oven 1) according to Example 3 can be utilized as below.

To be specific, in Example 3, the list of a large number of standard button images stored in the standard button image storage portion is normally displayed on the display portion. Then, when a part of the human body gets close to any one of the standard button images, the proximity detector portion detects the proximity, and the display control portion changes the standard button image, where the proximity has been detected, into the enlarge button image stored in the enlarge button image storage portion to display the enlarge button image. Since the enlarge button image includes the image information regarding the finished food or the detail information, the perspicuity can be improved by displaying a large number of standard button images on the display portion. Further, to prevent the user from mistakenly making selections and determinations, easy-to-understand display can be realized by changing the standard button image, to which the hand of the user has gotten close, into the enlarge button image. Therefore, Example 3 is applicable to cooking devices, such as rice cookers and induction heating cooking devices, in addition to microwave ovens.

### Example 4

Next, the following will explain, as Example 4, the microwave oven 1 configured such that the usability thereof is improved by allowing the user to quickly, easily reaching the desired food item on the liquid crystal touch panel 10 without performing a back operation,

In the microwave oven 1 according to Example 4, the configuration of determining that the proximity detection is enabled or disabled is not described. However, the microwave oven 1 according to Example 4 can be combined with the components of the microwave oven 1 according to Example 1 or 2.

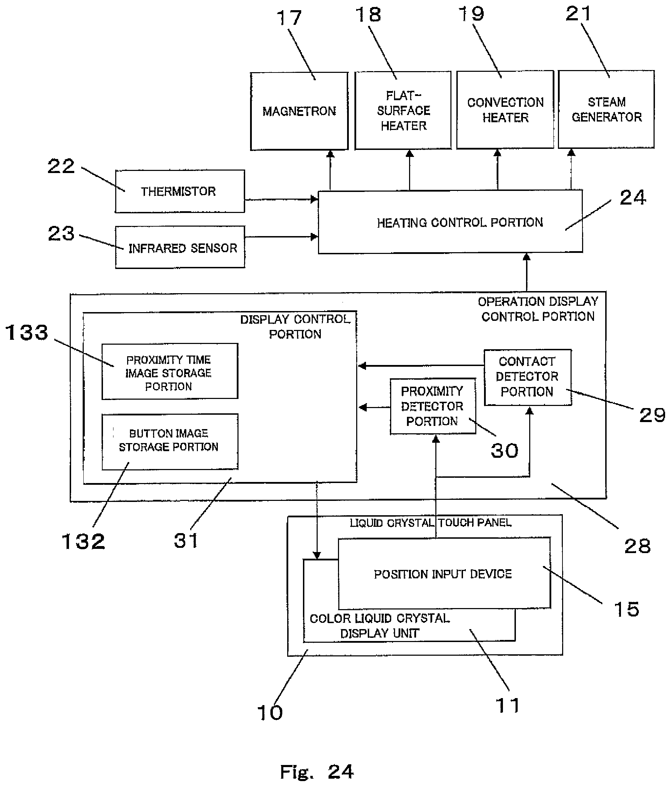

First, the control of the color liquid crystal display unit 11 and the position input device 15 in the liquid crystal touch panel 10 will be explained in reference to the control block diagram of Fig. 24. Fig. 24 is a block diagram showing one example of the configuration of major portions of the microwave oven 1 according to Example 4 of the embodiment. As shown in Fig. 24, the microwave oven 1 includes the heating control portion 24 and the operation display control portion 28. The operation display control portion 28 controls the display of the color liquid crystal display unit 11 based on a signal from the position input device 15 and transmits to the heating control portion 24 a signal corresponding to the input from the user. When the heating control portion 24 accepts the signal from the operation display control portion 28, the heating control portion 24 controls the magnetron 17, the flat-surface heater 18, the convection heater 19, and the steam generator 21 that are the heating members in accordance with the temperature detected by the thermistor 22 or the infrared sensor 23 as described above. The heating control portion 24 may be configured to control the operation amount of the circulating fan 20, not shown in Fig. 24.

As shown in Fig. 24, the operation display control portion 28 includes: the contact detector portion 29 configured to detect the contact of a part of the human body, such as the finger 27, with the liquid crystal touch panel 10; the proximity detector portion 30 configured to detect the proximity of a part of the human body, such as the finger 27, to the liquid crystal touch panel 10; and the display control portion 31 configured to control the display of the color liquid crystal display unit 11.

The configurations of the contact detector portion 29 and the proximity detector portion 30 are the same as those of the contact detector portion 29 and the proximity detector portion 30 included in the microwave oven 1 according to Example 1, so that explanations thereof are omitted.

The display control portion 31 controls the display of the color liquid crystal display unit 11 in accordance with the contact position coordinates input from the contact detector portion 29 or the proximity position coordinates input from the proximity detector portion 30. Example 4 is different from Example 1 in that instead of the standard button image storage portion 32 and the enlarge button image storage portion 33 included in the display control portion 31 of the microwave oven 1 according to Example 1, the display control portion 31 according to Example 4 includes a button image storage portion 132 and a proximity time image storage portion 133. Further, Example 4 is different from Example 1 in that the display control portion 31 according to Example 1 includes the display changing portion 34 whereas the display control portion 31 according to Example 4 does not include the display changing portion 34. The button image storage portion 132 stores a plurality of button images, and the plurality of button images includes button images, such as "steamed food/boiled food" and "grilled fish", showing characters indicating categories of the food items in the automatic cooking menu.

The proximity time image storage portion 133 stores images (proximity time images 66) each displayed in the vicinity of the button image located at the proximity position coordinates when the proximity detector portion 30 has detected the proximity of a part of the human body, such as the finger 27. Specifically, the proximity time image storage portion 133 stores the images showing characters indicating the food items such that those images are respectively associated with the button images stored in the button image storage portion 132 and showing the characters indicating the categories.

Next, the operations of the operation display control portion 28 will be explained in reference to the drawing showing the display example of the liquid crystal touch panel 10. Specifically, the operations of the operation display control portion 28 will be explained in reference to Fig. 17 explained in Example 3. The basic menu screen image displays the warm-up button image 35, the heat-up button image 36, the steam button image 37, the oven button image 38, the grill button image 39, and the automatic menu button image 40. These button images displayed in the basic menu screen image are stored in the button image storage portion 132. The button images displayed in the basic menu screen image are read out from the button image storage portion 132 by the display control portion 31, for example, after the microwave oven is turned on, and then displayed as the basic menu screen image on the color liquid crystal display unit 11.

When the finger 27 contacts the position of any one of the button images displayed on the liquid crystal touch panel 10, the screen image is changed into a next screen image for making detailed settings. To be specific, when the finger 27 contacts, for example, the warm-up button image 35 among the button images of the basic menu screen image displayed on the liquid crystal touch panel 10, the screen image is changed into a setting screen image of the heating finishing temperature. When the finger 27 contacts the heat-up button image 36, the screen image is changed into a setting screen image of a heating power (watt) and a heating time. When the finger 27 contacts the steam button image 37, the screen image is changed into a setting screen image of a heating time. The steam heating is used to perform steam cooking by the combination of steam, microwaves, and heating by the flat-surface heater 18. When the finger 27 contacts the oven button image 38, the screen image is changed into a setting screen image of a heating temperature and a heating time. When the finger 27 contacts the grill button image 39, the screen image is changed into a screen image for selecting one-side grill or double-sided grill and setting a heating time. When the finger 27 contacts the automatic menu button image 40, the screen image is changed into a category selection screen image of the automatic cooking menu (automatic menu).

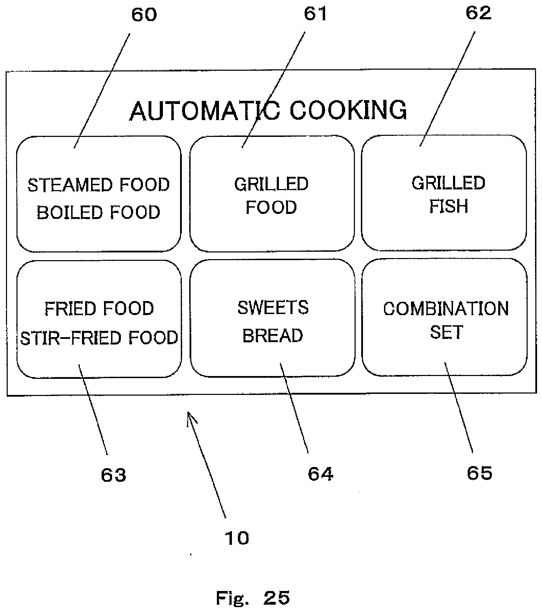

Fig. 25 shows a state where the category selection screen image of the automatic cooking menu is displayed on the liquid crystal touch panel 10. Fig. 25 is a diagram showing one example of the category selection screen image of the automatic cooking menu displayed on the liquid crystal touch panel 10 according to Example 4. The category selection screen image displays a steamed food/boiled food button image 60, a grilled food button image 61, a grilled fish button image 62, a fried food/stir-fried food button image 63, a sweets/bread button image 64, and a combination set button image 65. These button images are stored in the button image storage portion 132.

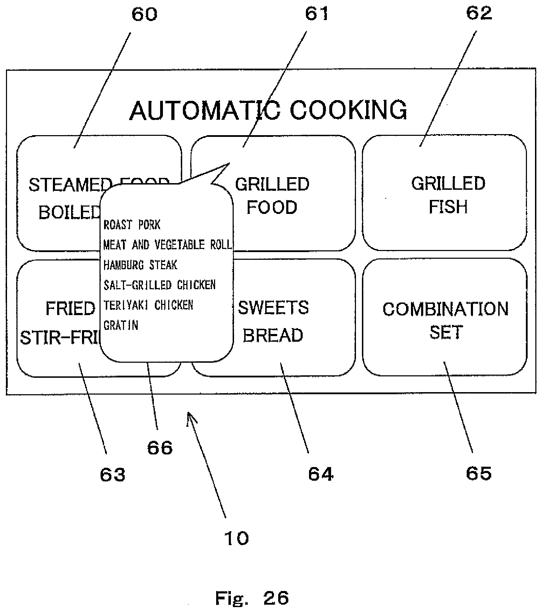

Next, the following will explain a case where the finger 27 of the user is about to contact the liquid crystal touch panel 10, to be specific, a case where the finger 27 of the user has gotten close to the liquid crystal touch panel 10 in a state where the category selection screen image of the automatic cooking menu is being displayed. When the proximity detector portion 30 detects the proximity of a part of the human body, such as the finger 27 of the user, to the liquid crystal touch panel 10, the proximity detector portion 30 outputs the proximity position coordinates as the detection result to the display control portion 31. Based on the proximity position coordinates input from the proximity detector portion 30, the display control portion 31 extracts from the proximity time image storage portion 133 the proximity time image 66 associated with the button image located at the position to which the finger 27 of the user or the like has gotten close. Then, the display control portion 31 displays the proximity time image 66 in the vicinity of the button image located at the position to which the finger 27 or the like has gotten close. For example, the display state of the liquid crystal touch panel 10 when the finger 27 has gotten close to the grilled food button image 61 of the category selection screen image of Fig. 25 is shown in Fig. 26. Fig. 26 is a diagram showing one example of the category selection screen image of the automatic cooking menu displayed on the liquid crystal touch panel 10 according to Example 4.

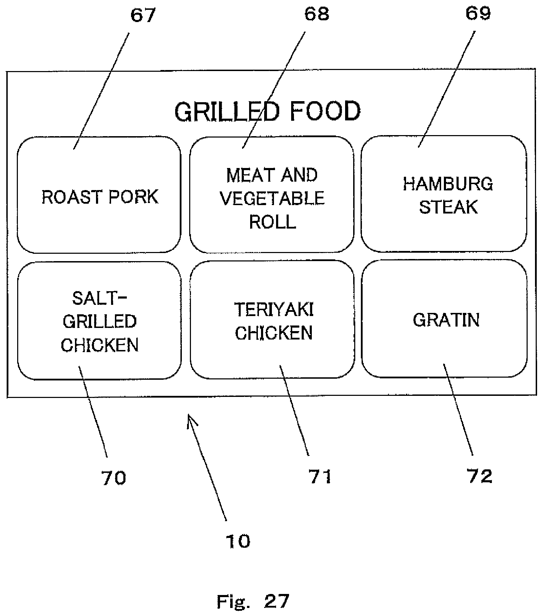

The button images displayed in the category selection screen image of the automatic cooking menu shown in Fig. 26 are displayed in the same manner as those of the category selection screen image of the automatic cooking menu shown in Fig. 25. To be specific, the button images are stored in the button image storage portion 132 so as to be each associated with the position coordinates on the liquid crystal touch panel 10 and the category selection screen image. Then, the proximity time image 66 showing roast pork, meat and vegetable roll, hamburg steak, salt-grilled chicken, teriyaki chicken, and gratin that are the food items belonging to the grilled food category is displayed next to the grilled food button image 61, to which the finger 27 of the user has gotten close, so as to overlap the category selection screen image. Then, when the finger 27 contacts the displayed position of the grilled food button image 61 on the liquid crystal touch panel 10, the screen image is changed into a cooking menu selection screen image of the grilled food category as shown in, for example, Fig. 27. Fig. 27 is a diagram showing one example of the cooking menu selection screen image of the grilled food category, the cooking menu selection screen image being displayed on the liquid crystal touch panel 10 according to Example 4.

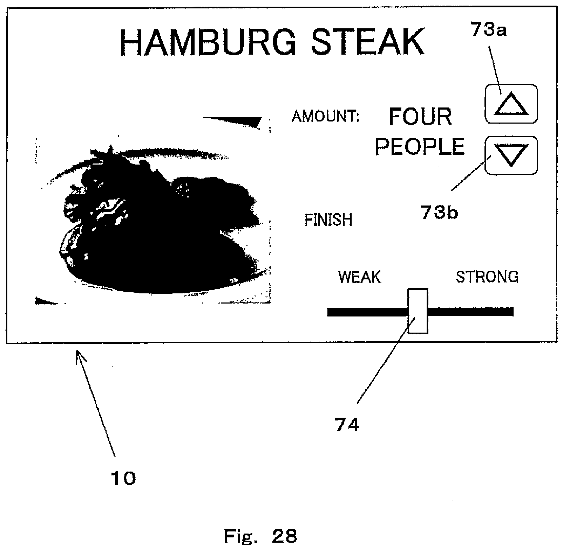

Fig. 27 shows the cooking menu selection screen image of the grilled food category. As shown in Fig. 27, the cooking menu selection screen image of the grilled food category displays a roast pork button image 67, a meat and vegetable roll button image 68, a hamburg steak button image 69, a salt-grilled chicken button image 70, a teriyaki chicken button image 71, and a gratin button image 72. The button images are stored in the button image storage portion 132 so as to be each associated with the position coordinates on the liquid crystal touch panel 10 and the cooking menu selection screen image of the grilled food category. When the finger 27 contacts the position of any one of the button images in a state where the cooking menu selection screen image is being displayed on the liquid crystal touch panel 10, the screen image is changed into a detail selection screen image of the food item shown by the button image (see Fig. 28).

Fig. 28 shows a display example of the detail setting screen image of the food item on the liquid crystal touch panel 10. The detail setting screen image of the "hamburg steak" will be explained as an example. In addition to the food item and the picture of the finished food item, the detail setting screen image includes amount setting button images 73a and 73b and a finishing adjustment slider 74. Regarding the amount setting, the amount for the number of persons to which the food is provided can be set. When the finger contacts the amount setting button image 73 a, the amount for the number of persons to which the food is provided increases. When the finger contacts the amount setting button image 73b, the amount for the number of persons to which the food is provided decreases. Thus, the amount is set by operating the amount setting button images 73a and 73b. When the finger contacts the finishing adjustment slider 74 to move the finishing adjustment slider 74 to the right, strong setting is realized, that is, the heating time is increased, or the heating power is increased. When the finger contacts the finishing adjustment slider 74 to move the finishing adjustment slider 74 to the left, weak setting is realized, that is, the heating time is decreased, or the heating power is decreased. After these settings, the heating is started by pushing the heating start button 7 shown in Fig. 1.

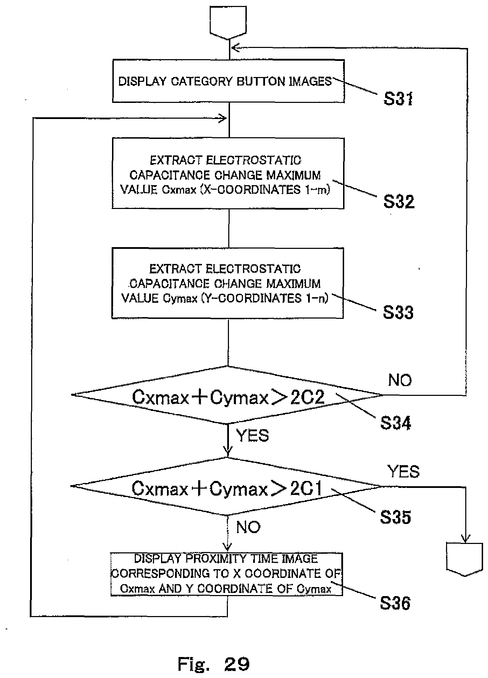

The flow of the operations performed after the finger 27 of the user contacts the portion of the automatic menu button image 40 on the liquid crystal touch panel 10 shown in Fig. 17 of Example 3 is shown in Fig. 29. Fig. 29 is a flow chart showing one example of the input accepting operation of the liquid crystal touch panel 10 included in the microwave oven 1 according to Example 4. In Fig. 29, when the contact of the finger 27 of the user with the portion of the automatic menu button image 40 is detected, the display control portion 31 causes the liquid crystal touch panel 10 to display the button images of the category selection screen image of the automatic cooking menu in Step S31. Then, the process proceeds to Step S32. The display at this time is shown in Fig. 25. Next, in Step S32, the proximity detector portion 30 detects the electrostatic capacitance changes Cxl to Cxm of a plurality of (m) X-direction sensor electrodes 25 shown in Fig. 4 and then extracts a maximum value as an electrostatic capacitance change Cxmax from the electrostatic capacitance changes Cx1 to Cxm. Then, the process proceeds to Step S33. Next, in Step S33, the proximity detector portion 30 detects the electrostatic capacitance changes Cyl to Cyn of a plurality of (n) Y-direction sensor electrodes 26 shown in Fig. 4 and then extracts a maximum value as an electrostatic capacitance change Cymax from the electrostatic capacitance changes Cyl to Cyn. Then, the process proceeds to Step S34.

In Step S34, the proximity detector portion 30 adds the electrostatic capacitance changes Cxmax and Cymax respectively extracted in Steps S32 and S33. Then, the proximity detector portion 30 determines whether or not the calculation result is larger than the value that is twice the change amount C2 shown in Fig. 5 (Step S34). In a case where the proximity detector portion 30 determines that the sum of the electrostatic capacitance changes Cxmax and Cymax is larger than the value that is twice the change amount C2 ("YES" in Step S34), the process proceeds to Step S35. In contrast, in a case where the proximity detector portion 30 determines that the above-described sum is not larger than the value that is twice the change amount C2 ("NO" in Step S34), it is determined that a part of the human body, such as the finger 27 of the user, does not contact or get close to the liquid crystal touch panel 10. Thus, the process returns to Step S31, and the above operations are repeated.

Next, in Step S35, the contact detector portion 29 adds the electrostatic capacitance changes Cxmax and Cymax respectively extracted in Steps S32 and S33. Then, the contact detector portion 29 determines whether or not the calculation result is larger than the value that is twice the change amount C1 shown in Fig. 5. In a case where the contact detector portion 29 determines that the calculation result is larger than the value that is twice the change amount Cl, the contact detector portion 29 determines that the finger 27 of the user or the like has contacted the liquid crystal touch panel 10. Thus, the process terminates, and the screen image is changed into the cooking menu selection screen image shown in Fig. 27. In contrast, in a case where the contact detector portion 29 determines in Step S35 that the calculation result is not larger than the value that is twice the change amount Cl, the contact detector portion 29 determines that the finger 27 of the user or the like does not contact the liquid crystal touch panel 10. To be specific, based on the result of the determination by the proximity detector portion 30 in Step S34 and the result of the determination by the contact detector portion 29 in Step S35, it is determined that a part of the human body, such as the finger 27 of the user, does not contact the liquid crystal touch panel 10 but has gotten close to the liquid crystal touch panel 10. Here, the proximity detector portion 30 outputs the detected proximity position coordinates (the x-coordinate where the electrostatic capacitance change Cxmax has been generated and the y-coordinate where the electrostatic capacitance change Cymax has been generated) to the display control portion 31. Then, the process proceeds to Step S36.

In Step S36, the display control portion 31 extracts from the proximity time image storage portion 133 the proximity time image 66 corresponding to the button image displayed at the position indicated by the x-coordinate and the y-coordinate where the electrostatic capacitance changes Cxmax and Cymax have been generated. Then, the display control portion 31 causes the color liquid crystal display unit 11 of the liquid crystal touch panel 10 to perform the display based on the extracted proximity time image 66. Thus, the display control portion 31 can display the proximity time image 66 in the vicinity of the button image displayed at the position where the proximity of the finger 27 of the user or the like has been detected. The display state at this time is shown in Fig. 26. In the example of Fig. 9, the proximity time image 66 shows the food items belonging to the grilled food category of the cooking menu. Then, the process returns to Step S32, and the above operations are repeated. With this, if the proximity state continues, the display of the proximity time image 66 continues, and if the proximity state is canceled, the proximity time image 66 disappears.

As described above, according to the microwave oven 1 of Example 4, when the finger 27 or the like gets close to any one of the button images in a state where the button images showing a plurality of categories are displayed in the liquid crystal touch panel 10, the proximity detector portion 30 detects the proximity. When the proximity detector portion 30 detects the proximity as above, the display control portion 31 extracts from the proximity time image storage portion 133 the proximity time image 66, associated with the button image located at the proximity position coordinates to which the finger 27 or the like has gotten close, to display the proximity time image 66. Since the proximity time image can be displayed by the proximity of the finger 27, it is possible to prevent the user from selecting a wrong category in the automatic cooking menu, so that the usability improves.

The foregoing has been explained on the basis that: the button images, such as the warm-up button image 35, the heat-up button image 36, the steam button image 37, the oven button image 38, the grill button image 39, and the automatic menu button image 40, displayed in the basic menu screen image of Fig. 17 are stored in the button image storage portion 132; and the proximity time images 66 corresponding to these button images are not prepared. To be specific, unlike the button images in the category selection screen image of the automatic cooking menu, it is not difficult to understand the button images displayed in the basic menu screen image. Therefore, the foregoing has explained the configuration that does not require the proximity time images 66 respectively corresponding to the button images. However, to facilitate understanding of the button images displayed in the basic menu screen image, the proximity time images 66 that respectively correspond to the button images and each shows the contents of the screen image to be displayed next are prepared. Then, the prepared proximity time image 66 may be displayed when the finger 27 of the user or the like has gotten close to the position of the button image.

Similarly, the foregoing has explained a case where the button images of the food items shown in Fig. 27 are stored in the button image storage portion 132, and the proximity time images 66 corresponding to these button images are not prepared. However, to facilitate understanding of the button images of the food items, the proximity time images 66 that respectively correspond to the button images and each shows the contents of the screen image to be displayed next or the proximity time images 66 that respectively correspond to the button images and show the pictures of the finished food items are prepared. Then, the prepared proximity time image 66 may be displayed when the finger 27 of the user or the like has gotten close to the displayed position of the button image.

The proximity time images 66 may be rather annoying for the users who have gotten used to the microwave oven 1. Therefore, the microwave oven 1 may further include a selecting portion configured to select whether to display the proximity time image 66.

As above, the microwave oven 1 according to Example 4 may have the following configuration.

A first heat cooking device according to Example 4 includes: a heater portion configured to heat food; a heating control portion configured to control the heater portion; a display portion configured to display information regarding heat cooking of the food; a touch panel formed integrally with the display portion and configured to be operated by a user for making selections; a proximity detector portion configured to detect proximity of a part of a human body to the touch panel; a contact detector portion configured to detect contact of a part of the human body with the touch panel; and a display control portion configured to control display of the display portion based on input from the proximity detector portion and input from the contact detector portion. The display control portion includes: a button image storage portion configured to store button images of a cooking menu; and a proximity time image storage portion configured to store proximity time images that respectively correspond to the button images and are displayed when the proximity has been detected. The proximity time image is displayed in the vicinity of the button image by the input from the proximity detector portion when a part of the human body has gotten close to the button image while the button images are being displayed. The button images are images respectively showing categories of the cooking menu, and each of the proximity time images includes the cooking menu assigned to the button of the corresponding button image.

With this configuration, the list of the button images respectively showing the categories of a plurality of cooking menus stored in the button image storage portion is normally displayed on the display portion. When a part of the human body gets close to any one of the button images, the proximity detector portion detects the proximity. The display control portion displays the proximity time image in the vicinity of the button image to which a part of the human body has gotten close, the proximity time image corresponding to this button image, being stored in the proximity time image storage portion, and including the cooking menu. With this, before the user contacts the button image of the category, the user can understand the cooking menu corresponding to the category. Therefore, the user is prevented from selecting a wrong category and can reach and select a desired menu more quickly and easily. Thus, the usability improves.

According to Example 4 of the embodiment of the present invention, before the user contacts the button image of the category when selecting the cooking menu, the user can understand the cooking menu corresponding to the category. Therefore, Example 4 of the embodiment of the present invention has an effect of improving the usability, that is, preventing the user from selecting a wrong category and allowing the user to reach and select a desired menu more quickly and easily.

For example, the heat cooking device (microwave oven 1) according to Example 4 can be utilized as below.

To be specific, in Example 4, the list of a plurality of button images stored in the button image storage portion and respectively showing the categories of the cooking menu is normally displayed on the display portion. When a part of the human body gets close to any one of the button images, the proximity detector portion detects the proximity. The display control portion displays the proximity time image in the vicinity of the button image to which a part of the human body has gotten close, the proximity time image corresponding to this button image and being stored in the proximity time image storage portion. With this, before the user contacts the button image of the category, the user can understand the food items corresponding to the category. Therefore, the user is prevented from selecting a wrong category and can select the desired food item more quickly and easily. On this account, Example 4 is applicable to cooking devices, such as rice cookers and induction heating cooking devices, in addition to microwave ovens.

### Example 5

Next, the following will explain, as Example 5, the microwave oven 1 configured such that the operability thereof is improved by allowing the user to perform input to the liquid crystal touch panel 10 by hands with thick gloves, such as mittens.

In the microwave oven 1 according to Example 5, the configuration of determining that the proximity detection is enabled or disabled is not described. However, the microwave oven 1 according to Example 5 can be combined with the components of the microwave oven 1 according to Example 1 or 2.

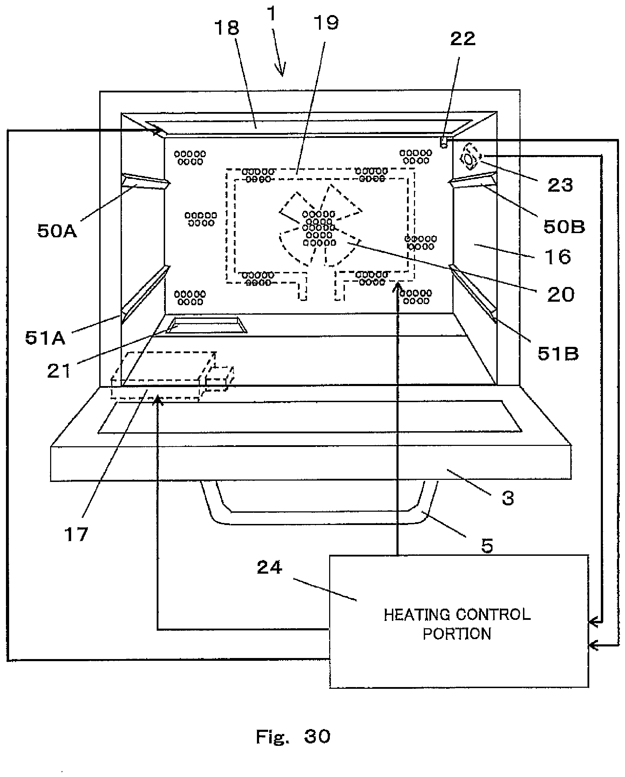

First, as shown in Fig. 30, the microwave oven 1 according to Example 5 is configured such that the microwave oven 1 shown in Fig. 3 further includes upper rails 50A and 50B and lower rails 51A and 51B. The upper rails 50A and 50B and the lower rails 51A and 51B are rails used to support a heat-proof dish or an oven dish in the heating chamber 16 when the food is placed on the dish to be heated. Other than these rails, the internal configuration of the microwave oven 1 is the same as above. Therefore, the same reference signs are used for the same members, and explanations thereof are omitted.

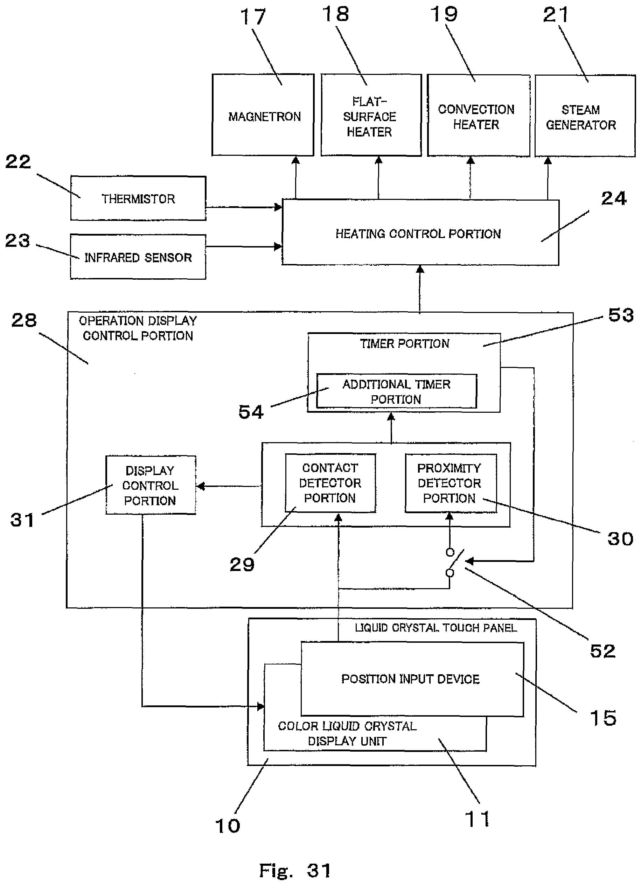

Next, a control operation of outputting a heating instruction to the heating control portion 24 in accordance with the input accepted by the liquid crystal touch panel 10 will be explained in reference to the control block diagram of Fig. 31. Fig. 31 is a block diagram showing one example of the configuration of major portions of the microwave oven 1 according to Example 5 of the embodiment. As shown in Fig. 31, the microwave oven 1 includes the heating control portion 24 and the operation display control portion 28. The operation display control portion 28 controls the display of the color liquid crystal display unit 11 based on a signal from the position input device 15 and transmits to the heating control portion 24 a signal corresponding to the input from the user. When the heating control portion 24 accepts the signal from the operation display control portion 28, the heating control portion 24 controls the magnetron 17, the flat-surface heater 18, the convection heater 19, and the steam generator 21 that are the heating members in accordance with the temperature detected by the thermistor 22 or the infrared sensor 23 as described above. The heating control portion 24 may be configured to control the operation amount of the circulating fan 20, not shown in Fig. 31.

As shown in Fig. 31, the operation display control portion 28 includes the contact detector portion 29, the proximity detector portion 30, a timer portion (state determining portion, permission determining portion) 53, the switching portion 52, and the display control portion 31. The contact detector portion 29 detects the contact of a part of the human body, such as the finger 27, with the liquid crystal touch panel 10. The proximity detector portion 30 detects the proximity of a part of the human body, such as the finger 27, to the liquid crystal touch panel 10.

The timer portion 53 sets and counts the heating time of the heating member in accordance with the contact or proximity of the finger 27 of the user or the like, the contact or proximity being detected by the contact detector portion 29 or the proximity detector portion 30.

At a time when the time set by the timer portion 53 elapses, the switching portion 52 switches from a state where the proximity detector portion 30 does not detect the proximity of the finger 27 or the like to the liquid crystal touch panel 10 to a state where the proximity detector portion 30 detects the proximity. To be specific, the switching portion 52 switches from a state where the proximity detector portion 30 does not accept the change amount of the electrostatic capacitance of the position input device 15 of the liquid crystal touch panel 10 to a state where the proximity detector portion 30 accepts the change amount.

The display control portion 31 controls the display of the color liquid crystal display unit 11 in accordance with the contact detection of the contact detector portion 29 or the proximity detection of the proximity detector portion 30. Further, the timer portion 53 includes an additional timer portion 54 configured to set and count an additional heating time after the timer portion 53 finishes counting the set time. With this configuration, the contact or proximity of the finger 27 or the like with or to the liquid crystal touch panel 10 is detected in such a manner that: until the set time elapses, only the contact detector portion 29 detects the contact with the liquid crystal touch panel 10; and after the set time elapses, the contact detector portion 29 detects the contact, and the proximity detector portion 30 detects the proximity.

The configurations of the contact detector portion 29 and the proximity detector portion 30 are the same as those of the contact detector portion 29 and the proximity detector portion 30 included in the microwave oven 1 according to Example 1, so that explanations thereof are omitted.

In a stop state (initial state), the timer portion 53 sets the heating time of the heating member in accordance with the input corresponding to the contact detection of the contact detector portion 29. More specifically, when the contact detector portion 29 detects the contact of the finger with the button image indicating the heating start on the liquid crystal touch panel 10, the timer portion 53 sets the heating time. Then, the operation display control portion 28 instructs the heating control portion 24 to perform heating by the heating member. When the heating control portion 24 starts the heating by the heating member in accordance with the instruction from the operation display control portion 28, the timer portion 53 counts the set heating time. The heating control portion 24 controls one or a plurality of the magnetron 17, the flat-surface heater 18, the convection heater 19, and the steam generator 21 that are the heating members to perform the heating.

The timer portion 53 counts the set heating time. When the set heating time elapses, the heating control portion 24 stops the heating member, and the switching portion 52 switches such that the proximity detector portion 30 operates.

Here, the switching portion 52 may be said to serve as the state determining portion configured to determine that the state of the microwave oven 1 is not a heating state, based on a time when the timer portion 53 finishes counting the set time. Then, the proximity detection of the proximity detector portion is switched to be enabled based on the determination that the state of the microwave oven 1 is not the heating state.

The timer portion 53 can set the additional heating time in accordance with information input based on the contact detection of the contact detector portion 29 or the proximity detection of the proximity detector portion 30.

For example, the user confirms a finished state of the food in the microwave oven 1 to determine whether or not the additional heating is necessary. In a case where the user determines that the additional heating is necessary, an instruction for setting the additional heating time is performed through the liquid crystal touch panel 10. In contrast, in a case where the user determines that the additional heating is unnecessary, the user pushes the cancel button 8 shown in Fig. 1 to cancel the execution of the additional heating. With this, the microwave oven 1 does not execute the additional heating and returns to the initial state that is a state before the execution of the heating. In a case where the microwave oven does not accept the instruction for setting the additional heating time from the user within a predetermined period of time, the microwave oven 1 determines that the additional heating is unnecessary and returns to the initial state that is a state before the execution of the heating.

To be specific, the timer portion 53 counts the set heating time, and when the timer portion 53 finishes counting the set time, the timer portion 53 instructs the switching portion 52 to switch such that the proximity detection of the proximity detector portion 30 is enabled for a predetermined period of time. During a period of time except for the predetermined period of time, the proximity detection of the proximity detector portion 30 is set to be disabled. The microwave oven 1 according to Example 5 is configured such that the proximity detection of the proximity detector portion 30 is enabled only when setting the additional heating time and is disabled in a period of time other than the time when setting the additional heating time. The time when setting the additional heating time is a time after the food is heated once in the microwave oven 1. At this time, the food has been heated once, so that the food is hot. Therefore, when observing the finished state of the food, the user may be wearing the thick gloves, such as mittens. Here, in the microwave oven 1 according to Example 5, the proximity detection of the proximity detector portion 30 is set to be enabled such that even in a state where the user is wearing the gloves, such as mittens, he or she can operate the liquid crystal touch panel 10. In a period of time other than the above time, the user is not wearing the gloves in many cases, and the user may be able to contact the liquid crystal touch panel 10 to operate the liquid crystal touch panel 10. If the detection of the proximity detector portion 30 is set to be enabled in this case, an operation instruction is input only by the proximity of the user to the liquid crystal touch panel 10. Therefore, there is a possibility that the microwave oven 1 accepts the input against the intention of the user to malfunction. Here, in the microwave oven 1 according to Example 5, to prevent such a malfunction, the proximity detection of the proximity detector portion 30 is set to be disabled.

Next, the operations of the operation display control portion 28 will be explained in reference to the drawing showing the display example of the liquid crystal touch panel 10. Specifically, the operations of the operation display control portion 28 will be explained in reference to Fig. 17 explained in Example 3. The basic menu screen image displays the warm-up button image 35, the heat-up button image 36, the steam button image 37, the oven button image 38, the grill button image 39, and the automatic menu button image 40. These button images displayed in the basic menu screen image are stored in the button image storage portion 132 (not shown in Fig. 31). The button images displayed in the basic menu screen image are read out from the button image storage portion 132 by the display control portion 31, for example, after the microwave oven is turned on, and then displayed as the basic menu screen image on the color liquid crystal display unit 11.

When the finger 27 contacts the position of any one of the button images displayed on the liquid crystal touch panel 10, the contact detector portion 29 detects the contact of the finger 27, and the screen image is changed into a next screen image for making detailed settings. To be specific, when the finger contacts, for example, the warm-up button image 35 among the button images of the basic menu screen image displayed on the liquid crystal touch panel 10, the screen image is changed into a setting screen image of the heating finishing temperature. When the finger 27 contacts the heat-up button image 36, the screen image is changed into a setting screen image of a heating power (watt) and a heating time. When the finger 27 contacts the steam button image 37, the screen image is changed into a setting screen image of a heating time. The steam heating is used to perform steam cooking by the combination of steam, microwaves, and the flat-surface heater 18. When the finger 27 contacts the oven button image 38, the screen image is changed into a setting screen image of a heating temperature and a heating time. When the finger 27 contacts the grill button image 39, the screen image is changed into a setting screen image of a heating time of a bottom surface and a heating time of an upper surface. When the finger 27 contacts the automatic menu button image 40, the screen image is changed into the selection screen image of the automatic cooking menu (automatic menu).

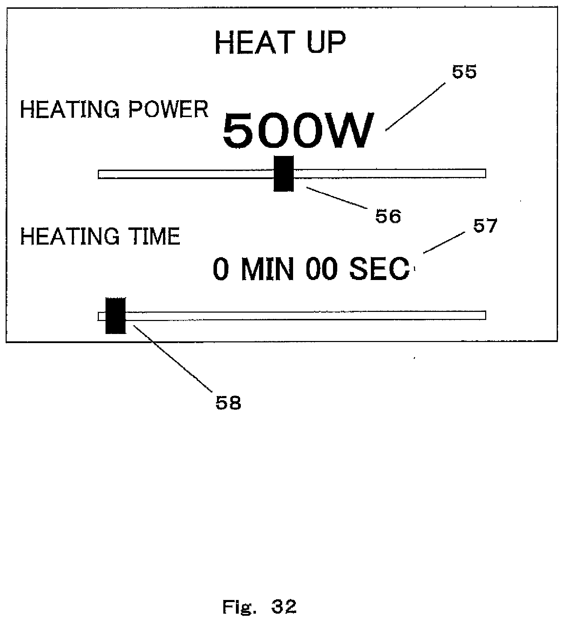

For example, in a case where the finger 27 contacts the displayed position of the oven button image 38 in the basic menu screen image, the display control portion 31 causes the color liquid crystal display unit 11 to display the setting screen image of the heating power (watt) and the heating time as shown in Fig. 32. Fig. 32 is a diagram showing one example of the setting screen image of the heating power and the heating time, the setting screen image being displayed on the liquid crystal touch panel according to Example 5. This setting screen image includes a heating power display portion 55, a heating power setting portion 56, a heating time display portion 57, and a heating time setting portion 58. The heating power display portion 55 is a portion that displays the heating power, and the heating power setting portion 56 is a portion that is used by the user to set the heating power. The heating power can be increased in such a manner that the finger of the user contacts the heating power setting portion 56 to slide and move to the right in Fig. 32, and the heating power can be decreased in such a manner that the finger of the user contacts the heating power setting portion 56 to slide and move to the left in Fig. 32. In the present example, more specifically, the heating power can be set between 100 W (minimum) and 1,000 W (maximum). The heating time display portion 57 is a portion that displays the heating time, and the heating time setting portion 58 is a portion that is used by the user to set the heating time. The heating time can be increased in such a manner that the finger of the user contacts the heating time setting portion 58 to slide and move to the right in Fig. 32, and the heating time can be decreased in such a manner that the finger of the user contacts the heating time setting portion 58 to slide and move to the left in Fig. 32. In the present example, more specifically, a settable range of the heating time is determined in accordance with the heating power. For example, when the heating power is set to 1,000 W, the heating time can be set to three minutes at most. When the heating power is set to 100 W, the heating time can be set to 60 minutes at most.

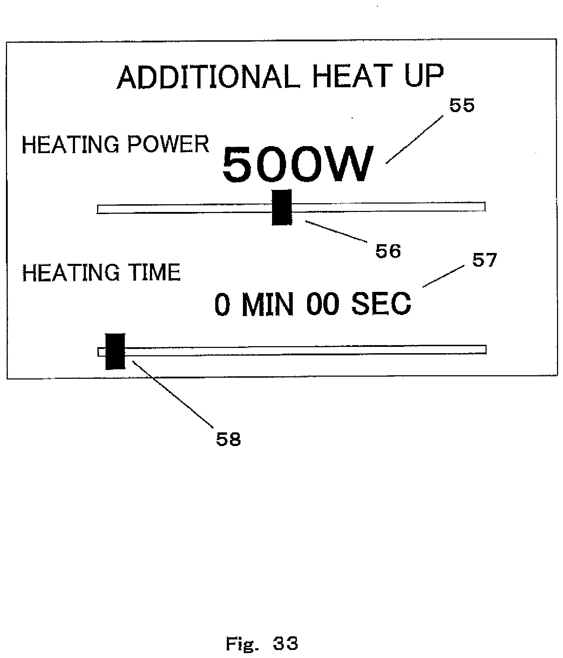

After the user operates the liquid crystal touch panel 10 to set the heating power and heating time of the microwave oven 1 on the setting screen image of the heating power and the heating time as described above, the user pushes the heating start button 7 shown in Fig. 1. When the heating start button 7 is pushed by the user as above, the timer portion 53 counts the set heating time, and the heating control portion 24 drives the magnetron 17 by the set heating power to heat the food. When the timer portion 53 finishes counting the set heating time, the heating control portion 24 stops the magnetron 17 to finish the heating and instructs the display control portion 31 to cause the color liquid crystal display unit 11 to display the setting screen image of the heating power and heating time of the additional heating. The setting screen image displayed at this time on the color liquid crystal display unit 11 of the liquid crystal touch panel 10 is shown in Fig. 33, and the user can refer to this display to set the additional heating. Fig. 33 shows one example of the setting screen image of the heating power and heating time of the additional heating, the setting screen image being displayed on the liquid crystal touch panel 10 according to Example 5.

Fig. 33 shows the setting screen image of the heating power and heating time of the additional heating, the setting screen image being displayed on the liquid crystal touch panel 10. As with the setting screen image shown in Fig. 32, the setting screen image shown in Fig. 33 includes the heating power display portion 55, the heating power setting portion 56, the heating time display portion 57, and the heating time setting portion 58. Then, the user slides the heating power setting portion 56 and the heating time setting portion 58 on the liquid crystal touch panel 10 to set the heating power and the heating time. As described above, the proximity detection of the proximity detector portion 30 is set to be enabled when setting the additional heating. Therefore, the user can slide the heating power setting portion 56 and the heating time setting portion 58 by not the bare hands but the hands with the thick gloves, such as mittens, to set the heating power and the heating time. After setting the additional heating as above, the user pushes the heating start button 7 shown in Fig. 1. Thus, the microwave oven 1 can execute the additional heating.

### Modification Example 1 of Example 5

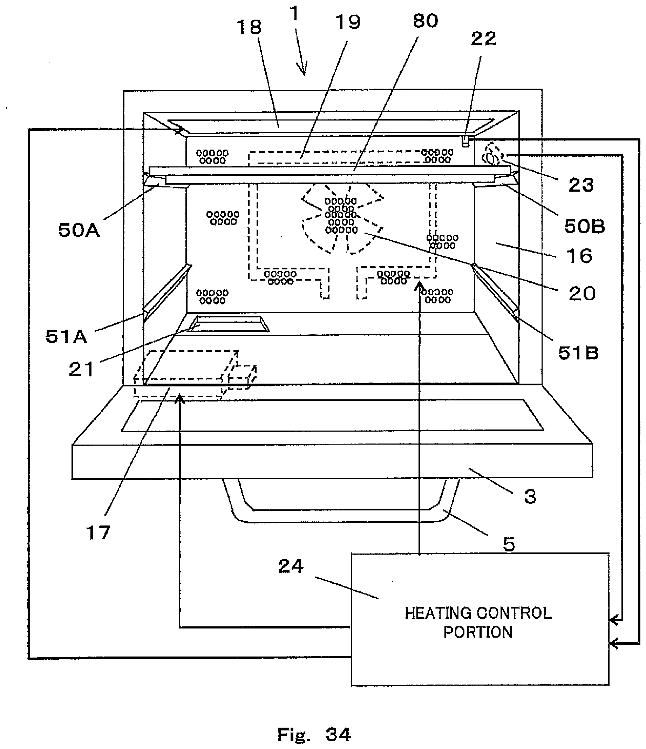

Next, the configuration of the microwave oven 1 according to Modification Example 1 of Example 5 will be explained. Modification Example 1 of Example 5 is an example in which grill cooking is performed in the microwave oven 1, and Fig. 34 shows a schematic configuration diagram. The internal structure of the microwave oven 1 shown in Fig. 34 is the same as the configuration diagram of Fig. 30 explained in Example 5 except that a heat-proof dish 80 is placed on the upper rails 50A and 50B in the heating chamber 16. Therefore, regarding the internal configuration of the microwave oven 1 according to Modification Example 1 of Example 5, the same reference signs are used for the same components, and explanations thereof are omitted.

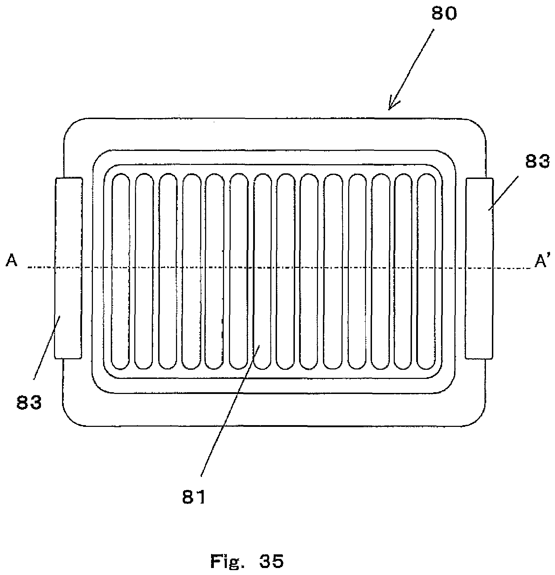

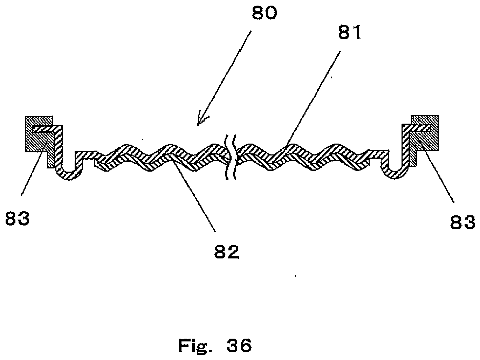

Here, the heat-proof dish 80 will be explained in reference to Figs. 35 and 36. Fig. 35 is a top view of the heat-proof dish 80, and Fig. 36 is a cross-sectional view taken along line A-A' of the heat-proof dish 80 shown in Fig. 35. The heat-proof dish 80 includes: a metal plate 81 that is a surface on which the food is placed; a high-frequency heating element 82 provided to be adhered to the metal plate 81 and made of ferrite as a main material; and holding portions 83 that are portions held by the user, used to place the heat-proof dish 80 at a wall surface of the heating chamber 2, and made of resin.

The metal plate 81 includes a wavy surface having depressions and projections and has such a depth that water can be stored. Since the metal plate 81 itself is formed in a wavy shape to have depressions and projections, an adhesive area of the high-frequency heating element 82 increases, so that the effect of increasing the amount of heat generated on the high-frequency heating element 82 can be obtained. A front surface of the metal plate 81 is subjected to fluorine coating having a high antifouling effect, and a back surface thereof is subjected to black heat resistance paint having a high endothermic effect.

At the time of the grill cooking, the food is placed on the heat-proof dish 80, and the magnetron 17 is driven. With this, the high-frequency heating element 82 is heated, and the bottom surface of the food is heated by the heat of the high-frequency heating element 82 through the metal plate 81. Thus, the bottom surface of the food is browned. When the bottom surface of the food is adequately heated, the heating by the magnetron 17 is terminated, and the flat-surface heater 18 is supplied with electricity to perform radiation heating. With this, the upper surface of the food is heated to be browned. As above, both surfaces of the food can be heated to be browned.

Regarding the grill cooking, in order that the surfaces of the food are crisply browned, and the finished food becomes juicy without losing water from inside the food, it is preferable that: when browning the bottom surface of the food by the high-frequency heating element 82 heated by the magnetron 17, the heat-proof dish 80 be placed on the lower rails 51A and 51B; and when browning the upper surface of the food by the flat-surface heater 18, the heat-proof dish 80 be placed on the upper rails 50A and 50B.

The microwave oven 1 is configured to emit the high-frequency waves from a bottom surface of the heating chamber 16 the time of the heating by the magnetron 17. Therefore, to heat the high-frequency heating element 82 by the magnetron 17, it is preferable that the high-frequency heating element 82 be located closer to the magnetron 17. To be specific, to facilitate the absorption of the high-frequency waves directly to the high-frequency heating element 82, it is preferable that the heat-proof dish 80 be placed on the lower rails 51A and 51B. If the heat-proof dish 80 is placed on the upper rails 50A and 50B, the heat-proof dish 80 is located away from the magnetron 17 that is an oscillation source. Therefore, the high-frequency waves emitted from the magnetron 17 are absorbed by the high-frequency heating element 82, and in addition, the high-frequency waves reflected by the wall surface of the heating chamber 16 to move through a periphery of the heat-proof dish 80 to an upper side of the heat-proof dish 80 increase. On this account, the food is directly heated by the high-frequency waves, so that the water inside the food tends to evaporate.

The flat-surface heater 18 uses radiation heat to brown the upper surface of the food on the heat-proof dish 80. Stronger radiation can be applied to the food if the food is closer to the flat-surface heater 18. Therefore, it is preferable that the heat-proof dish 80 be placed on the upper rails 50A and 50B. If the heat-proof dish 80 is placed on the lower rails 51A and 51B, the radiation energy applied to the food is low, so that it takes time to brown the food. During this heating, the ambient temperature increases, so that the water inside the food tends to evaporate.

As above, according to the grill cooking, better heating can be performed in such a manner that: the food on the heat-proof dish 80 is first heated by the magnetron 17, and then, heated by the radiation heater 18 from the middle of the heating; and the heat-proof dish 80 is first placed on the lower rails 51A and 51B, and then moved to the upper rails 50A and 50B in the middle of the heating. When moving the heat-proof dish, the heat-proof dish is adequately high in temperature, so that the user holds the heat-proof dish 80 by the hands with the thick gloves, such as mittens.

Therefore, when moving the heat-proof dish 80, the proximity detection of the proximity detector portion 30 is set to be enabled. With this, the user can operate the liquid crystal touch panel 10 by the hands with the thick gloves, such as mittens. This control operation will be explained in reference to the control block diagram shown in Fig. 31, as with the configuration shown in Example 5 described above. Here, the liquid crystal touch panel 10 displays a heating time setting screen image that is a setting screen image of a time for performing the heating in a state where the heat-proof dish 80 is placed at the bottom surface side of the heating chamber 16 and a time for performing the heating in a state where the heat-proof dish 80 is placed at the upper surface side of the heating chamber 16.

The user first contacts by the finger 27 the heating time setting screen image displayed on the liquid crystal touch panel 10 to set a bottom surface heating time for performing the heating by the magnetron 17 and an upper surface heating time for performing the heating by the flat-surface heater 18. At the time of this setting, only the contact detection of the contact detector portion 29 is being enabled. When the user contacts the liquid crystal touch panel 10 to set the bottom surface heating time and the upper surface heating time, the timer portion 53 counts an elapsed time of the set bottom surface heating time and instructs the heating control portion 24 to drive the magnetron 17. In accordance with the instruction from the timer portion 53, the heating control portion 24 drives the magnetron 17 to perform the heating. When the timer portion 53 finishes counting the bottom surface heating time, the timer portion 53 instructs the heating control portion 24 to finish the heating by the magnetron 17. The heating control portion 24 finishes the heating by the magnetron 17 in accordance with the instruction from the timer portion 53. Further, when the timer portion 53 finishes counting the bottom surface heating time, the timer portion 53 instructs the switching portion 52 to enable the proximity detection of the proximity detector portion 30. Then, the microwave oven 1 waits for an operation of changing the position of the heat-proof dish 80 by the user. To be specific, while waiting for the operation of changing the position of the heat-proof dish 80, the proximity detection of the proximity detector portion 30 in the microwave oven 1 is changed from the disabled state to the enabled state.

To be specific, at the time of the operation of changing the position of the heat-proof dish 80 by the user, for example, an adjusting operation of increasing or decreasing the previously-set upper surface heating time can be performed by the contact or proximity of the finger 27 or the like with or to the liquid crystal touch panel 10.

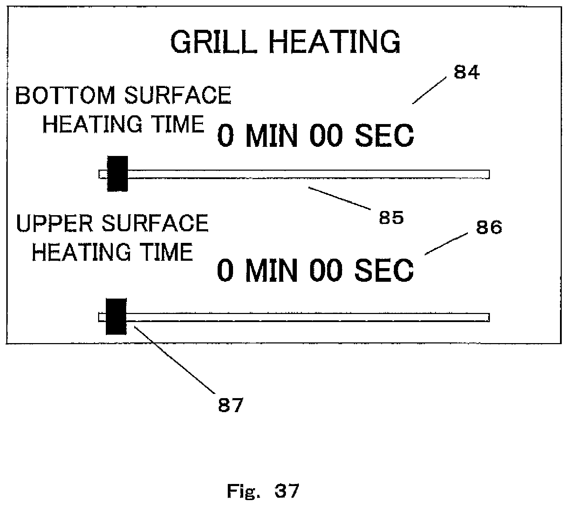

More specifically, the display on the liquid crystal touch panel 10 is as below. The heating time setting screen image displayed after the finger 27 has contacted the displayed position of the grill button image 39 in the basic menu screen image shown in Fig. 17 will be explained in reference to Fig. 37. In the heating time setting screen image shown in Fig. 37, a bottom surface heating time display portion 84 is a portion that displays the bottom surface heating time, and a bottom surface heating time setting portion 85 is a portion that is used by the user to set the bottom surface heating time. The bottom surface heating time can be increased in such a manner that the finger 27 of the user contacts the displayed position of the bottom surface heating time setting portion 85 on the liquid crystal touch panel 10 to slide and move to the right in Fig. 37, and the bottom surface heating time can be decreased in such a manner that the finger 27 of the user contacts the displayed position of the bottom surface heating time setting portion 85 on the liquid crystal touch panel 10 to slide and move to the left in Fig. 37. In the present example, the bottom surface heating time can be set to 30 minutes at most. The upper surface heating time display portion 86 is a portion that displays the upper surface heating time, and an upper surface heating time setting portion 87 is a portion that is used by the user to set the upper surface heating time. The upper surface heating time can be increased in such a manner that the finger 27 of the user contacts the displayed position of the upper surface heating time setting portion 87 on the liquid crystal touch panel 10 to slide and move to the right in Fig. 37, and the upper surface heating time can be decreased in such a manner that the finger 27 of the user contacts the displayed position of the upper surface heating time setting portion 87 on the liquid crystal touch panel 10 to slide and move to the left in Fig. 37. The upper surface heating time can be set to 30 minutes at most.

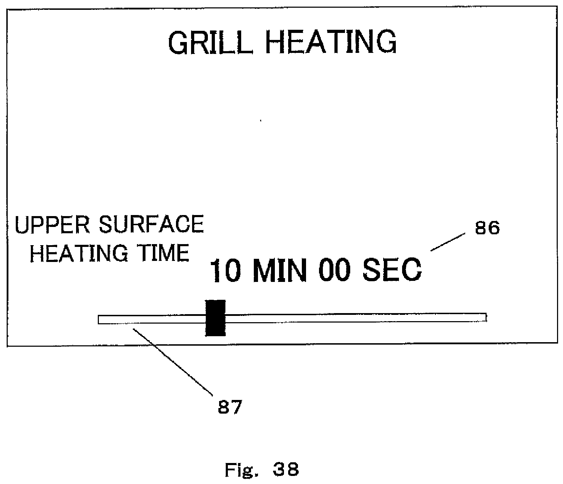

After the user sets the bottom surface heating time and the upper surface heating time for the grill heating, the user pushes the heating start button 7 shown in Fig. 1. When the heating start button 7 is pushed by the user, the timer portion 53 counts the elapsed time of the bottom surface heating time set through the liquid crystal touch panel 10 and instructs the heating control portion 24 to perform the heating by the magnetron 17. In accordance with the instruction from the timer portion 53, the heating control portion 24 drives the magnetron 17 to heat the high-frequency heating element 82. Thus, the bottom surface of the food placed on the heat-proof dish 80 is heated. When the set bottom surface heating time has elapsed, and the timer portion 53 finishes counting the elapsed time, the timer portion 53 instructs the heating control portion 24 to stop the heating by the magnetron 17. In accordance with the instruction from the timer portion 53, the heating control portion 24 stops the magnetron 17 to finish the heating. Here, the microwave oven 1 stops the heating once, and changes the heating member from the magnetron 17 to the flat-surface heater 18. The display on the liquid crystal touch panel 10 at the time of this changing is shown in Fig. 38, and the upper surface heating time is adjustable.

Fig. 38 is a diagram showing one example of the setting screen image of the upper surface heating time displayed on the liquid crystal touch panel 10. This setting screen image includes the upper surface heating time display portion 86 and the upper surface heating time setting portion 87. The user can set the upper surface heating time in such a manner that the finger 27 contacts the displayed position of the upper surface heating time setting portion 87 to slide in the left-right direction. Although the upper surface heating time has already been set in the setting screen image shown in Fig. 37, the upper surface heating time is finely adjustable depending on an actual finished state by the bottom surface heating. To be specific, before changing the heating member from the magnetron 17 to the flat-surface heater 18, the upper surface heating time can be set again. An initial screen image (screen image before the operation) of the setting screen image displays the upper surface heating time set in the setting screen image shown in Fig. 37. At this time, in the microwave oven 1, the proximity detection of the proximity detector portion 30 is set to be enabled as described above. Therefore, the user can set the upper surface heating time by the sliding operation by not the bare hands but the hands with the thick gloves, such as mittens.

At the time of the termination of the heating, the cancellation of the heating, or the like, the user may be wearing the thick gloves, such as mittens, to grab, for example, the hot food or the heat-proof dish. However, at this time, the proximity detection of the proximity detector portion 30 is set to be enabled in the microwave oven 1. Therefore, the user can operate the liquid crystal touch panel 10 by the hands with the thick gloves. At the time other than the time of the termination of the heating, the cancellation of the heating, or the like, the proximity detection of the proximity detector portion 30 is not set to be enabled. Therefore, for example, it is possible to prevent a case where the unintentional proximity of the finger of the user to the liquid crystal touch panel 10 is detected, and therefore, the microwave oven 1 malfunctions. Thus, the microwave oven 1 can operate properly, and the usability thereof can be improved.

The foregoing has explained, as a member configured to accept input, the liquid crystal touch panel 10 configured such that the position input device 15 capable of finely detecting the contact position or proximity position of the finger 27 of the user is integrated with the color liquid crystal display unit 11. However, the member configured to accept the input is not limited to this. For example, the member configured to accept the input may not include the color liquid crystal display unit 11 but include a plurality of, for example, 5 to 10 fixed buttons each having a flat shape and configured to detect the change in the electrostatic capacitance. Even in the case of the fixed buttons, the contact and proximity of the finger 27 can be distinctively detected depending on the magnitude of the change in the electrostatic capacitance. Therefore, by enabling the proximity detection at the time of the termination of the heating or the cancellation of the heating by the same configuration, the operations can be performed by the hands with the thick gloves, such as mittens. Thus, the same effects as above can be obtained.

The present embodiment has explained the microwave oven as the heat cooking device. However, even in a case where the present embodiment is applied to a device, such as a rice cooker or an induction heating cooking device, in which the user has to grab the hot food, pot, or the like, the same effects as above can be obtained.

Example 5 may be combined with Example 1 or 2. In this case, the proximity detection is set to be enabled or disabled based on the proximity input enable/disable information piece 100. However, during the set heating time in Example 5, the timer portion 53 switches the switching portion 52 to disable the proximity detection of the proximity detector portion 30. To be specific, while the heating member is driving to perform the heating in the microwave oven 1, the timer portion 53 inhibits the proximity detection of the proximity detector portion 30 regardless of the setting based on the proximity input enable/disable information piece 100. The timer portion 53 of Example 5 serves as both the state determining portion and permission determining portion of the present invention.

As above, the microwave oven 1 according to Example 5 may have the following configuration.

A first heat cooking device according to Example 5 includes: a heater portion configured to heat food; an operating portion configured to accept an operation content input by a user; a proximity detector portion configured to detect proximity of a part of a human body to the operating portion; a contact detector portion configured to detect contact of a part of the human body with the operating portion; and a heating control portion configured to control the heater portion based on the detection of the proximity detector portion or the contact detector portion, wherein the heating control portion accepts the detection of the proximity detector portion only at a predetermined time of a heating process of the heating control portion.

With this configuration, the operating portion accepts the operation content input by the user, and the heating control portion controls the heater portion in accordance with the accepted content. Regarding the input from the user, the contact detector portion detects the contact of a part of the human body with the operating portion, the proximity detector portion detects the proximity of a part of the human body to the operating portion, and the heating control portion accepts the detection of the proximity detector portion at a predetermined timing of the heating process of the heating control portion. Therefore, the operations can be performed by the hands with the thick gloves, such as mittens, at a predetermined time, so that the usability can be improved.

A second heat cooking device according to Example 5 is configured such that especially in the first heat cooking device according to Example 5, the heating control portion accepts the detection of the proximity detector portion when the heating control portion stops or terminates the heating by the heater portion and is standing by for reheating.

With this configuration, the heating control portion accepts the detection of the proximity detector portion when the heating control portion stops or terminates the heating by the heater portion and stands by for reheating. Therefore, the operations can be performed by the hands with the thick gloves, such as mittens, in a state where the food, container, or the like is hot, so that the usability can be improved.

A third heat cooking device according to Example 5 is configured such that especially in the second heat cooking device according to Example 5, the heater portion includes: a high-frequency generating portion; a heat-proof dish to which a high-frequency heating element is attached, the high-frequency heating element being configured to accept high-frequency waves of the high-frequency generating portion to generate heat; and a radiation heater configured to generate radiation heat, wherein the heating control portion accepts the detection of the proximity detector portion when the heating control portion terminates the heating by the high-frequency generating portion and is standing by for the heating by the radiation heater.

With this configuration, the heat-proof dish to which the high-frequency heating element is attached is heated by the high-frequency waves generated by the high-frequency generating portion, and then, the heating control portion accepts the detection of the proximity detector portion when the heating control portion terminates the heating by the high-frequency generating portion in the heating process of performing heating by the radiation heater and is standing by for the heating by the radiation heater. Therefore, the operations, such as the operation of grabbing the hot heat-proof dish, can be performed by the hands with the thick gloves, such as mittens, so that the usability can be improved.

A fourth heat cooking device according to Example 5 is configured such that especially the first heat cooking device according to Example 5 further includes a display portion configured to display information regarding heat cooking of the food, and the operating portion is constituted by a touch panel that is integrated with the display portion.

With this configuration, the information regarding the heat cooking of the food is displayed on the display portion, and the operations can be performed through the touch panel integrated with the display portion. In addition, the user can operate the touch panel by the hands with the thick gloves, such as mittens. Thus, the usability can be improved.

Therefore, the fourth heat cooking device according to Example 5 has effects of being able to perform the operations by the hands with the thick gloves, such as mittens, and improve the usability of the heat cooking device.

For example, the heat cooking device (microwave oven 1) according to Example 5 can be utilized as below.

To be specific, in Example 5, as described above, the liquid crystal touch panel 10 accepts the operation content input from the user, and the heating control portion 24 controls the heating member in accordance with the accepted content. Regarding the input from the user, the contact detector portion 29 detects the contact of a part of the human body with the liquid crystal touch panel 10, and the proximity detector portion 30 detects the proximity of a part of the human body to the liquid crystal touch panel 10. The proximity detection of the proximity detector portion 30 is set to be enabled at a predetermined time in the food heating process of the heating control portion 24. Therefore, the user can operate the liquid crystal touch panel 10 by the hands with the thick gloves, such as mittens, at the predetermined time, so that the usability can be improved. On this account, Example 5 is applicable to heat cooking devices, such as rice cookers and induction heating cooking devices, in addition to microwave ovens.

### Example 6

Next, the following will explain, as Example 6, the microwave oven 1 including the liquid crystal touch panel 10 whose operability is improved such that: to reduce the number of times the user contacts the color liquid crystal panel of the touch panel as many as possible, the color liquid crystal panel of the touch panel is configured to be operable without the user contacting the color liquid crystal panel.

In the microwave oven 1 according to Example 6, the configuration, described in Example 1 or 2, of determining that the proximity detection is enabled or disabled is not described. However, the microwave oven 1 according to Example 6 can be combined with the components of the microwave oven 1 according to Example 1 or 2.

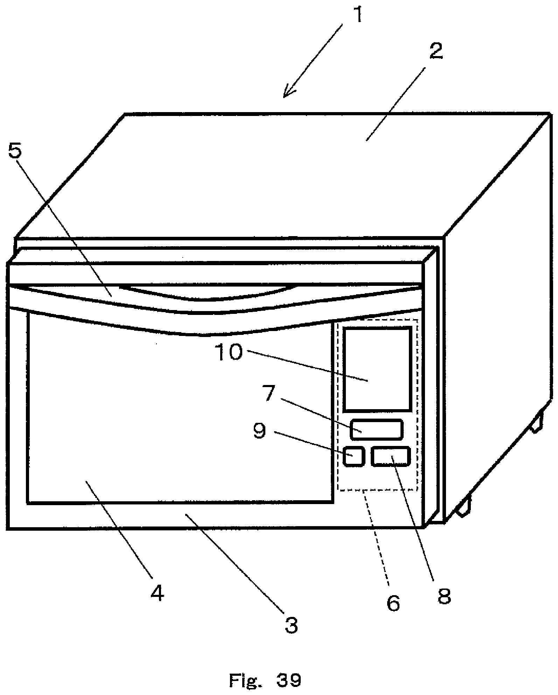

First, the appearance configuration of the microwave oven 1 according to Example 6 is different from that of the microwave oven 1 according to Example 1 shown in Fig. 1 as below. To be specific, as shown in Fig. 39, the appearance configuration of the microwave oven 1 according to Example 6 is different from that of the microwave oven 1 according to Example 1 regarding the position of the operation display portion 6.

In the microwave oven 1 according to Example 1, the operation display portion 6 is provided at a lower portion of a front surface (door 3) of the microwave oven 1 having a rectangular solid shape. In the microwave oven 1 according to Example 6, the operation display portion 6 is provided at a right portion of the front surface (door 3). As shown in Fig. 39, the heating start button 7, the cancel button 8, and the back button 9 are located under the liquid crystal touch panel 10. Other than the above, the appearance configuration of the microwave oven 1 is the same as that of the microwave oven 1 according to Example 1. Therefore, the same reference signs are used for the same members, and explanations thereof are omitted.

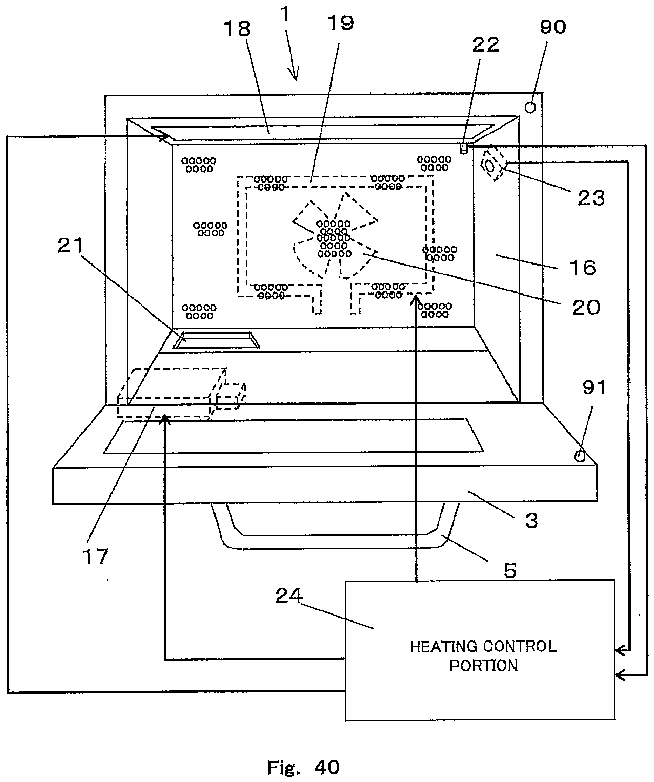

The internal configuration of the microwave oven 1 according to Example 6 is different from that of the microwave oven 1 according to Example 1 shown in Fig. 3 as below. To be specific, as shown in Fig. 40, the internal configuration of the microwave oven 1 according to Example 6 is different from that of the microwave oven 1 according to Example 1 in that: an open/close detector portion 90 configured to detect the opening and closing of the door 3 is provided at a portion of the case 2, the portion contacting the door 3 and being located at an upper right corner; and a projection 91 is provided at the door 3. This projection is provided at a position of the door 3, the position contacting the open/close detector portion 90 when the door 3 is closed. Then, the microwave oven 1 according to Example 6 is configured such that: when the door 3 is closed, the projection 91 provided at the door 3 contacts the open/close detector portion 90, so that a contact of a circuit connected to the open/close detector portion 90 is closed; and when the door 3 is open, the contact is open. Other than the above, the internal configuration of the microwave oven 1 is the same as that of the microwave oven 1 according to Example 1. Therefore, the same reference signs are used for the same members, and explanations thereof are omitted.

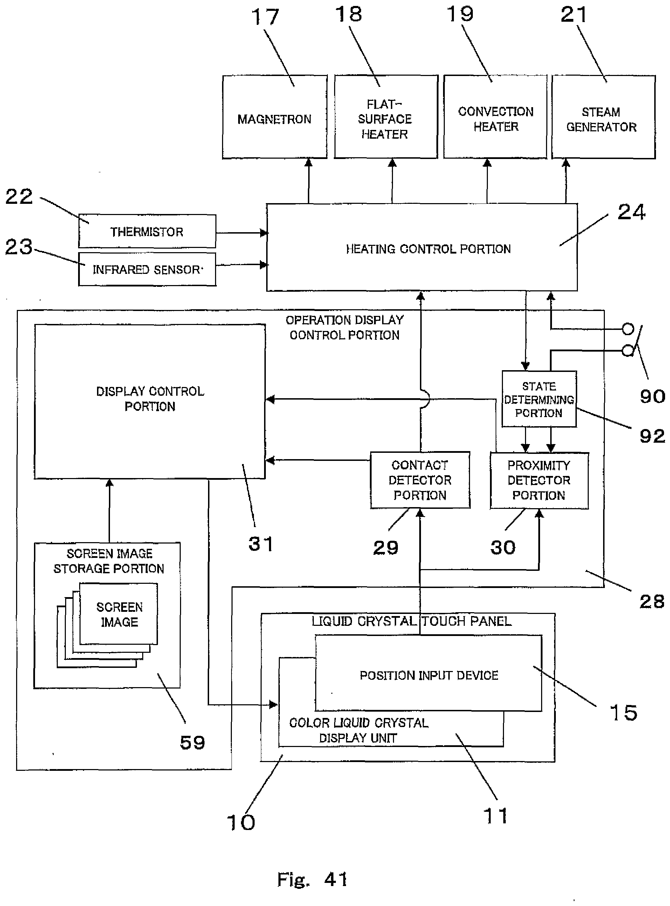

Next, the control of the operation executed in accordance with the input accepted by the liquid crystal touch panel 10 in the microwave oven 1 of Example 6 configured as above will be explained in reference to the control block diagram of Fig. 41. Fig. 41 is a block diagram showing one example of the configuration of major portions of the microwave oven 1 according to Example 6 of the embodiment. As shown in Fig. 41, the microwave oven 1 includes the heating control portion 24 and the operation display control portion 28.

The operation display control portion 28 controls the display of the color liquid crystal display unit 11 based on a signal from the position input device 15 and transmits to the heating control portion 24 a signal corresponding to the input from the user. As shown in Fig. 41, the operation display control portion 28 includes the contact detector portion 29, the proximity detector portion 30, the display control portion 31, the screen image storage portion 59, and a state determining portion 92. In Fig. 41, the screen image storage portion 59 is shown as a storage device provided outside the display control portion 31. However, as with Example 1, the screen image storage portion 59 may be a memory provided inside the display control portion 31.

The configurations of the contact detector portion 29 and the proximity detector portion 30 are the same as those of the contact detector portion 29 and the proximity detector portion 30 included in the microwave oven 1 according to Example 1, so that explanations thereof are omitted.

The display control portion 31 controls the display of the color liquid crystal display unit 11 based on the signal from the contact detector portion 29 or the proximity detector portion 30. The heating control portion 24 controls the magnetron 17, the flat-surface heater 18, the convection heater 19, and the steam generator 21 that are the heating members based on the signal from the contact detector portion 29 in accordance with the detection of the thermistor 22 or the infrared sensor 23 as described above. Further, when information indicating that the door has opened is input from the open/close detector portion 90 to the heating control portion 24, the heating control portion 24 immediately stops the heating.

The screen image storage portion 59 stores, in order, a plurality of images regarding the screen image displayed on the color liquid crystal display unit 11. For example, the display control portion 31 extracts an appropriate image regarding the screen image from the screen image storage portion 59 based on the signal input from the proximity detector portion 30. Then, the display control portion 31 causes the color liquid crystal display unit 11 to perform the display based on the extracted images regarding the screen image.

The state determining portion 92 determines whether to enable the proximity detection of the proximity detector portion 30 and changes a setting regarding whether to enable the proximity detection of the proximity detector portion 30. When the heating is being performed by driving any one of the heating members that are the magnetron 17, the flat-surface heater 18, the convection heater 19, and the steam generator 21 based on the signal from the heating control portion 24, the state determining portion 92 determines that the proximity detection of the proximity detector portion 30 is disabled. In addition, when the state determining portion 92 determines based on the signal from the open/close detector portion 90 that the door 3 is open, the state determining portion 92 determines that the proximity detection of the proximity detector portion 30 is disabled.

To be specific, when the microwave oven 1 is in a predetermined state, that is, for example, when the heating member drives to perform the heating or the door 3 is open, the state determining portion 92 inhibits the proximity detection of the proximity detector portion 30.

The reason why the state determining portion 92 does not permit the proximity detection of the proximity detector portion 30 during the driving of the heating member is as below. To be specific, the proximity detector portion 30 detects the change amount equal to or larger than the change amount C2 of the electrostatic capacitance shown in Fig. 5, the change amount C2 being adequately smaller than the change amount Cl. However, electrical noises tend to be generated during the driving of each heating member. Especially, the electrical noises tend to be generated during the driving of the magnetron 17. Therefore, it is difficult for the proximity detector portion 30 to detect a small change in the electrostatic capacitance. On this account, there is a possibility that a malfunction occurs if the proximity detector portion 30 performs the proximity detection during the driving of the heating member. Thus, in the microwave oven 1 according to Example 6, the proximity detection of the proximity detector portion 30 is not performed.

The reason why the state determining portion 92 does not permit the proximity detection of the proximity detector portion 30 when the door 3 is open is because as shown in Fig. 3, the user cannot see the liquid crystal touch panel 10 in a state where the door 3 is open. The proximity detection is not performed in a state where the liquid crystal touch panel 10 is located at such a position that the user cannot see the liquid crystal touch panel 10, in order to prevent the misdetection caused by the proximity of a part of the human body against the user's intention and the misdetection caused by regarding the proximity of a thing located in the vicinity of the liquid crystal touch panel 10 as the proximity of a part of the human body.

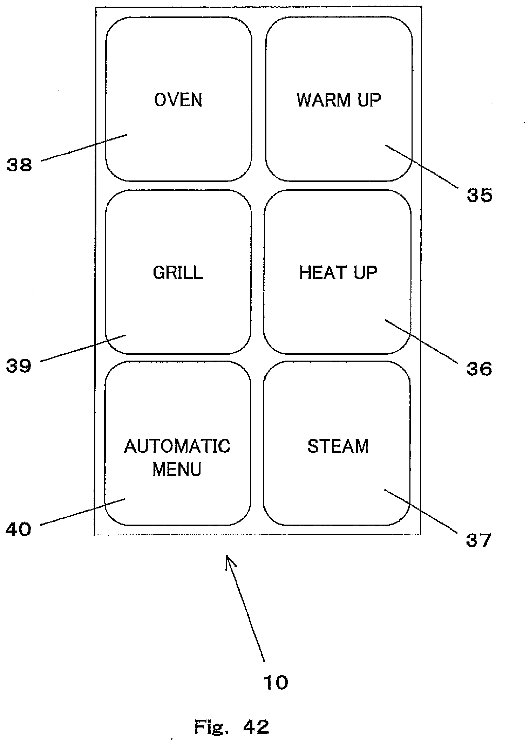

Next, the operations of the operation display control portion 28 will be explained in reference to the drawing showing the display example of the liquid crystal touch panel 10. Specifically, the operations of the operation display control portion 28 will be explained in reference to Fig. 42. Fig. 42 is a diagram showing one example of the basic menu screen image displayed on the liquid crystal touch panel 10 according to Example 6. The basic menu screen image is a screen image displayed at first, such as a screen image displayed after the microwave oven is turned on. The basic menu screen image displays the warm-up button image 35, the heat-up button image 36, the steam button image 37, the oven button image 38, the grill button image 39, and the automatic menu button image 40.

When the finger 27 contacts the position of any one of the standard button images displayed on the liquid crystal touch panel 10, the screen image is changed into a next screen image for making detailed settings. To be specific, when the finger 27 contacts, for example, the warm-up button image 35 among the standard button images of the basic menu screen image displayed on the liquid crystal touch panel 10, the screen image is changed into a setting screen image of the heating finishing temperature. When the finger 27 contacts the heat-up button image 36, the screen image is changed into a setting screen image of a heating power (watt) and a heating time. When the finger 27 contacts the steam button image 37, the screen image is changed into a setting screen image of a heating time. The steam heating is used to perform steam cooking by the combination of steam, microwaves, and the flat-surface heater. When the finger 27 contacts the oven button image 38, the screen image is changed into a setting screen image of a heating temperature and a heating time. When the finger 27 contacts the grill button image 39, the screen image is changed into a screen image for selecting one-side grill or double-sided grill and setting a heating time. When the finger 27 contacts the automatic menu button image 40, the screen image is changed into a selection screen image of the automatic cooking menu (automatic menu).

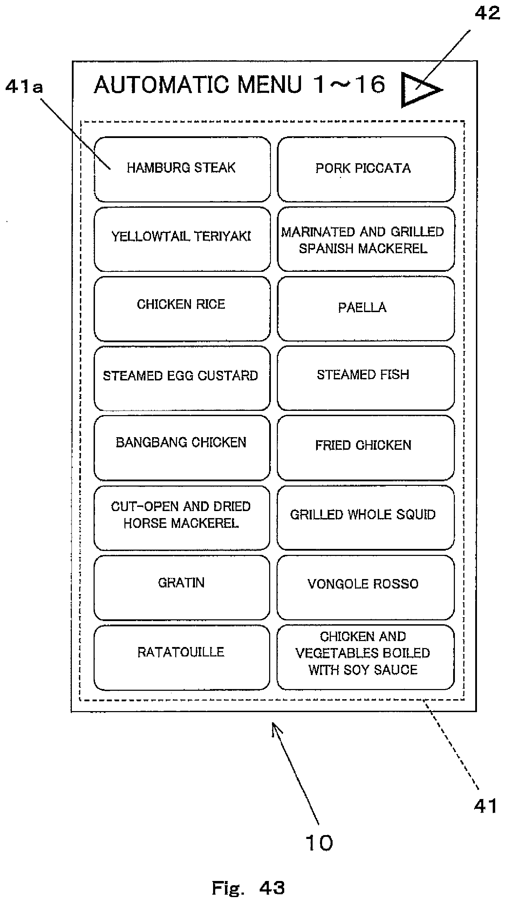

Fig. 43 shows a state where the selection screen image of the automatic cooking menu is displayed on the liquid crystal touch panel 10. Fig. 43 is a diagram showing one example of the selection screen image of the automatic cooking menu displayed on the liquid crystal touch panel 10 according to Example 6. The automatic menu button group 41 is constituted by a large number of standard button images. The standard button images respectively show the food items. Sixteen standard button images are displayed in the entire screen image on the liquid crystal touch panel 10. In the automatic cooking menu, an appropriate heat control procedure by an appropriate heating member is preset to each food item. Therefore, when the user just selects the desired food item from the automatic cooking menu, the heat control operation corresponding to the selected food item is performed with respect to the ingredients. A triangular image displayed at an upper right corner of the screen image of the automatic cooking menu is the page turn button image 42. The page turn button image 42 is the standard button image used to turn the page of the automatic cooking menu displayed on the liquid crystal touch panel 10. When a part of the human body, such as the finger 27 of the user, contacts the page turn button image 42, the entire screen image on the color liquid crystal display unit 11 is changed into sixteen images respectively showing the food items included in another automatic cooking menu button group 41.

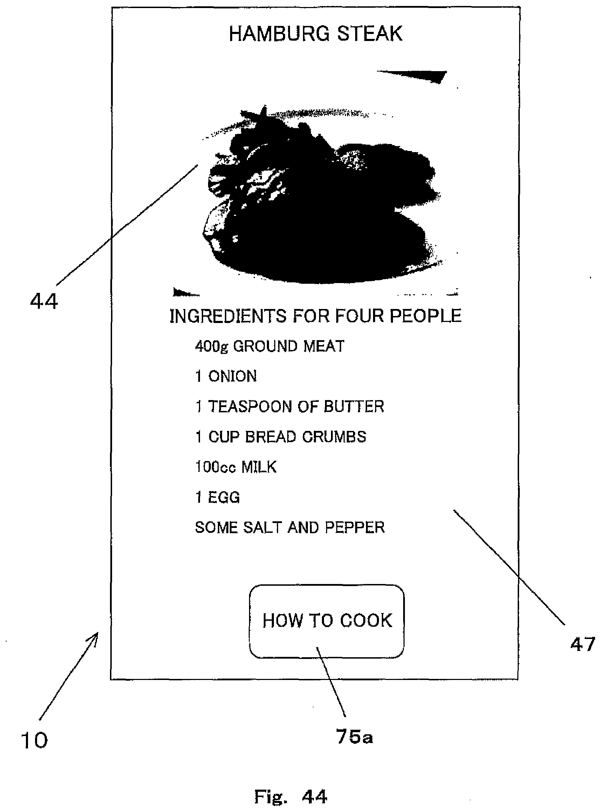

Fig. 44 shows a display example of the screen image displayed when the user has contacted the hamburg steak button 42 in the display state of the liquid crystal touch panel 10 shown in Fig. 43. Fig. 44 is a diagram showing one example of a selection confirmation screen image displayed on the liquid crystal touch panel 10 according to Example 6. Fig. 44 shows the selection confirmation screen image used to confirm whether or not the food item selected by the user on the screen image shown in Fig. 43 is correct. In addition to the food item "hamburg steak", the selection confirmation screen image shows the image information 44 that is the picture of the finished food and the detail information 47 showing the ingredients. This allows the user to easily confirm whether or not the selected food item is correct. When the user pushes the heating start button 7 of Fig. 1 in this state, the heating control portion 24 causes the convection heater 19 that is the heating member to perform the heating. Thus, the heating is performed in accordance with a predetermined heating procedure most suitable for the hamburg steak.

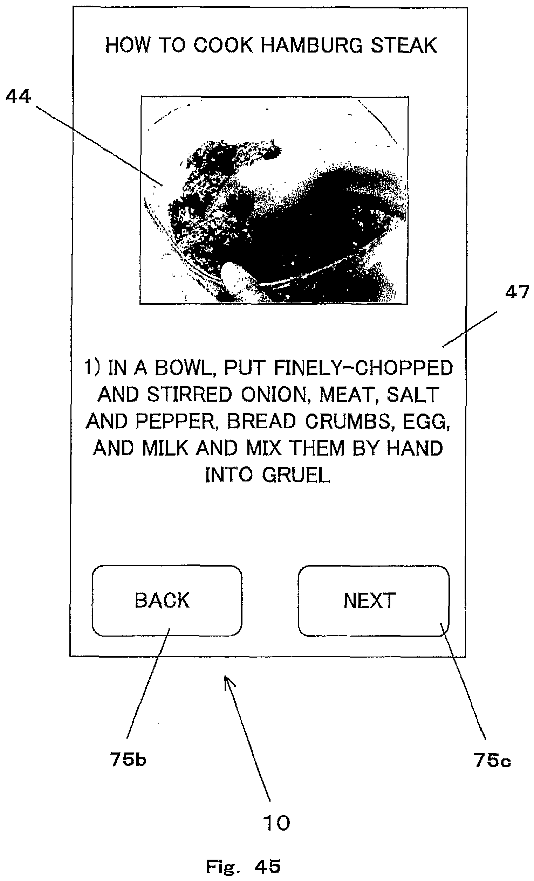

A how-to-cook showing button image 75a displayed at a lower portion of the selection confirmation screen image shown in Fig. 44 is an image showing a button for instructing the screen image to be changed into a screen image (cooking method screen image) showing a cooking method of a preparation necessary before heating the food ("hamburg steak"). Fig. 45 shows the screen image displayed when the finger 27 of the user has contacted the how-to-cook showing button image 75a. Fig. 45 is a diagram showing one example of the cooking method screen image displayed on the liquid crystal touch panel 10 according to Example 6.

The cooking method screen image shown in Fig. 45 is a first screen image showing the cooking method of the preparation necessary before heating the "hamburg steak" and includes the image information 44 that is a picture of the preparation and the detail information 47 showing an explanation of the procedure of the preparation. A backward button image 75b and a forward button image 75c are displayed at a lower portion of the cooking method screen image. Each of the backward button image 75b and the forward button image 75c is an image of a button used to instruct the cooking method screen image for explaining the cooking method to return to a previous screen image or turn to a next screen image. The backward button image 75b and the forward button image 75c are set such that even in a case where the user does not contact but get close to the image 75b or 75c, the input is received, and the screen image is changed. For example, when the finger 27 of the user gets close to the backward button image 75b displayed in the cooking method screen image, the screen image is changed into the selection confirmation screen image shown in Fig. 44, and when the finger 27 gets close to the forward button image 75c, the screen image is changed into a screen image (not shown) for explaining an operation of shaping a hamburg steak as a next step in the preparation.

The reason why the cooking method screen image accepts the input by the proximity of the user to the backward button image 75b and the forward button image 75c is because as is clear from the picture of the preparation shown as the image information 44 in the cooking method screen image of Fig. 45, the hands of the user commonly gets dirty at the time of the preparation. Contacting the liquid crystal touch panel 10 by the dirty hands is uncomfortable for the user and is not so preferable from a hygiene viewpoint. The cooking method screen images showing the cooking method of the preparation are stored in the screen image storage portion 59 of Fig. 41 so as to be associated with the other screen images in order. When the proximity detector portion 30 detects the proximity of the user to the backward button image 75b or the forward button image 75c, the display control portion 31 extracts the screen image to be displayed, from the screen image storage portion 59 to cause the color liquid crystal display unit 11 to display the extracted screen image.

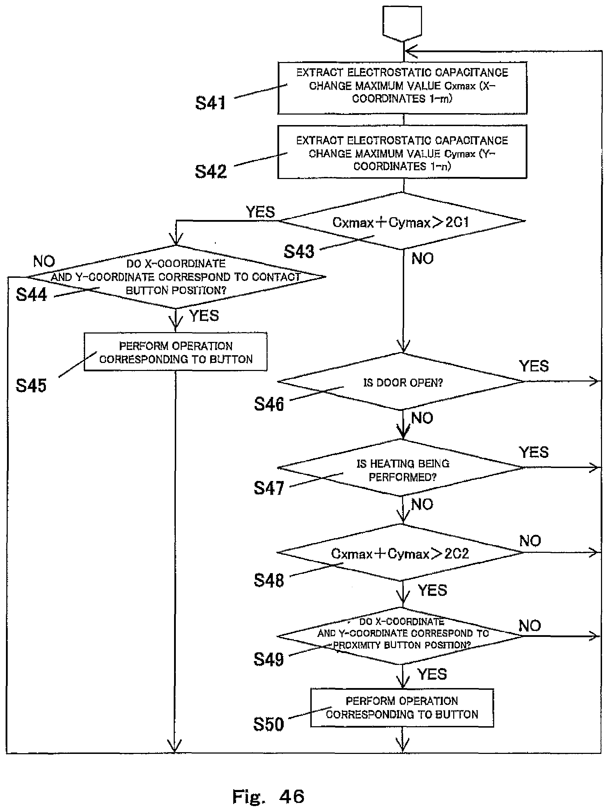

Next, the operations of the operation display control portion 28 including the contact detector portion 29, the proximity detector portion 30, the display control portion 31, the screen image storage portion 59, and the state determining portion 92 will be explained in reference to the flow chart of Fig. 46. Fig. 46 is a flow chart showing one example of the input accepting operation of the liquid crystal touch panel 10 included in the microwave oven 1 according to Example 6.

First, when the finger 27 of the user gets close to the screen image displayed on the liquid crystal touch panel 10, the electrostatic capacitance changes. This change is detected by the X-direction sensor electrode 25 and Y-direction sensor electrode 26 of the position input device 15.

To be specific, in Step S41, the contact detector portion 29 detects the electrostatic capacitance changes Cx1 to Cxm of a plurality of (m) X-direction sensor electrodes 25 shown in Fig. 4 and then extracts a maximum value as an electrostatic capacitance change Cxmax from the electrostatic capacitance changes Cx1 to Cxm. Then, the process proceeds to Step S42. Next, in Step S42, the contact detector portion 29 detects the electrostatic capacitance changes Cy1 to Cyn of a plurality of (n) Y-direction sensor electrodes 26 shown in Fig. 4 and then extracts a maximum value as an electrostatic capacitance change Cymax from the electrostatic capacitance changes Cy1 to Cyn. Then, the process proceeds to Step S43.

In Step S43, the contact detector portion 29 adds the electrostatic capacitance changes Cxmax and Cymax respectively extracted in Steps S41 and S42. Then, the contact detector portion 29 determines whether or not the calculation result is larger than the value that is twice the change amount C1 shown in Fig. 5 (Step S43). In a case where the contact detector portion 29 determines that the sum of the electrostatic capacitance changes Cxmax and Cymax is larger than the value that is twice the change amount C1 ("YES" in Step S43), the process proceeds to Step S44. In contrast, in a case where the contact detector portion 29 determines that the above-described sum is not larger than the value that is twice the change amount C1 ("NO" in Step S43), the process proceeds to Step S46.

In Step S44, the position indicated by the x-coordinate and the y-coordinate where the electrostatic capacitance changes Cxmax and Cymax have been generated is the coordinate position at which the standard button image is displayed on the color liquid crystal display unit 11. The contact detector portion 29 confirms whether or not there exists the standard button image displayed at this coordinate position. In a case where there exists the standard button image displayed at the coordinate position, the contact detector portion 29 determines whether or not the standard button image is a button image that accepts input by the contact of the finger 27 of the user. If "YES" in Step S44, the process proceeds to Step S45. If "NO" in Step S44, the process returns to Step S41, and the above operations are repeated. In Step S45, the operation associated with the button image and performed by the contact to the button image is executed (Step S45). Examples of such an operation include the changing of the screen image displayed on the color liquid crystal display unit 11 and various settings regarding the heating.

In Example 6, the contact detector portion 29 determines whether or not there exists the standard button image corresponding to the coordinate position specified as above and whether or not the standard button image is a button image that accepts the input by the contact of the finger 27 of the user. However, the operation display control portion 28 may include a determining portion separately from the contact detector portion 29, and this determining portion may perform the above determinations.

In Step S46, the open/close detector portion 90 detects whether or not the door 3 is opened or closed. In a case where the open/close detector portion 90 detects that the door 3 is closed, the process proceeds to Step S47. Then, the state determining portion 92 determines whether or not the heating is being performed by driving the heating member. In contrast, in a case where the open/close detector portion 90 detects that the door 3 is opened, the process returns to Step S41 before the state determining portion 92 determines whether or not the heating is being performed. As described above, in Step S47, the state determining portion 92 determines whether or not the heating is being performed by driving any one of the heating members that are the magnetron 17, the flat-surface heater 18, the convection heater 19, and the steam generator 21 in accordance with a control instruction from the heating control portion 24. Then, in a case where the state determining portion 92 determines that the heating is not being performed ("NO" in Step S47), the state determining portion 92 instructs the proximity detector portion 30 to perform the proximity detection, and the process proceeds to Step S48. In contrast, in a case where the state determining portion 92 determines that the heating is being performed ("YES" in Step S47), the process returns to Step S41 without instructing the proximity detector portion 30 to perform the proximity detection.

In Step S48, the proximity detector portion 30 adds the electrostatic capacitance changes Cxmax and Cymax respectively extracted in Steps S41 and S42 and determines whether or not the calculation result is larger than the value that is twice the change amount C2 shown in Fig. 5. In a case where the proximity detector portion 30 determines that the sum of the electrostatic capacitance changes Cxmax and Cymax is larger than the value that is twice the change amount C2, the process proceeds to Step S49 ("YES" in Step S48). In contrast, in a case where the proximity detector portion 30 determines that the above-described sum is not larger than the value that is twice the change amount C2, the process returns to Step S41.

In Step S49, the position indicated by the x-coordinate and the y-coordinate where the electrostatic capacitance changes Cxmax and Cymax have been generated is the coordinate position at which the standard button image is displayed on the color liquid crystal display unit 11. The proximity detector portion 30 confirms whether or not there exists the standard button image displayed at this coordinate position. The proximity detector portion 30 determines whether or not the standard button image displayed at the coordinate position is a button image that accepts input by the proximity of the finger 27 of the user. If "YES" in Step S49, the process proceeds to Step S50. In contrast, if "NO" in Step S49, the process returns to Step S41. In Step S50, the operation associated with the standard button image and performed by the proximity of the finger 27 of the user to the standard button image is performed. Examples of such an operation include the changing of the screen image displayed on the color liquid crystal display unit 11. After the operation associated with the standard button image is performed in Step S50, the process returns to Step S41, and the above operations are repeated.

In Example 6, the proximity detector portion 30 determines whether or not there exists the standard button image corresponding to the coordinate position specified as above and whether or not the standard button image is a button image that accepts the input by the proximity of the finger 27 of the user. However, the operation display control portion 28 may include a determining portion separately from the proximity detector portion 30, and this determining portion may perform the above determinations.

As above, in the microwave oven 1 according to Example 6, the cooking method screen image for explaining the cooking method can be changed into a different screen image only by the proximity of the finger to the liquid crystal touch panel 10, not by the contact of the finger with the liquid crystal touch panel 10. When cooking, the hands get dirty or wet most at the time of the preparation before starting the heating. At this time, the user can operate the liquid crystal touch panel 10 without the contact of the finger 27. Therefore, the usability for the users improves. As shown in Fig. 39, the push buttons, such as the heating start button 7, the cancel button 8, and the back button 9, are located under the liquid crystal touch panel 10. Therefore, when operating the push buttons, the hands do not get close to the liquid crystal touch panel 10. Thus, the liquid crystal touch panel 10 can stably detect the proximity without malfunctions.

### Modification Example 1 of Example 6

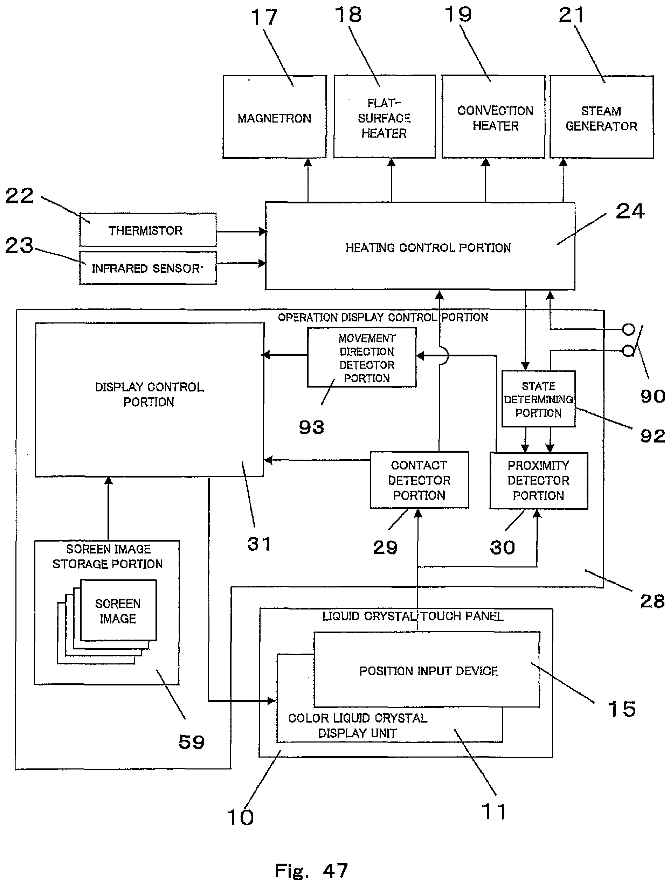

Next, Modification Example 1 of Example 6 will be explained. Control operations of the operation display control portion 28 executed in accordance with the input to the liquid crystal touch panel 10 constituted by the color liquid crystal display unit 11 and the position input device 15 will be explained in reference to Fig. 47. Fig. 47 is a block diagram showing one example of the configuration of major portions of the microwave oven 1 according to Example 6 of the embodiment. As shown in Fig. 47, the microwave oven 1 according to Modification Example 1 of Example 6 is different in configuration from the microwave oven 1 according to Example 6 in that the microwave oven 1 according to Modification Example 1 of Example 6 further includes a movement direction detector portion 93. Other than the movement direction detector portion 93, the components of the microwave oven 1 according to Modification Example 1 of Example 6 are the same as those of the microwave oven 1 according to Example 6, so that the same reference signs are used for the same components, and explanations thereof are omitted.

The movement direction detector portion 93 accepts proximity position information from the proximity detector portion 30 to detect a movement direction of the finger 27 that is close to the standard button image. In the microwave oven 1 according to Modification Example 1 of Example 6, the movement direction detector portion 93 monitors the change in the x-coordinate of the proximity position coordinates detected by the proximity detector portion 30. In a case where the value of the x-coordinate changes so as to decrease, the movement direction detector portion 93 determines that the finger 27 of the user has moved in the left direction. In contrast, in a case where the value of the x-coordinate changes so as to increase, the movement direction detector portion 93 determines that the finger 27 of the user has moved in the right direction. In a case where the value of the x-coordinate changes so as to decrease or increase by a predetermined amount or more within a predetermined period of time, the movement direction detector portion 93 determines that the finger 27 of the user has moved in the left or right direction. If the value of the x-coordinate changes so as to decrease or increase by an amount smaller than the predetermined amount, the movement direction detector portion 93 determines that the finger 27 of the user has not moved in the left or right direction. In a case where the movement direction detector portion 93 determines that the finger 27 has moved in the left or right direction, the display control portion 31 changes the screen image displayed on the color liquid crystal display unit 11.

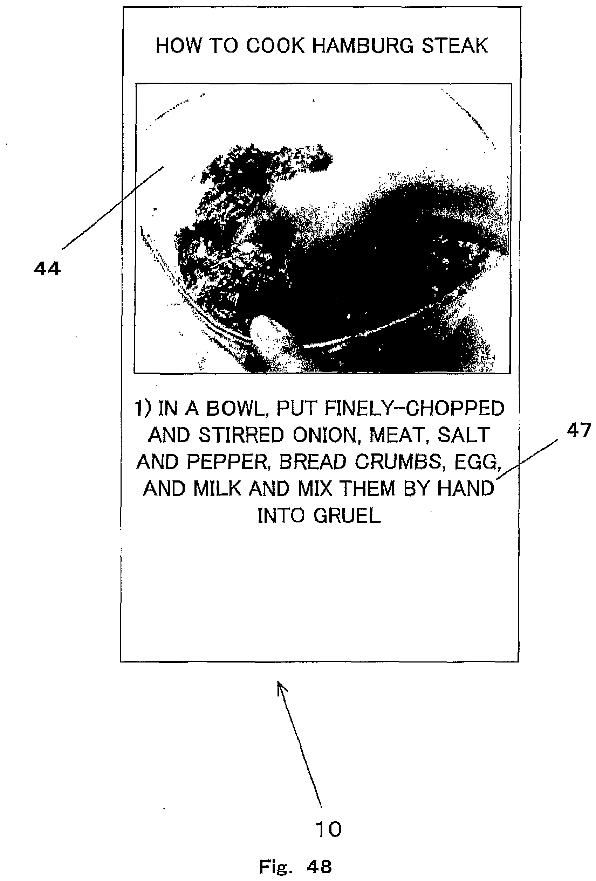

Next, the operations of the microwave oven 1 performed based on the input accepted by the liquid crystal touch panel 10 will be explained in reference to Fig. 48 showing the display example of the screen image displayed on the liquid crystal touch panel 10. Fig. 48 shows the cooking method screen image displayed at first among a plurality of cooking method screen images showing the cooking method regarding the preparation of the "hamburg steak". This screen image of Fig. 48 shows the image information 44 that is the picture at the time of the preparation and the detail information 47 showing the explanation and the like. Fig. 48 is a diagram showing one example of the cooking method screen image displayed on the liquid crystal touch panel 10 according to Modification Example 1 of Example 6. The cooking method screen image of Fig. 48 is displayed after the screen images of Figs. 42 to 44 are displayed. Since the screen images of Figs. 42 to 44 have already been explained, explanations thereof are omitted.

The cooking method screen image displayed on the liquid crystal touch panel 10 according to Modification Example 1 of Example 6 is different from the cooking method screen image displayed on the liquid crystal touch panel 10 according to Example 6 in that the cooking method screen image displayed on the liquid crystal touch panel 10 according to Modification Example 1 of Example 6 does not show the backward button image 75b or the forward button image 75c.

To be specific, in Modification Example 1 of Example 6, an operation of causing the finger 27 of the user or the like to get close to cooking method screen image and then moving the finger 27 in the left direction corresponds to the operation of performing the input to the cooking method screen image of Fig. 45 by using the forward button image 75c. By this operation, the screen image is changed into the cooking method screen image (not shown) for explaining the operation of shaping the hamburg steak as the next cooking step. In contrast, an operation of causing the finger 27 of the user or the like to get close to cooking method screen image and then moving the finger 27 in the right direction corresponds to the operation of performing the input to the cooking method screen image of Fig. 45 by using the backward button image 75b. By this operation, the screen image is changed into the selection confirmation screen image shown in Fig. 44.

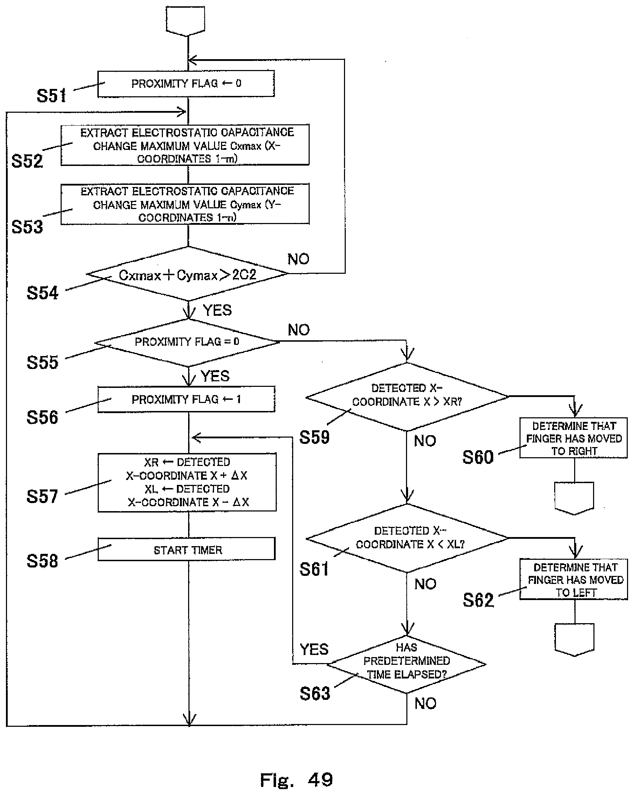

Next, the operations of the operation display control portion 28 including the contact detector portion 29, the proximity detector portion 30, the display control portion 31, the state determining portion 92, the screen image storage portion 59, and the movement direction detector portion 93 will be explained in reference to the flow chart of Fig. 49. Fig. 49 is a flow chart showing one example of the input accepting operation of the liquid crystal touch panel 10 included in the microwave oven 1 according to Modification Example 1 of Example 6. First, a proximity flag is set to zero in Step S51, and then, the process proceeds to Step S52. The proximity flag is a flag for determining whether or not the finger 27 is close to the screen image displayed on the liquid crystal touch panel 10. The proximity flag is one when the finger 27 is currently close to the screen image, and the proximity flag is zero when the finger 27 is currently not close to the screen image.

In Step S52, the proximity detector portion 30 detects the electrostatic capacitance changes Cx1 to Cxm of a plurality of (m) X-direction sensor electrodes 25 shown in Fig. 4 and then extracts a maximum value as an electrostatic capacitance change Cxmax from the electrostatic capacitance changes Cx1 to Cxm. Then, the process proceeds to Step S53. Next, in Step S53, the proximity detector portion 30 detects the electrostatic capacitance changes Cy1 to Cyn of a plurality of (n) Y-direction sensor electrodes 26 shown in Fig. 4 and then extracts a maximum value as an electrostatic capacitance change Cymax from the electrostatic capacitance changes Cy1 to Cyn. Then, the process proceeds to Step S54.

In Step S54, the proximity detector portion 30 adds the electrostatic capacitance changes Cxmax and Cymax respectively extracted in Steps S52 and S53. Then, the proximity detector portion 30 determines whether or not the calculation result is larger than the value that is twice the change amount C2 shown in Fig. 5. In a case where the proximity detector portion 30 determines that the sum of the electrostatic capacitance changes Cxmax and Cymax is larger than the value that is twice the change amount C2 ("YES" in Step S54), the process proceeds to Step S55. In contrast, in a case where the proximity detector portion 30 determines that the above-described sum is not larger than the value that is twice the change amount C2 ("NO" in Step S54), the process returns to Step S51, and the proximity flag is set to zero.

In Step S55, the movement direction detector portion 93 detects the proximity flag. When the proximity flag is zero, the process proceeds to Step S56. In contrast, when the proximity flag is not zero, the process proceeds to Step S59. To be specific, the case where the proximity flag is zero denotes a case where the proximity detector portion 30 had not detected the proximity but has detected the proximity for the first time. In contrast, the case where the proximity flag is not zero denotes a case where the proximity detector portion 30 had already detected the proximity and has detected the proximity again. The movement direction detector portion 93 sets the proximity flag to one in Step S56, and the process proceeds to Step S57. Then, in Step S57, the movement direction detector portion 93 obtains, by calculations, an x-coordinate XR used to determined whether or not the finger has moved to the right from the x-coordinate where the electrostatic capacitance change Cxmax has been generated and an x-coordinate XL used to determined whether or not the finger has moved to the left from the x-coordinate where the electrostatic capacitance change Cxmax has been generated. Herein, the x-coordinate XR is a value obtained by adding a movement distance ΔX to the x-coordinate where the electrostatic capacitance change Cxmax has been generated, and the x-coordinate XL is a value obtained by subtracting the movement distance ΔX from the x-coordinate where the electrostatic capacitance change Cxmax has been generated. Then, the process proceeds to Step S58. In Step S58, the movement direction detector portion 93 causes a timer, not shown, to start counting the elapsed time. Then, the process returns to Step S52.

In Step S59, the movement direction detector portion 93 determines whether or not the value of the x-coordinate where the electrostatic capacitance change Cxmax has been generated is larger than the value of the x-coordinate XR. In a case where the movement direction detector portion 93 determines that the value of the x-coordinate where the electrostatic capacitance change Cxmax has been generated is larger than the value of the x-coordinate XR, the process proceeds to Step S60, and the movement direction detector portion 93 determines that the finger 27 close to the image screen has moved in the right direction. In contrast, in a case where the movement direction detector portion 93 determines that the value of the x-coordinate where the electrostatic capacitance change Cxmax has been generated is not larger than the value of the x-coordinate XR, the process proceeds to Step S61. In Step S61, the movement direction detector portion 93 determines whether or not the value of the x-coordinate where the electrostatic capacitance change Cxmax has been generated is smaller than the value of the x-coordinate XL. In a case where the movement direction detector portion 93 determines that the value of the x-coordinate where the electrostatic capacitance change Cxmax has been generated is smaller than the value of the x-coordinate XL, the process proceeds to Step S62, and the movement direction detector portion 93 determines that the finger 27 close to the image screen has moved in the left direction. In contrast, in a case where the movement direction detector portion 93 determines that the value of the x-coordinate where the electrostatic capacitance change Cxmax has been generated is not smaller than the value of the x-coordinate XL, the process proceeds to Step S63.

In Step S63, the movement direction detector portion 93 determines whether or not a predetermined period of time has elapsed since the start of the counting of the timer in Step S58. In a case where the predetermined period of time has not elapsed, the process returns to Step S52, and the above operations are repeated. In contrast, in a case where the predetermined period of time has already elapsed, the process returns to Step S57, and the movement direction detector portion 93 obtains, by calculations, the x-coordinate XR used to determine whether or not the finger has moved to the right from the x-coordinate where the electrostatic capacitance change Cxmax detected by the proximity detector portion 30 at present has been generated and the x-coordinate XL used to determine whether or not the finger has moved to the left from the x-coordinate where the electrostatic capacitance change Cxmax detected by the proximity detector portion 30 at present has been generated. Then, the subsequent operations are repeated.

As above, the proximity flag is set to one when the finger 27 is currently close to the screen image displayed on the liquid crystal touch panel 10 and is set to zero when the finger 27 is currently not close to the screen image displayed on the liquid crystal touch panel 10. For example, the case where the proximity state is detected in Step S54 and the proximity flag becomes zero in Step S55 indicates that the state of the finger 27 of the user has been changed from a state where the finger 27 is away from the liquid crystal touch panel 10 to a state where the finger 27 has gotten close to the liquid crystal touch panel 10 for the first time. Then, the movement direction detector portion 93 determines whether or not the finger has moved to the left or right within a predetermined period of time by a certain distance ΔX or more from the x-coordinate of the proximity position coordinates, obtained when it is determined that the finger has gotten close to the screen image for the first time, by the operations in and after Step S52 repeated after the proximity flag is set to one.

As above, the microwave oven 1 according to Modification Example 1 of Example 6 is configured such that by causing the finger 27, located close to the screen image of the liquid crystal touch panel 10, to move while maintaining this proximity state, the screen image is changed in accordance with the movement direction of the finger 27. Therefore, unlike the cooking method screen image of the microwave oven 1 of Example 6, it is unnecessary to display the backward button image 75b and the forward button image 75c, so that the large picture and characters can be displayed as shown in Fig. 48. In addition, the microwave oven 1 according to Modification Example 1 of Example 6 is configured such that the screen image can be changed into a different screen image by the operation that is the movement of the finger 27 that is kept close to the screen image displayed on the liquid crystal touch panel 10. Therefore, the screen image cannot be changed into a different screen image only by the proximity of the finger 27 to the screen image displayed on the liquid crystal touch panel 10. Therefore, it is possible to prevent the screen image from being changed by the unintentional proximity operation of the user.

As explained above, the screen image displayed on the color liquid crystal display unit 11 can be changed only by the proximity of the finger to the touch panel 10, not by the contact of the finger with the touch panel. Therefore, even if the hands of the user are wet or dirty, the user can smoothly operate the touch panel, so that the usability improves. The proximity detection is enabled such that the screen image can be operated by the proximity of the finger especially at the time of the preparation during which the hands of the user are most likely to get dirty or wet in the cooking process. Thus, the screen image of the recipe information can be changed without the contact with the screen image, so that the usability improves. Depending on the cooking menu, the hands of the user do not get wet during the preparation. In the case of such a menu, the proximity detection may be inhibited. Thus, the proximity may be permitted or inhibited depending on the food menu.

As above, according to the heat cooking device of Example 6, the user can change the display of the display portion by the proximity of the finger to the touch panel before contacting the touch panel. Therefore, the number of times the user contacts the touch panel can be reduced, and the user can operate the touch panel without contacting the touch panel. Thus, the usability improves.

Example 6 may be combined with Example 1 or 2. In this case, the proximity detection is enabled or disabled based on the proximity input enable/disable information piece 100. However, in a case where the state determining portion 92 has determined that the microwave oven 1 is in a predetermined state, that is, for example, in a case where the state determining portion 92 has determined that the heating member is driving to perform the heating or the door 3 is opened, the proximity detection of the proximity detector portion 30 is inhibited regardless of the setting based on the proximity input enable/disable information piece 100. The state determining portion 92 of Example 6 realizes two functions, that is, serves as both the state determining portion and permission determining portion of the present invention.

Further, the microwave oven 1 according to Example 6 may be said to be the heat cooking device having the following configuration.

To be specific, a first heat cooking device according to Example 6 includes: a heating member configured to heat a food; a heating control portion configured to control the heating member; a push button configured to accept a heating operation content input by a user; a display portion configured to display information regarding heat cooking of the food; a touch panel formed integrally with the display portion and configured to be operated by the user for making selections; a screen image storage portion configured to store screen images displayed on the display portion; a contact detector portion configured to detect contact of a part of a human body with the touch panel; a proximity detector portion configured to detect proximity of a part of the human body to the touch panel; and a display control portion configured to control display of the display portion based on input from the contact detector portion or the proximity detector portion, wherein the push button is located under the touch panel.

According to this configuration, the contact detector portion detects the contact of a part of the human body with the touch panel, and the proximity detector portion detects the proximity of a part of the human body to the touch panel. In addition, the display control portion controls the display of the display portion based on the input from the contact detector portion or the proximity detector portion. Therefore, the user can change the display only by the proximity to the touch panel before contacting the touch panel. Since the push button is located under the touch panel, it is possible to prevent a case where when operating the push button, a part other than a finger tip gets close to the touch panel to change the display.

A second heat cooking device according to Example 6 is configured such that especially the first heat cooking device further includes: a heating chamber configured to heat the food; a door configured to open and close the heating chamber; and an open/close detector portion configured to detect the opening and closing of the door, wherein: the touch panel is provided on a front surface of the door; in a case where the open/close detector portion detects that the door is closed, the proximity detector portion detects whether or not a part of the human body has gotten close to the screen image; and in a case where the open/close detector portion detects that the door is opened, the proximity detector portion does not detect whether or not a part of the human body has gotten close to the screen image.

According to this configuration, in a case where the open/close detector portion configured to detect the opening and closing of the door configured to open or close the heating chamber detects that the door is opened, the proximity of a part of the human body is not detected. Therefore, when the door is opened, the proximity of a thing other than a part of the human body is not detected as the proximity of a part of the human body. Thus, the proximity can be stably detected, and the user can change the display only by the proximity to the touch panel before contacting the touch panel.

A third heat cooking device according to Example 6 is configured such that especially the first heat cooking device further includes a movement direction determining portion configured to determine a movement direction of a part of the human body detected by the proximity detector portion, wherein the display control portion changes and displays a screen image when the movement direction determining portion has detected the movement in a predetermined direction.

According to this configuration, the screen image is changed and displayed when it is detected that a part of the human body has gotten close to the screen image and moved in a predetermined direction. Therefore, the screen image is not changed by, for example, the unintentional proximity of the user. On this account, the detection is stably performed, and the user can change the display before contacting the touch panel.

A fourth heat cooking device according to Example 6 is configured such that especially in the first heat cooking device, the proximity detector portion performs the detection while the heating control portion is not driving the heating member and does not perform the detection while the heating control portion is driving the heating member.

According to this configuration, the proximity detector portion does not detect the proximity while the heating member is driving, that is, while electrical noises tend to be generated. Therefore, the detection is stably performed without misdetections, and the user can change the display before contacting the touch panel.

A fifth heat cooking device according to Example 6 is configured such that a plurality of screen images stored in the screen image storage portion are recipe information of the cooking menu.

According to this configuration, the user can change the screen image of the recipe information of the cooking menu without contacting the touch panel and can change the display without contacting the touch panel at the time of the preparation during which the hands of the user are most likely to get wet or dirty in the cooking process, such as a case where the user sees the recipe information. Thus, the usability improves.

For example, the heat cooking device (microwave oven 1) according to Example 6 can be utilized as below.

As above, in the heat cooking device of the present invention, the contact detector portion detects the contact of a part of the human body with the touch panel, and the proximity detector portion detects the proximity of a part of the human body to the touch panel. In addition, the display control portion controls the display of the display portion based on the input from the contact detector portion or the proximity detector portion. Therefore, the user can change the display only by the proximity of the finger before contacting the touch panel. On this account, the heat cooking device of the present invention is applicable to cooking devices, such as rice cookers and induction heating cooking devices, in addition to microwave ovens. Further, the present invention is widely applicable as input accepting devices to devices that require input operations.

### Example 7

Next, the following will explain, as Example 7, the microwave oven 1 configured such that: weak-sighted users can gropingly operate the liquid crystal touch panel 10; the operations are easy even in a case where a large number of buttons are displayed side-by-side at the same time, and the displayed sizes thereof are small; and the input is accepted without burdensome operations or misoperations.

In the microwave oven 1 according to Example 7, the configuration of determining that the proximity detection is enabled or disabled is not described. However, the microwave oven 1 according to Example 7 can be combined with the components of the microwave oven 1 according to Example 1 or 2.

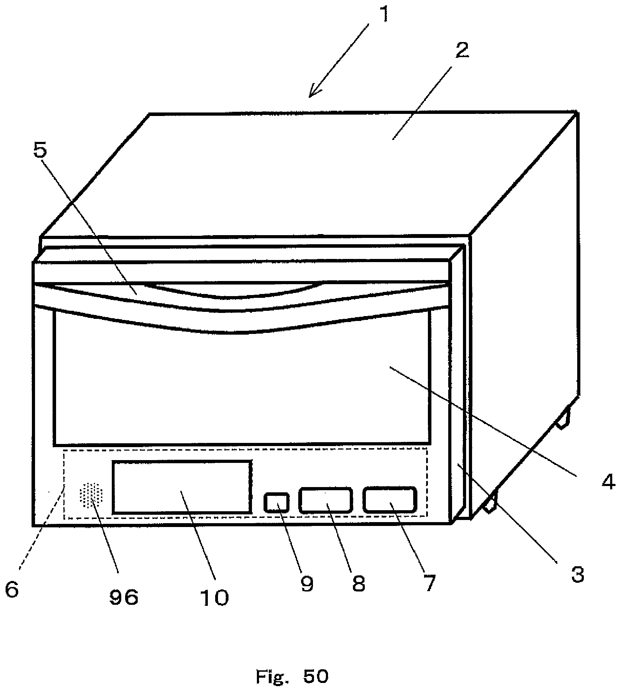

First, the appearance configuration of the microwave oven 1 according to Example 7 is different from that of the microwave oven 1 according to Example 1 shown in Fig. 1 as below. To be specific, as shown in Fig. 50, the appearance configuration of the microwave oven 1 according to Example 7 is different from that of the microwave oven 1 according to Example 1 in that the operation display portion 6 of the microwave oven 1 according to Example 7 further includes a speaker 96. Other than the speaker 96, the microwave oven 1 according to Example 7 is the same as the microwave oven 1 according to Example 1. Therefore, the same reference signs are used for the same members, and explanations thereof are omitted.

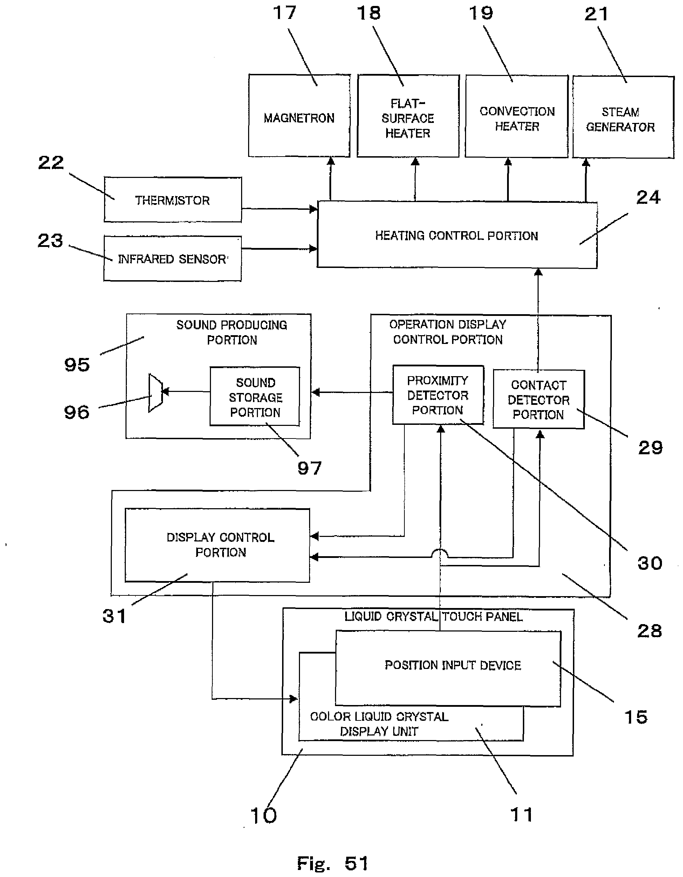

Next, the control of the operation executed in accordance with the input accepted by the liquid crystal touch panel 10 in the microwave oven 1 of Example 7 configured as above will be explained in reference to the control block diagram of Fig. 51. Fig. 51 is a block diagram showing one example of the configuration of major portions of the microwave oven 1 according to Example 7 of the embodiment. As shown in Fig. 51, the microwave oven 1 includes the heating control portion 24, the operation display control portion 28, and a sound producing portion 95 in addition to the above-described heating members and the liquid crystal touch panel 10.

As shown in Fig. 51, the operation display control portion 28 includes the contact detector portion 29, the proximity detector portion 30, and the display control portion 31. The configurations of the contact detector portion 29 and the proximity detector portion 30 are the same as those of the contact detector portion 29 and the proximity detector portion 30 included in the microwave oven 1 according to Example 1, so that explanations thereof are omitted.

In the operation display control portion 28, the display control portion 31 controls the display of the color liquid crystal display unit 11 based on the signal from the contact detector portion 29 or the proximity detector portion 30. The heating control portion 24 controls the magnetron 17, the flat-surface heater 18, the convection heater 19, and the steam generator 21 that are the heating members based o the signal from the contact detector portion 29 in accordance with the detections by the thermistor 22 and the infrared sensor 23 as described above.

The sound producing portion 95 includes a speaker 11 and a sound storage portion 97. The sound producing portion 95 emits from the speaker 11 based on the signal from the proximity detector portion 30 any one of sound patterns of a plurality of sound pattern data pieces stored in the sound storage portion 97.

Next, the operations of the operation display control portion 28 and the sound producing portion 95 will be more specifically explained in reference to Fig. 17 used in Example 3.

When the finger 27 gets close to the position of any one of the standard button images displayed on the liquid crystal touch panel 10 in a state where the basic menu screen image shown in Fig. 17 is displayed, the proximity detector portion 30 detects the proximity position coordinates. Then, the proximity detector portion 30 outputs the proximity position coordinates to the sound producing portion 95. The sound producing portion 95 extracts from the sound storage portion 97 the sound pattern corresponding to the proximity position coordinates to output the extracted sound pattern from the speaker 11. To be specific, when the finger 27 gets close to the warm-up button image 35 in the basic menu screen image, the speaker 11 emits a sound "warm up". When the finger 27 gets close to the heat-up button image 36, the speaker 11 emits a sound "heat up". When the finger 27 gets close to the steam button image 37, the speaker 11 emits a sound "steam". When the finger 27 gets close to the oven button image 38, the speaker 11 emits a sound "oven". When the finger 27 gets close to the grill button image 39, the speaker 11 emits a sound "grill". When the finger 27 gets close to the automatic menu button image 40, the speaker 11 emits a sound "automatic menu".

These words "warm up", "heat up", "steam", "oven", "grill", and "automatic menu" are stored as the sound patterns in the sound storage portion 97 in advance. The sound producing portion 95 stores correspondence relations between the proximity position coordinates detected by the proximity detector portion 30 and the sound patterns. The sound producing portion 95 emits from the speaker 11 the sound pattern corresponding to the standard button image displayed at the position to which the finger 27 has gotten close.

When the finger 27 contacts the position of any one of the standard button images in the basic menu screen image displayed on the liquid crystal touch panel 10, the contact detector portion 29 detects the contact of the finger 27, and the display control portion 31 changes the screen image into a next screen image for making detailed settings. When the finger 27 contacts, for example, the warm-up button image 35 that is one of the positions of the button images in the basic menu screen image displayed on the liquid crystal touch panel 10, the screen image is changed into a setting screen image of the heating finishing temperature. When the finger 27 contacts the heat-up button image 36, the screen image is changed into a setting screen image of the heating power (watt) and the heating time. When the finger 27 contacts the steam button image 37, the screen image is changed into a setting screen image of the heating time. The steam heating is used to perform steam cooking by the combination of steam, microwaves, and the flat-surface heater. When the finger 27 contacts the oven button image 38, the screen image is changed into a setting screen image of the heating temperature and the heating time. When the finger 27 contacts the grill button image 39, the screen image is changed into a screen image for selecting one-side grill or double-sided grill and setting the heating time. When the finger 27 contacts the automatic menu button image 40, the screen image is changed into the selection screen image of the automatic cooking menu.

Next, a state where the selection screen image of the automatic cooking menu is displayed on the liquid crystal touch panel 10 will be explained in reference to Fig. 18 explained in Example 3. In the automatic menu button group 41, the button images respectively show the food items, and sixteen button images are displayed in the entire screen image on the liquid crystal touch panel 10. In the automatic cooking menu, an appropriate heat control procedure by an appropriate heating member is preset to each food item. Therefore, when the user just selects the food item from the automatic cooking menu, the heat control operation corresponding to the selected food item is performed. When the finger 27 contacts the page turn button image 42, the entire screen image on the color liquid crystal display unit 11 is changed into a different automatic cooking menu screen image, and a new automatic menu button group including sixteen button images is displayed.

Next, the following will explain a case where the finger 27 has gotten close to the liquid crystal touch panel 10. When the proximity detector portion 30 detects the proximity of the finger 27 to the liquid crystal touch panel 10, the proximity detector portion 30 outputs the proximity position coordinates as the detection result to the sound producing portion 95. The sound producing portion 95 reads out from the sound storage portion 97 the sound pattern data piece of the standard button image corresponding to the accepted proximity position coordinates to emit the sound pattern through the speaker 96. For example, when the finger 27 has gotten close to the button image "ratatouille" in the screen image of the automatic cooking menu shown in Fig. 18, the sound producing portion 95 emits the sound "ratatouille" that is the name of the cooking item and then emits a sound "ingredients are eggplant, zucchini, onion, celery, bell pepper, peeled and boiled tomato, garlic, and soup cube". As described above, these sound patterns are stored in the sound storage portion 97. As above, when the proximity detector portion 30 detects the proximity of the finger 27 or the like to the position of the standard button image "ratatouille", the sound producing portion 95 extracts the corresponding sound pattern from the sound storage portion 97 to emit the corresponding sound through the speaker 11.

The automatic cooking menu includes the food items, such as "fried chicken" and "yellowtail teriyaki", whose ingredients and cooking methods are apparent and also includes the food items, such as "paella", "vongole rosso", and "ratatouille", which are difficult to recognize based only on those names of the food items. Therefore, it may be difficult for the user to recognize what food the user is going to cook, based only on the name of the food item. In such a case, if the standard button image shows not only the name of the food item but also the picture of the finished food item and the ingredients, the user can recognize the food item. However, in the case of displaying the above information, the area of each standard button image increases, so that the number of standard button images displayed in the same screen image at the same time is limited. In such a case, the user may have to turn the pages many times, so that the usability may deteriorate. However, in the microwave oven 1 according to Example 7, when the finger 27 has gotten close to the standard button image displayed in the automatic cooking menu screen image, the sounds of the name of the food item, the ingredients, the cooking method, the detail information, such as the heating time, and the like, which are associated with the standard button image, are emitted. With this, the user can clearly recognize the food item of the standard button image to which the finger 27 has gotten close, so that the user does not mistakenly select the food item.

When the finger of the user contacts any one of the standard button images in the automatic menu button group 41, the display control portion 31 changes the screen image into a setting screen image of the amount, the finished state, and the like. After the finger 27 of the user contacts, for example, the button image displayed on the liquid crystal touch panel 10 to finish various settings, the user pushes the heating start button 7 shown in Fig. 1 to start the heating.

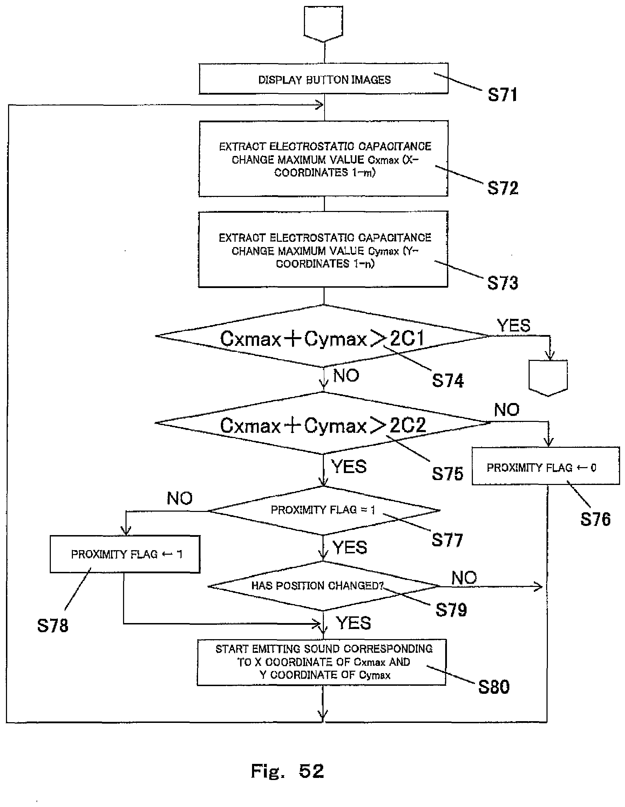

The flow of the operations of the operation display control portion 28 and the sound producing portion 95 when the finger 27 of the user contacts or gets close to the liquid crystal touch panel 10 in a state where the basic menu screen image of Fig. 17 is displayed will be explained in reference to Fig. 52. Fig. 52 is a flow chart showing one example of the input accepting operation of the liquid crystal touch panel 10 included in the microwave oven 1 according to Example 7.

First, in Step S71 of Fig. 52, the display control portion 31 causes the liquid crystal touch panel 10 to display the basic menu screen image including a plurality of button images shown in Fig. 17. Then, the process proceeds to Step S72. Next, in Step S72, the contact detector portion 29 detects the electrostatic capacitance changes Cx1 to Cxm of a plurality of (m) X-direction sensor electrodes 25 shown in Fig. 4 and then extracts a maximum value as an electrostatic capacitance change Cxmax from the electrostatic capacitance changes Cx1 to Cxm. Then, the process proceeds to Step S73. Next, in Step S73, the contact detector portion 29 detects the electrostatic capacitance changes Cy1 to Cyn of a plurality of (n) Y-direction sensor electrodes 26 shown in Fig. 4 and then extracts a maximum value as an electrostatic capacitance change Cymax from the electrostatic capacitance changes Cy1 to Cyn. Then, the process proceeds to Step S74.

In Step S74, the contact detector portion 29 adds the electrostatic capacitance changes Cxmax and Cymax respectively extracted in Steps S72 and S73 and determines whether or not the calculation result is larger than the value that is twice the change amount C1 shown in Fig. 5. In a case where the contact detector portion 29 determines that the sum of the electrostatic capacitance changes Cxmax and Cymax is not larger than the value that is twice the change amount C1, the process proceeds to Step S75. In contrast, in a case where the contact detector portion 29 determines that the sum of the electrostatic capacitance changes Cxmax and Cymax is larger than the value that is twice the change amount C1, the process terminates, and the screen image is changed into the detail setting screen image corresponding to each button function.

In Step S75, the proximity detector portion 30 determines whether or not the sum of the electrostatic capacitance changes Cxmax and Cymax respectively extracted in Steps S72 and S73 is larger than the value that is twice the change amount C2 that is smaller than the change amount C1 shown in Fig. 5. Then, in a case where the proximity detector portion 30 determines that the sum of the electrostatic capacitance changes Cxmax and Cymax is larger than the value that is twice the change amount C2, the process proceeds to Step S77. In contrast, in a case where the proximity detector portion 30 determines that the sum of the electrostatic capacitance changes Cxmax and Cymax is not larger than the value that is twice the change amount C2, it is determined that the finger does not contact or get close to the button image. Then, the process proceeds to Step S76. In Step S76, the proximity detector portion 30 sets the proximity flag to zero. Then, the process returns to Step S72.

In Step S77, the proximity detector portion 30 determines whether or not the proximity flag is one. When the proximity flag is one, the process proceeds to Step S79. In contrast, when the proximity flag is not one, it is determined that the state of the finger 27 of the user has been changed from a state where the finger 27 is not close to the standard button image to a state where it is close to the standard button image. Then, the process proceeds to Step S78. In Step S78, the proximity detector portion 30 sets the proximity flag to one. Then, the process proceeds to Step S80 that is the next step.

In contrast, in a case where the proximity detector portion 30 determines in Step S77 that the proximity flag is one, this indicates that the state where the finger 27 of the user is close to, for example, the standard button image is continuing. Next, in Step S79, the proximity detector portion 30 determines whether or not the proximity position of the finger 27 has changed. This can be determined by examining whether or not the type of the standard button image corresponding to the x-coordinate where the electrostatic capacitance change Cxmax has been generated and the y-coordinate where the electrostatic capacitance change Cymax has been generated has changed. In a case where the proximity detector portion 30 determines that the proximity position has changed to the position of a different standard button image, the process proceeds to Step S80. In contrast, in a case where the proximity detector portion 30 determines that the proximity position has not changed from the original button position, the process returns to Step S72.

Here, the operation in Step S80 is an operation performed after it is determined in Step S77 that the state of the finger has been changed from a state where the finger is not close to the standard button image to a state where it is close to the standard button image, and the proximity flag is set to one in Step S78 or an operation performed after it is determined in Step S77 that the proximity state is continuing, and it is determined in Step S78 that the proximity position has changed. Therefore, in Step S80, the sound producing portion 95 confirms the standard button image corresponding to the proximity position coordinates to which the finger 27 has gotten close, extracts from the sound storage portion 97 the sound pattern corresponding to this button image, and emits the extracted sound pattern from the speaker 11.

According to the above operations of the microwave oven 1 of Example 7, when the state of the finger 27 of the user has been changed from a state where the finger 27 is not close to the standard button image to a state where it is close to the standard button image, the microwave oven 1 can inform, by the sound, the user of the function executed when the standard button image has been selected. Even in a case where the proximity of the finger 27 of the user to the standard button image is continuing, the sound is prevented from being repeatedly emitted. In a case where the proximity state is continuing, and the proximity position has changed, the microwave oven 1 can inform, by the sound, the user of the function executed when the standard button image corresponding to this changed proximity position has been selected.

For example, the flow of the operations when the finger has contacted or gotten close to the liquid crystal touch panel 10 in the display state of Fig. 18 is the same as the operation flow shown in Fig. 52.

As above, in the microwave oven 1 according to Example 7, the position input device 15 can distinctively detect the contact of the finger 27 of the user with the liquid crystal touch panel 10 and the proximity of the finger 27 of the user to the liquid crystal touch panel 10 based on the magnitude of the change in the electrostatic capacitance. Then, when the proximity detector portion 30 of the operation display control portion 28 detects the proximity of the finger 27, the sound producing portion 95 can emit the sound corresponding to the standard button image displayed at this proximity position. Therefore, before the user contacts the standard button image, the user can recognize the function executed when the finger 27 of the user has contacted this standard button image. After the user confirms the function before contacting the standard button, the user can contact the standard button located at the position to which the finger 27 has gotten close. In contrast, when the contact of the finger 27 of the user is detected, for example, the operation display control portion 28 performs various settings of the heating members. Thus, the usability can be improved.

The proximity state of a part of the human body of the user may occur against the user's intention by the accidental proximity of a head, a face, an arm, a shoulder, or the like. However, even in this case, the sound that informs the user of the function is just emitted, and the heating member is not actually driven. Therefore, unintentional heating is not started, and the microwave oven 1 can be used safely.

### Modification Example 1 of Example 7

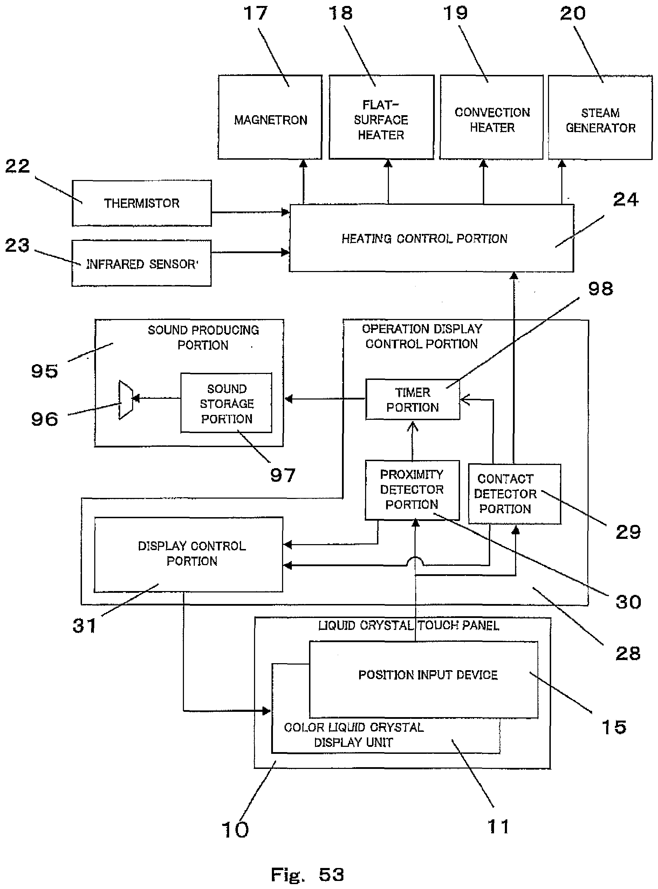

Next, Modification Example 1 of Example 7 will be explained. A control block diagram according to Modification Example 1 of Example 7 is show in Fig. 53. Fig. 53 is a block diagram showing one example of the configuration of major portions of the microwave oven 1 according to Modification Example 1 of Example 7. As shown in Fig. 53, the block diagram of the microwave oven 1 according to Modification Example 1 of Example 7 is different from the block diagram of the microwave oven 1 of Example 7 in that the operation display control portion 28 further includes a timer portion 98.

The timer portion 98 is a timer configured to count a period of time in which the proximity detector portion 30 is performing the proximity detection. To be specific, when the proximity detector portion 30 detects the proximity of a part of the human body, such as the finger 27, to the position input device 15 of the liquid crystal touch panel 10, the proximity detector portion 30 outputs the proximity position coordinates to the timer portion 98 while it is detecting the proximity of the finger 27 or the like. The timer portion 98 starts counting a time from when the timer portion 98 starts accepting the proximity position coordinates from the proximity detector portion 30. In a case where the timer portion 98 continuously accepts the proximity position coordinates from the proximity detector portion 30 for a predetermined period of time, the timer portion 98 transmits to the sound producing portion 95 a signal indicating the proximity position coordinates. The sound producing portion 95 extracts the sound pattern data piece corresponding to the accepted proximity position coordinates from a plurality of sound pattern data pieces stored in the sound storage portion 97 and emits the sound of the extracted sound pattern data piece from the speaker 11.

In a case where the contact detector portion 29 detects the contact of a part of the human body, such as the finger 27, with the liquid crystal touch panel 10 while the timer portion 98 is counting the period of time of the proximity detection until the predetermined period of time, the timer portion 98 stops counting the period of time and does not instruct the emission of the sound from the sound producing portion 95.

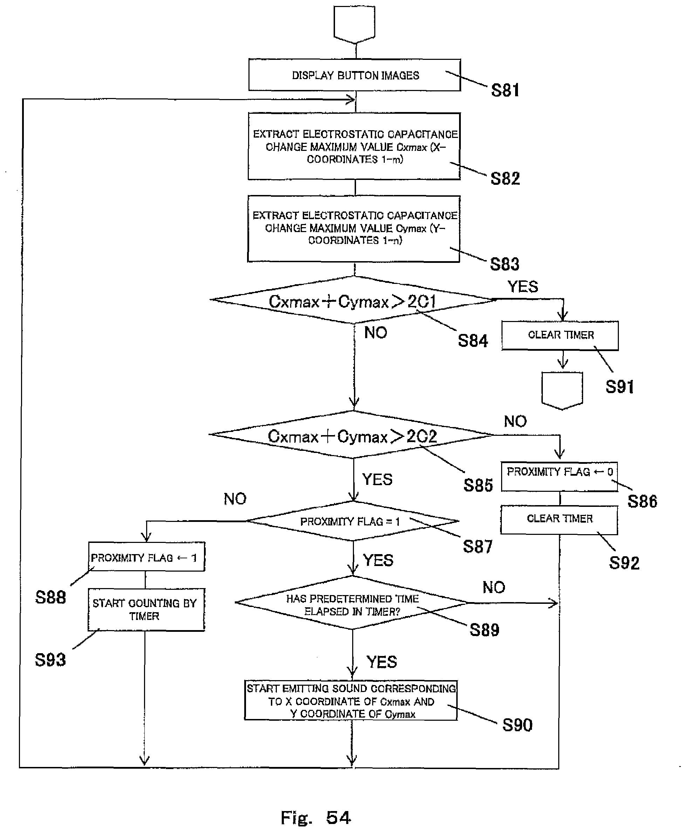

Next, the flow of the operations of the operation display control portion 28 and the sound producing portion 95 when the finger 27 of the user or the like has contacted or gotten close to the liquid crystal touch panel 10 in the microwave oven 1 according to Modification Example 1 of Example 7 is shown in Fig. 54. Fig. 54 is a flow chart showing one example of the input accepting operation of the liquid crystal touch panel included in the microwave oven according to Modification Example 1 of Example 7. Since Steps S81 to S83 shown in Fig. 54 are the same as Steps S71 to S73 of the flow chart shown in Fig. 52, explanations thereof are omitted.

In Step S84, the contact detector portion 29 adds the electrostatic capacitance changes Cxmax and Cymax respectively extracted in Steps S82 and S83 and determines whether or not the sum of the electrostatic capacitance changes Cxmax and Cymax is larger than the value that is twice the change amount C1. In a case where the contact detector portion 29 determines that the sum of the electrostatic capacitance changes Cxmax and Cymax is not larger than the value that is twice the change amount C1 ("NO" in Step S84), the process proceeds to Step S85. In contrast, in a case where the contact detector portion 29 determines that the sum is larger than the value that is twice the change amount C1, the process proceeds to Step S91. In Step S91, the contact detector portion 29 clears the counting of the timer portion 98. To be specific, in a case where the proximity detector portion 30 has already detected the proximity input, the timer portion 98 has already started counting the elapsed time. In this case, when the timer portion 98 accepts the contact position coordinates, indicating the detection of the contact input of the finger 27 or the like, from the contact detector portion 29, the timer portion 98 stops the counting. Then, the timer portion 98 clears the counting to be initialized. In addition, the contact detector portion 29 outputs the contact position coordinates to the display control portion 31. The display control portion 31 selects the standard button image displayed at the contact position coordinates to display the detail setting screen image corresponding to the function executed by the contact.

In Step S85, the proximity detector portion 30 determines whether or not the sum of the electrostatic capacitance changes Cxmax and Cymax respectively extracted in Steps S82 and S83 is larger than the value that is twice the change amount C2 that is smaller than the change amount C1. In a case where the proximity detector portion 30 determines that the sum is larger than the value that is twice the change amount C2, the process proceeds to Step S87. In contrast, in a case where the proximity detector portion 30 determines that the sum is not larger than the value that is twice the change amount C2, it is determined that the finger 27 of the user or the like does not contact or get close to the liquid crystal touch panel 10. Then, the process proceeds to Step S86. In Step S86, the proximity detector portion 30 sets the proximity flag to zero. Then, the process proceeds to Step S92. In a case where it is determined that the finger 27 of the user or the like does not contact or get close to the liquid crystal touch panel 10, the timer portion 98 clears the counting to be initialized (Step S92). Then, the process returns to Step S82, and the above operations are repeated.

In contrast, in Step S87, the proximity detector portion 30 determines whether or not the proximity flag is one. In a case where the proximity detector portion 30 determines that the proximity flag is one ("YES" in Step S87), it is determined that the state where the finger 27 of the user or the like is close to the liquid crystal touch panel 10 is continuing. Then, the process proceeds to Step S89. In contrast, in a case where the proximity detector portion 30 determines that the proximity flag is not one, it is determined that the state of the finger 27 of the user or the like has been changed from a state where the finger 27 is not close to the liquid crystal touch panel 10 to a state where the finger 27 is close to the liquid crystal touch panel 10. Then, the process proceeds to Step S88. In Step S88, the proximity detector portion 30 sets the proximity flag to one. Then, the process proceeds to Step S93. In Step S93, the timer portion 98 starts counting the elapsed time from when the proximity is detected. Then, the process returns to Step S82.

In Step S89, the timer portion 98 counts the elapsed time in which the proximity state of the finger 27 of the user or the like to the liquid crystal touch panel 10 is continuing and determines whether or not a predetermined period of time has elapsed. In a case where the timer portion 98 determines that the predetermined period of time has elapsed ("YES" in Step S89), the process proceeds to Step S90. In contrast, in a case where the timer portion 98 determines that the predetermined period of time has not elapsed ("YES" in Step S89), the process returns to Step S82.

In a case where the timer portion 98 determines that the period of time in which the proximity state of the finger 27 of the user or the like to the liquid crystal touch panel 10 is continuing has exceeded the predetermined period of time, the timer portion 98 outputs the detected contact position coordinates (the x-coordinate where the electrostatic capacitance change Cxmax has been generated and the y-coordinate where the electrostatic capacitance change Cymax has been generated) to the sound producing portion 95. The sound producing portion 95 specifies the standard button image displayed at the proximity position coordinates accepted from the timer portion 98 and reads out from the sound storage portion 97 the sound pattern data piece corresponding to the specified standard button image. Then, the sound producing portion 95 starts emitting the sound from the speaker 11 based on the read sound pattern data piece (Step S90).

Even in a case where the finger 27 usually contacts the liquid crystal touch panel 10 without hesitation to operate the liquid crystal touch panel 10, an instantaneous proximity state of the finger 27 before the contact of the finger 27 occurs. In Modification Example 1 of Example 7, by the above configuration and operations, the emission of the sound from the sound producing portion 95 by the above instantaneous proximity state can be prevented. For example, in a case where the user hesitates whether to contact the standard button image or not and therefore maintains the proximity state of the finger 27 for a predetermined period of time, the sound producing portion 95 can inform, by the sound, the user of the function associated with the standard button image to which the finger 27 has gotten close.

In a case where the predetermined period of time is set to, for example, one second, the sound producing portion 95 can inform the user of the function by the sound only when the user hesitates whether to contact the displayed standard button image or not.

In the configuration of Modification Example 1 of Example 7, the sound is emitted in a case where the timer portion 98 determines that the proximity state has continued for a predetermined period of time. Therefore, it is possible to prevent the sound from being emitted in a case where the finger 27 contacts the liquid crystal touch panel 10 without hesitation to operate the liquid crystal touch panel 10.

As above, the microwave oven 1 according to Example 7 may be configured as below.

A first heat cooking device according to Example 7 includes: a heating member configured to heat a food; an operating portion configured to accept an operation content input by a user; a heating control portion configured to control the heating member; a sound producing portion configured to emit a sound; a proximity detector portion configured to detect proximity of a part of a human body to the operating portion; and a contact detector portion configured to detect contact of a part of the human body with the operating portion, wherein the heating control portion controls the heating member based on an input from the contact detector portion, and the sound producing portion emits the sound corresponding to a position to which a part of the human body has gotten close, based on an input from the proximity detector portion.

According to this configuration, when a part of the human body gets close to the operating portion, the proximity detector portion detects the proximity, and the sound producing portion emits the sound corresponding to the proximity position. Further, when a part of the human body contacts the operating portion, the contact detector portion detects the contact, and the heating control portion controls the heating member based on the input from the contact detector portion. Therefore, the user can recognize the content of the operation when a part of the human body is close to the operating portion before contacting the operating portion. Thus, the weak-sighted user can gropingly operate the operating portion. In addition, the user can operate the operating portion even if keys are small, and the operating portion can accept the operation input without burdens or mistakes.

A second heat cooking device according to Example 7 is configured such that especially the first heat cooking device further includes a display portion configured to display information regarding heat cooking of the food, wherein: the operating portion is a touch panel formed integrally with the display portion; the proximity detector portion detects coordinates to which a part of the human body has gotten close; and the sound producing portion emits the sound corresponding to the coordinates detected by the proximity detector portion.

According to this configuration, the display portion displays the information regarding the heat cooking, and the touch panel is formed integrally with the display portion. In addition, the proximity detector portion detects the coordinates on the touch panel to which a part of the human body has gotten close, and the sound producing portion emits the sound corresponding to the coordinates detected by the proximity detector portion. Therefore, the user can recognize the content of the operation when a part of the human body is close to the operating portion before contacting the operating portion. Thus, the weak-sighted user can gropingly operate the operating portion. In addition, the user can operate the operating portion even if keys are small, and the operating portion can accept the operation input without burdens or mistakes.

A third heat cooking device according to Example 7 is configured such that especially in the configuration of the second heat cooking device, the display portion displays button images of a plurality of cooking menus, and when the proximity detector portion detects the proximity of a part of the human body to the button image, the sound producing portion emits the sound of the detail information regarding the cooking menu corresponding to the button image.

According to this configuration, the display portion displays the button images of a plurality of cooking menus, and when the proximity detector portion detects the proximity of a part of the human body to the button image, the sound producing portion emits the sound of the detail information regarding the cooking menu corresponding to the button image. Therefore, the operations can be performed even in a case where a large number of small keys of the button images are displayed on the display portion at the same time, and the operation input can be accepted without burdensome operations or misoperations.

A fourth heat cooking device according to Example 7 is configured such that especially any one of the first to third heat cooking devices further includes a timer configured to count a time from when the proximity detector portion detects the proximity until when the contact detector portion detects the contact, wherein when the timer counts a predetermined time or longer, the sound producing portion emits the sound.

According to this configuration, the timer counts the time from when the proximity detector portion detects the proximity until when the contact detector portion detects the contact, and when the timer counts the predetermined time or longer, the sound producing portion emits the sound. Therefore, the sound producing portion does not emit the sound when a normal operation is performed, that is, when the finger contacts the image immediately after the finger has gotten close to the image, but the sound producing portion emits the sound when the finger does not contact the image because of hesitation immediately after the finger has gotten close to the image. On this account, the usability further improves. Thus, the weak-sighted user can gropingly operate the operating portion. In addition, the user can operate the operating portion even if keys are small, and the operating portion can accept the operation input without burdens or mistakes.

A fifth heat cooking device according to Example 7 includes: an operating portion configured to accept an operation content input by a user; a sound producing portion configured to emit a sound; a proximity detector portion configured to detect proximity of a part of a human body to the operating portion; and a contact detector portion configured to detect contact of a part of the human body with the operating portion, wherein the sound producing portion is an input accepting device configured to emit a sound corresponding to a proximity position of a part of the human body, based on an input from the proximity detector portion.

According to this configuration, when a part of the human body gets close to the operating portion, the proximity detector portion detects the proximity, and the sound producing portion emits the sound corresponding to the proximity position. Further, when a part of the human body contacts the operating portion, the contact detector portion detects the contact and accepts it as the input. Therefore, the user can recognize the content of the operation when a part of the human body is close to the operating portion before contacting the operating portion. Thus, the weak-sighted user can gropingly operate the operating portion. In addition, the user can operate the operating portion even if keys are small, and the operating portion can accept the operation input without burdens or mistakes.

According to the configuration of Example 7, the user can recognize the content of the operation when the finger is close to the operating unit before contacting the operating unit, and the weak-sighted user can gropingly operate the operating portion. In addition, the user can operate the operating portion even if keys are small, and the operating portion can accept the operation input without burdens or mistakes.

For example, the heat cooking device (microwave oven 1) according to Example 7 can be utilized as below.

As above, according to the present invention, when a part of the human body gets close to the operating portion, the proximity detector portion detects the proximity, and the sound producing portion emits the sound corresponding to the proximity position. Further, when a part of the human body contacts the operating portion, the contact detector portion detects the contact, and the heating control portion controls the heating member based on the input from the contact detector portion. Therefore, the user can recognize the content of the operation when a part of the human body is close to the operating portion before contacting the operating portion. Thus, the weak-sighted user can gropingly operate the operating portion. In addition, the user can operate the operating portion even if keys are small, and the operating portion can accept the operation input without burdens or mistakes. On this account, the present invention is applicable to cooking devices, such as rice cookers and induction heating cooking devices, in addition to microwave ovens. Further, the present invention is widely applicable as input accepting devices to devices that require input operations.

Each of Examples 1 to 7 has explained, as an example, the liquid crystal touch panel 10 capable of finely detecting the contact position and the proximity position as an input portion that accepts the instruction from the user and configured by integrating the color liquid crystal display unit 11 and the position input device 15. However, the input portion may be configured not to include the color liquid crystal display unit 11 and constituted by a plurality of flat buttons capable of detecting the change in the electrostatic capacitance to distinctively detect the contact and the proximity.

Each of Examples 1 to 7 has explained the microwave oven 1 as the heat cooking device. However, even in a case where the technical idea disclosed in Example 6 is applied to a rice cooker, an induction heating cooking device, or the like, the same effects as above can be obtained. Further, the present invention is not limited to the heat cooking device and is applicable to the other electronic device or an input accepting device utilized in combination with the other electronic device.

From the foregoing explanation, many modifications and other embodiments of the present invention are obvious to one skilled in the art.

### Industrial Applicability

The electronic device of the present invention can detect the contact input and proximity input by the user to the operation button displayed on the display portion. In addition, by appropriately setting a condition for detecting the proximity input, the operability for the input can be improved. Therefore, the present invention is widely applicable to input devices that accept input from users.

### Reference Signs List

1 microwave oven (electronic device, heat cooking device)
2 case
3 door
6 operation display portion
7 heating start button (push button)
8 cancel button (push button)
9 back button (push button)
10 liquid crystal touch panel (display portion)
11 color liquid crystal display unit (display portion)
15 position input device
17 magnetron (heating member)
18 flat-surface heater (heating member)
19 convection heater (heating member)
21 steam generator (heating member)
22 thermistor
23 infrared sensor
24 heating control portion (function executing portion)
25 X-direction sensor electrode (proximity detector element)
26 Y-direction sensor electrode (proximity detector element)
27 finger
28 operation display control portion
29 contact detector portion
30 proximity detector portion
31 display control portion (function executing portion)
32 standard button image storage portion (storage device)
33 enlarge button image storage portion
34 display changing portion (informing portion)
35 warm-up button image (operation button)
36 heat-up button image (operation button)
37 steam button image (operation button)
38 oven button image (operation button)
39 grill button image (operation button)
40 automatic menu button image (operation button)
41 automatic menu button group
42 page turn button image (operation button)
43 enlarge button image
44 image information (function information)
45a amount setting button image (operation button)
45b amount setting button image (operation button)
46 finishing adjustment slider (operation button)
47 detail information (function information)
48 start button image (operation button)
49 enable/disable determining portion (permission determining portion)
52 switching portion
53 timer portion (state determining portion, permission determining portion)
54 additional timer portion
55 heating power display portion
56 heating power setting portion
57 heating time display portion
58 heating time setting portion
59 screen image storage portion (storage device)
60 steamed food/boiled food button image (operation button)
61 grilled food button image (operation button)
62 grilled fish button image (operation button)
63 fried food/stir-fried food button image (operation button)
64 sweets/bread button image (operation button)
65 combination set button image (operation button)
66 proximity time image
67 roast pork button image (operation button)
68 meat and vegetable roll button image (operation button)
69 hamburg steak button image (operation button)
70 salt-grilled chicken button image (operation button)
71 teriyaki chicken button image (operation button)
72 gratin button image (operation button)
73a amount setting button image (operation button)
73b amount setting button image (operation button)
74 finishing adjustment slider (operation button)
75a how-to-cook showing button image (operation button)
75b backward button image (operation button)
75c forward button image (operation button)
84 bottom surface heating time display portion
85 bottom surface heating time setting portion
86 upper surface heating time display portion
87 upper surface heating time setting portion
90 open/close detector portion
91 projection
92 state determining portion (permission determining portion)
93 movement direction detector portion
95 sound producing portion (informing portion)
96 speaker
97 sound storage portion
98 timer portion
100 proximity input enable/disable information piece
132 button image storage portion
133 proximity time image storage portion

## Claims

1. An electronic device comprising:
a display portion (10, 11) configured to display screen images each including operation buttons, each of which accepts input from a user;
a proximity detector portion (30) configured to detect, as proximity input from the user, proximity of the user to the operation button included in the screen image;
a contact detector portion (29) configured to detect, as contact input from the user, contact of the user with the operation button;
a function executing portion (24, 31) configured to execute functions in accordance with the contact input to the operation buttons, the functions being respectively associated with the operation buttons;
an informing portion (34, 95) configured to inform the user of function information indicating the function executed by the function executing portion (24, 31);
a storage device (32, 59) configured to store proximity input enable/disable information pieces such that each of the proximity input enable/disable information pieces is associated with at least a part of the screen image, the proximity input enable/disable information pieces each indicating whether to permit the proximity detector portion (30) to detect the proximity input; and
a permission determining portion (49, 53, 92) configured to determine based on the proximity input enable/disable information piece whether to permit the proximity detector portion (30) to detect the proximity input,
**characterized in that**:
in a case where the permission determining portion (49, 53, 92) permits the proximity detector portion (30) to detect the proximity input to the operation button and the proximity input is detected, the informing portion (34, 95) informs the user of the function information associated with the operation button;
the electronic device further comprising:
a switching portion (42) configured to:
in a case where the permission determining portion (49, 53, 92) permits the proximity detector portion (30) to detect the proximity input to the operation button, allow proximity information to be transmitted to the proximity detector portion (30), the proximity information indicating the proximity input, and
in a case where the permission determining portion (49, 53, 92) does not permit the proximity detector portion (30) to detect the proximity input to the operation button, disallow the proximity information to be transmitted to the proximity detector portion (30).

2. The electronic device according to claim 1, wherein:
in a case where the permission determining portion (49, 53, 92) permits the proximity detector portion (30) to detect the proximity input to the operation button, the switching portion (52) connects signal wires to each other, the signal wires being used to transmit the proximity information to the proximity detector portion (30); and
in a case where the permission determining portion (49, 53, 92) does not permit the proximity detector portion (30) to detect the proximity input to the operation button, the switching portion (52) disconnects the signal wires from each other.

3. The electronic device according to claim 1, wherein the storage device (32, 59) stores the proximity input enable/disable information pieces such that the proximity input enable/disable information pieces are respectively associated with the operation buttons, each of which corresponds to at least a part of the screen image.

4. The electronic device according to claim 1, wherein the storage device (32, 59) stores the proximity input enable/disable information pieces such that the proximity input enable/disable information pieces are respectively associated with the screen images, each of which corresponds to at least a part of the screen image.

5. The electronic device according to any one of claims 1 to 4, further comprising a state determining portion (53, 92) configured to detect a state of the electronic device to determine whether or not the state of the electronic device is a predetermined state, wherein
in a case where the state determining portion (53, 92) determines that the state of the electronic device is the predetermined state, the permission determining portion (49, 53, 92) inhibits the detection of the proximity input by the proximity detector portion (30) regardless of the proximity input enable/disable information piece.

6. The electronic device according to claim 1, wherein the informing portion (34, 95) enlarges an image of the function information on the display portion (10, 11).

7. The electronic device according to any one of claims 1 to 6, wherein:
each of the operation buttons is constituted by an operation image displayed in the screen image on the display portion (10, 11) and a proximity detector element (25, 26) provided so as to correspond to the operation image;
the electronic device further includes a physical push button configured to be pushed by the user to accept the input; and
the push button is provided at such a position that when the user gets close to or contacts the push button, the proximity detector portion (30) does not detect the proximity input.

8. A heat cooking device comprising the electronic device according to any one of claims 1 to 7.

9. A method of operating the electronic device according to claim 1, comprising:
a displaying step of causing the display portion (10, 11) to display the screen image including the operation buttons, each of which accepts the input from the user;
a proximity detection step of causing the proximity detector portion (30) to detect, as the proximity input from the user, the proximity of the user to the operation button included in the screen image;
a determining step of causing the permission determining portion (49, 53, 92) to determine whether to permit the detection of the proximity input in the proximity detection step;
a contact detecting step of causing the contact detector portion (29) to detect, as the contact input from the user, the contact of the user to the operation button at which the proximity input has been detected;
a function executing step of causing the function execution portion (24, 31) to execute the function, associated with the operation button, in accordance with the contact input to the operation button,
**characterized in that**:
an informing step of causing the informing portion (34, 95) to inform the user of function information in a case where the detection of the proximity input to the operation button is permitted in the determining step and the proximity input is detected, the function information indicating the function associated with the operation button and executed in the electronic device; and
a switching step of causing the switching portion (52) to in a case where the detection of the proximity input to the operation button by the proximity detector portion (30) is permitted in the determining step, allow the proximity information to be transmitted to the proximity detector portion (30), the proximity information indicating the proximity input, and
in a case where the detection of the proximity input to the operation button by the proximity detector portion (30) is not permitted in the determining step, disallow the proximity information to be transmitted to the proximity detector portion (30).

10. The method according to claim 9, wherein:
in a case where the detection of the proximity input to the operation button by the proximity detector portion (30) is permitted in the determining step, signal wires are connected to each other by the switching portion (52) in the switching step, the signal wires being used to transmit the proximity information to the proximity detector portion (30), and
in a case where the detection of the proximity input to the operation button by the proximity detector portion (30) is not permitted in the determining step, the signal wires are disconnected from each other by the switching portion (52) in the switching step.

## Patentansprüche

1. Elektronische Einrichtung, die Folgendes enthält:
einen Anzeigeabschnitt (10, 11), der konfiguriert ist, Bildschirmabbildungen anzuzeigen, die jeweils Betätigungsschaltflächen enthalten, von denen jede eine Eingabe von einem Anwender annimmt;
einen Näherungsdetektorabschnitt (30), der konfiguriert ist, als eine Näherungseingabe vom Anwender eine Nähe des Anwenders zur Betätigungsschaltfläche, die in der Bildschirmabbildung enthalten ist, zu detektieren;
einen Kontaktdetektorabschnitt (29), der konfiguriert ist, als eine Kontakteingabe vom Anwender einen Kontakt vom Anwender an der Betätigungsschaltfläche zu detektieren;
einen Funktionsausführungsabschnitt (24, 31), der konfiguriert ist, Funktionen gemäß der Kontakteingabe an den Betätigungsschaltflächen auszuführen, wobei die Funktionen den Betätigungsschaltflächen entsprechend zugeordnet sind;
einen Informationsabschnitt (34, 95), der konfiguriert ist, den Anwender über Funktionsdaten, die die Funktion, die durch den Funktionsausführungsabschnitt (24, 31) ausgeführt wird, anzeigen, zu informieren;
eine Speichereinrichtung (32, 59), die konfiguriert ist, Aktivierungs-/Deaktivierungsdatenelemente von Näherungseingaben derart zu speichern, dass jedes der Aktivierungs-/Deaktivierungsdatenelemente von Näherungseingaben mindestens einem Teil der Bildschirmabbildung zugeordnet ist, wobei die Aktivierungs-/Deaktivierungsdatenelemente von Näherungseingaben jeweils anzeigen, ob dem Näherungsdetektorabschnitt (30) erlaubt werden soll, die Näherungseingabe zu detektieren; und
einen Erlaubnisbestimmungsabschnitt (49, 53, 92), der konfiguriert ist, auf der Grundlage der Aktivierungs-/Deaktivierungsdatenelemente von Näherungseingaben zu bestimmen, ob dem Näherungsdetektorabschnitt (30) erlaubt werden soll, die Näherungseingabe zu detektieren,
**dadurch gekennzeichnet, dass**
dann, wenn der Erlaubnisbestimmungsabschnitt (49, 53, 92) dem Näherungsdetektorabschnitt (30) erlaubt, die Näherungseingabe an der Betätigungsschaltfläche zu detektieren, und die Näherungseingabe detektiert wird, der Informationsabschnitt (34, 95) den Anwender über die Funktionsdaten, die der Betätigungsschaltfläche zugeordnet sind, informiert; wobei
die elektronische Einrichtung ferner Folgendes enthält:
einen Umschaltabschnitt (42), der konfiguriert ist,
dann, wenn der Erlaubnisbestimmungsabschnitt (49, 53, 92) dem Näherungsdetektorabschnitt (30) erlaubt, die Näherungseingabe an der Betätigungsschaltfläche zu detektieren, zu erlauben, dass die Näherungsdaten zum Näherungsdetektorabschnitt (30) gesendet werden, wobei die Näherungsdaten die Näherungseingabe anzeigen, und
dann, wenn der Erlaubnisbestimmungsabschnitt (49, 53, 92) dem Näherungsdetektorabschnitt (30) nicht erlaubt, die Näherungseingabe an der Betätigungsschaltfläche zu detektieren, nicht zu erlauben, dass die Näherungsdaten zum Näherungsdetektorabschnitt (30) gesendet werden.

2. Elektronische Einrichtung nach Anspruch 1, wobei
dann, wenn der Erlaubnisbestimmungsabschnitt (49, 53, 92) dem Näherungsdetektorabschnitt (30) erlaubt, die Näherungseingabe an der Betätigungsschaltfläche zu detektieren, der Umschaltabschnitt (52) Signaldrähte miteinander verbindet, wobei die Signaldrähte verwendet werden, die Näherungsdaten zum Näherungsdetektorabschnitt (30) zu senden; und
dann, wenn der Erlaubnisbestimmungsabschnitt (49, 53, 92) dem Näherungsdetektorabschnitt (30) nicht erlaubt, die Näherungseingabe an der Betätigungsschaltfläche zu detektieren, der Umschaltabschnitt (52) die Signaldrähte voneinander trennt.

3. Elektronische Einrichtung nach Anspruch 1, wobei die Speichereinrichtung (32, 59) die Aktivierungs-/Deaktivierungsdatenelemente von Näherungseingaben derart speichert, dass die Aktivierungs-/Deaktivierungsdatenelemente von Näherungseingaben entsprechend den Betätigungsschaltflächen, von denen jede mindestens einem Teil der Bildschirmabbildung entspricht, zugeordnet sind.

4. Elektronische Einrichtung nach Anspruch 1, wobei die Speichereinrichtung (32, 59) die Aktivierungs-/Deaktivierungsdatenelemente von Näherungseingaben derart speichert, dass die Aktivierungs-/Deaktivierungsdatenelemente von Näherungseingaben entsprechend den Bildschirmabbildungen, von denen jede mindestens einem Teil der Bildschirmabbildung entspricht, zugeordnet sind.

5. Elektronische Einrichtung nach einem der Ansprüche 1 bis 4, die ferner einen Zustandsbestimmungsabschnitt (53, 92) enthält, der konfiguriert ist, einen Zustand der elektronischen Einrichtung zu detektieren, um zu bestimmen, ob der Zustand der elektronischen Einrichtung ein vorgegebener Zustand ist oder nicht, wobei
dann, wenn der Zustandsbestimmungsabschnitt (53, 92) bestimmt, dass der Zustand der elektronischen Einrichtung der vorgegebene Zustand ist, der Erlaubnisbestimmungsabschnitt (49, 53, 92) die Detektion der Näherungseingabe durch den Näherungsdetektorabschnitt (30) ohne Berücksichtigung der Aktivierungs-/Deaktivierungsdatenelemente von Näherungseingaben verhindert.

6. Elektronische Einrichtung nach Anspruch 1, wobei der Informationsabschnitt (34, 95) ein Bild der Funktionsdaten auf dem Anzeigeabschnitt (10, 11) vergrößert.

7. Elektronische Einrichtung nach einem der Ansprüche 1 bis 6, wobei
jede der Betätigungsschaltflächen durch eine Betätigungsabbildung, die in der Bildschirmabbildung auf dem Anzeigeabschnitt (10, 11) angezeigt wird, und ein Näherungsdetektorelement (25, 26), das derart bereitgestellt ist, dass es der Betätigungsabbildung entspricht, gebildet ist;
die elektronische Einrichtung ferner einen physischen Druckknopf enthält, der konfiguriert ist, durch den Anwender gedrückt zu werden, um die Eingabe anzunehmen; und
der Druckknopf bei einer solchen Position vorgesehen ist, dass dann, wenn der Anwender sich dem Druckknopf nähert oder diesen kontaktiert, der Näherungsdetektorabschnitt (30) die Näherungseingabe nicht detektiert.

8. Wärmekocheinrichtung, die die elektronische Einrichtung nach einem der Ansprüche 1 bis 7 enthält.

9. Verfahren zum Betreiben der elektronischen Einrichtung nach Anspruch 1, das Folgendes umfasst:
einen Anzeigeschritt zum Bewirken, dass der Anzeigeabschnitt (10, 11) die Bildschirmabbildung, die die Betätigungsschaltflächen enthält, von denen jede die Eingabe von einem Anwender annimmt, anzeigt;
einen Näherungsdetektorschritt zum Bewirken, dass ein Näherungsdetektorabschnitt (30) als die Näherungseingabe vom Anwender die Nähe des Anwenders zur Betätigungsschaltfläche, die in der Bildschirmabbildung enthalten ist, detektiert;
einen Bestimmungsschritt zum Bewirken, dass der Erlaubnisbestimmungsabschnitt (49, 53, 92) bestimmt, ob die Detektion der Näherungseingabe im Näherungsdetektorschritt erlaubt werden soll;
einen Kontaktdetektorschritt zum Bewirken, dass der Kontaktdetektorabschnitt (29) als die Kontakteingabe vom Anwender den Kontakt vom Anwender an der Betätigungsschaltfläche, bei der die Näherungseingabe detektiert worden ist, detektiert;
einen Funktionsausführungsschritt, der bewirkt, dass der Funktionsausführungsabschnitt (24, 31) die Funktion, die der Betätigungsschaltfläche zugeordnet ist, gemäß der Kontakteingabe an den Betätigungsschaltflächen ausführt;
**gekennzeichnet durch**
einen Informationsschritt zum Bewirken, dass der Informationsabschnitt (34, 95) den Anwender über die Funktionsdaten informiert, wenn die Detektion der Näherungseingabe an der Betätigungsschaltfläche im Bestimmungsschritt erlaubt ist und die Näherungseingabe detektiert wird, wobei die Funktionsdaten die Funktion, die der Betätigungsschaltfläche zugeordnet ist und in der elektronischen Einrichtung ausgeführt wird, anzeigen; und
einen Umschaltschritt zum Bewirken, dass der Umschaltabschnitt (52)
dann, wenn die Detektion der Näherungseingabe an der Betätigungsschaltfläche durch den Näherungsdetektorabschnitt (30) im Bestimmungsschritt erlaubt ist, ermöglicht, dass die Näherungsdaten zum Näherungsdetektorabschnitt (30) gesendet werden, wobei die Näherungsdaten die Näherungseingabe anzeigen, und
dann, wenn die Detektion der Näherungseingabe an der Betätigungsschaltfläche durch den Näherungsdetektorabschnitt (30) im Bestimmungsschritt nicht erlaubt ist, nicht ermöglicht, dass die Näherungsdaten zum Näherungsdetektorabschnitt (30) gesendet werden.

10. Verfahren nach Anspruch 9, wobei
dann, wenn die Detektion der Näherungseingabe an der Betätigungsschaltfläche durch den Näherungsdetektorabschnitt (30) im Bestimmungsschritt erlaubt ist, die Signaldrähte durch den Umschaltabschnitt (52) miteinander verbunden werden, wobei die Signaldrähte verwendet werden, die Näherungsdaten zum Näherungsdetektorabschnitt (30) zu senden; und
dann, wenn die Detektion der Näherungseingabe an der Betätigungsschaltfläche durch den Näherungsdetektorabschnitt (30) im Bestimmungsschritt nicht erlaubt ist, die Signaldrähte im Umschaltschritt durch den Umschaltabschnitt (52) voneinander getrennt werden.

## Revendications

1. Dispositif électronique comportant :
une partie d'affichage (10, 11) configurée pour afficher des images d'écran comprenant chacune des boutons de commande qui acceptent chacun une entrée d'un utilisateur ;
une partie détecteur de proximité (30) configurée pour détecter, à titre d'entrée de proximité par l'utilisateur, la proximité de l'utilisateur vis-à-vis des boutons de commande inclus dans l'image d'écran ;
une partie détecteur de contact (29) configurée pour détecter, à titre d'entrée de contact par l'utilisateur, un contact de l'utilisateur avec le bouton de commande ;
une partie d'exécution de fonction (24, 31) configurée pour exécuter des fonctions conformément au contact entré au niveau des boutons de commande, les fonctions étant respectivement associées aux boutons de commande ;
une partie d'information (34, 95) configurée pour informer l'utilisateur d'une information de fonction indiquant la fonction exécutée par la partie d'exécution de fonction (24, 31) ;
un dispositif de stockage (32, 59) configuré pour stocker des informations d'activation/désactivation d'entrée de proximité de telle manière que chaque information d'activation/désactivation d'entrée de proximité est associée à au moins une partie de l'image d'écran, les informations d'activation/désactivation d'entrée de proximité indiquant chacune si la détection d'une entrée de proximité par la partie détecteur de proximité (30) doit être autorisée ; et
une partie de détermination d'autorisation (49, 53, 92) configurée pour déterminer à partir de l'information d'activation/désactivation d'entrée de proximité si la partie détecteur de proximité (30) doit être autorisée à détecter l'entrée de proximité,
**caractérisé en ce que** :
dans un cas où la partie de détermination d'autorisation (49, 53, 92) autorise la partie détecteur de proximité (30) à détecter l'entrée de proximité du bouton de commande et l'entrée de proximité est détectée, la partie d'information (34, 95) informe l'utilisateur de l'information de fonction associée au bouton de commande ;
le dispositif électronique comportant en outre :
une partie de commutation (42) configurée pour :
dans un cas où la partie de détermination d'autorisation (49, 53, 92) autorise la partie détecteur de proximité (30) à détecter l'entrée de proximité du bouton de commande, permettre la transmission d'une information de proximité à la partie détecteur de proximité (30), l'information de proximité indiquant l'entrée de proximité, et
dans un cas où la partie de détermination d'autorisation (49, 53, 92) n'autorise pas la partie détecteur de proximité (30) à détecter l'entrée de proximité du bouton de commande, interdire la transmission de l'information de proximité à la partie détecteur de proximité (30).

2. Dispositif électronique selon la revendication 1, dans lequel :
dans un cas où la partie de détermination d'autorisation (49, 53, 92) autorise la partie détecteur de proximité (30) à détecter l'entrée de proximité du bouton de commande, la partie de commutation (52) connecte des câbles de signal, les câbles de signal étant utilisés pour transmettre l'information de proximité à la partie détecteur de proximité (30) ; et
dans un cas où la partie de détermination d'autorisation (49, 53, 92) n'autorise pas la partie détecteur de proximité (30) à détecter l'entrée de proximité du bouton de commande, la partie de commutation (52) déconnecte les câbles de signal.

3. Dispositif électronique selon la revendication 1, dans lequel le dispositif de stockage (32, 59) stocke les informations d'activation/désactivation d'entrée de proximité de telle manière que les informations d'activation/désactivation d'entrée de proximité sont respectivement associées aux boutons de commande correspondant chacun à au moins une partie de l'image d'écran.

4. Dispositif électronique selon la revendication 1, dans lequel le dispositif de stockage (32, 59) stocke les informations d'activation/désactivation d'entrée de proximité de telle manière que les informations d'activation/désactivation d'entrée de proximité sont respectivement associées aux images d'écran correspondant chacune à au moins une partie de l'image d'écran.

5. Dispositif électronique selon l'une quelconque des revendications 1 à 4, comportant en outre une partie de détermination d'état (53, 92) configurée pour détecter un état du dispositif électronique pour déterminer si l'état du dispositif électronique est un état prédéterminé ou non, où
dans un cas où la partie de détermination d'état (53, 92) détermine que l'état du dispositif électronique est l'état prédéterminé, la partie de détermination d'autorisation (49, 53, 92) empêche la détection de l'entrée de proximité par la partie détecteur de proximité (30) quelle que soit l'information d'activation/désactivation d'entrée de proximité.

6. Dispositif électronique selon la revendication 1, dans lequel la partie d'information (34, 95) agrandit une image de l'information de fonction sur la partie d'affichage (10, 11).

7. Dispositif électronique selon l'une quelconque des revendications 1 à 6, dans lequel :
chacun des boutons de commande est constitué par une image de commande affichée dans l'image d'écran sur la partie d'affichage (10, 11) et un élément de détecteur de proximité (25, 26) est fourni de manière à correspondre à l'image de commande ;
le dispositif électronique comprend en outre un bouton poussoir physique configuré pour être actionné par l'utilisateur pour accepter l'entée ; et
le bouton poussoir est disposé en une position telle que lorsque l'utilisateur arrive à proximité ou entre en contact avec le bouton poussoir, la partie détecteur de proximité (30) ne détecte pas l'entrée de proximité.

8. Dispositif de cuisson comportant le dispositif électronique selon l'une quelconque des revendications 1 à 7.

9. Procédé pour faire fonctionner le dispositif électronique selon la revendication 1, comportant :
une étape d'affichage consistant à amener la partie d'affichage (10, 11) à afficher l'image d'écran comprenant les boutons de commande qui acceptent chacun une entrée de l'utilisateur ;
une étape de détection de proximité consistant à amener la partie détecteur de proximité (30) à détecter, à titre d'entrée de proximité par l'utilisateur, la proximité de l'utilisateur vis-à-vis du bouton de commande inclus dans l'image d'écran ;
une étape de détermination consistant à amener la partie de détermination d'autorisation (49, 53, 92) à déterminer si la détection de l'entrée de proximité lors de l'étape de détection de proximité doit être autorisée ;
une étape de détection de contact consistant à amener la partie détecteur de contact (29) à détecter, à titre d'entrée de contact par l'utilisateur, un contact de l'utilisateur avec le bouton de commande au niveau duquel l'entrée de proximité a été détectée ;
une étape d'exécution de fonction consistant à amener la partie d'exécution de fonction (24, 31) à exécuter la fonction associée au bouton de commande conformément à l'entrée de contact au niveau du bouton de commande,
**caractérisé par** :
une étape d'information consistant à amener la partie d'information (34, 95) à informer l'utilisateur d'une information de fonction dans un cas où la détection de l'entrée de proximité au niveau du bouton de commande est autorisée lors de l'étape de détermination et l'entrée de proximité est détectée, l'information de fonction indiquant la fonction associée au bouton de commande et exécutée dans le dispositif électronique ; et
une étape de commutation consistant à amener la partie de commutation (42) :
dans un cas où la détection de l'entrée de proximité au niveau du bouton de commande par la partie détecteur de proximité (30) est autorisée lors de l'étape de détermination, à autoriser la transmission de l'information de proximité à la partie détecteur de proximité (30), l'information de proximité indiquant une entrée de proximité, et
dans un cas où la détection de l'entrée de proximité au niveau du bouton de commande par la partie détecteur de proximité (30) n'est pas autorisée lors de l'étape de détermination, à interdire la transmission de l'information de proximité à la partie détecteur de proximité (30).

10. Procédé selon la revendication 9, dans lequel :
dans un cas où la détection de l'entrée de proximité au niveau du bouton de commande par la partie détecteur de proximité (30) est autorisée lors de l'étape de détermination, des câbles de signal sont connectés par la partie de commutation (52) lors de l'étape de commutation, les câbles de signal étant utilisés pour transmettre l'information de proximité à la partie détecteur de proximité (30) ; et
dans un cas où la détection de l'entrée de proximité au niveau du bouton de commande par la partie détecteur de proximité (30) n'est pas autorisée lors de l'étape de détermination, les câbles de signal sont déconnectés par la partie de commutation (52) lors de l'étape de commutation.
